(19) Europäisches Patentamt
European Patent Office
Office européen des brevets

(11) EP 4 563 642 A1

(12) **EUROPEAN PATENT APPLICATION**
published in accordance with Art. 153(4) EPC

(43) Date of publication:
**04.06.2025 Bulletin 2025/23**

(21) Application number: **23846707.0**

(22) Date of filing: **28.07.2023**

(51) International Patent Classification (IPC):
***C08L 25/08*** *(2006.01)* ***B29C 45/00*** *(2006.01)*
***C08F 212/08*** *(2006.01)* ***C08K 5/05*** *(2006.01)*
***C08K 5/3435*** *(2006.01)* ***C08K 5/3475*** *(2006.01)*
***C08L 33/06*** *(2006.01)*

(52) Cooperative Patent Classification (CPC):
**B29C 45/00; C08F 212/08; C08K 5/05; C08K 5/17; C08K 5/3435; C08K 5/3475; C08L 25/08; C08L 33/06; C08L 33/14**

(86) International application number:
**PCT/JP2023/027872**

(87) International publication number:
**WO 2024/024977 (01.02.2024 Gazette 2024/05)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **29.07.2022 JP 2022122340**

(71) Applicant: **PS Japan Corporation**
**Tokyo 112-0002 (JP)**

(72) Inventors:
- **KOBAYASHI, Matsutaro**
  **Tokyo 100-0006 (JP)**
- **IWAMOTO, Hirokazu**
  **Tokyo 100-0006 (JP)**

(74) Representative: **D Young & Co LLP**
**3 Noble Street**
**London EC2V 7BQ (GB)**

(54) **STYRENIC RESIN COMPOSITION AND MOLDED PRODUCT**

(57) The present disclosure is directed to providing a styrene-based resin composition used in molded articles that exhibit excellent weather resistance, mechanical strength, and oil resistance without incurring a reduction in heat resistance and transparency. The present disclosure relates to a styrene-based resin composition containing 10 mass% or more and 100 mass% or less of a styrene-unsaturated carboxylic acid-based resin (A) having styrene-based monomer units (1) and unsaturated carboxylic acid-based monomer units (a1); 0 mass% or more and 90 mass% or less of a (meth)acrylic resin (B) having unsaturated carboxylic acid-based monomer units (b1); and 0 to 2.0 mass% of a light stabilizer (C) and 0.001 to 2.0 mass% of an ultraviolet absorber (D) relative to a total amount (100 mass%) of the styrene-based resin composition.

EP 4 563 642 A1

## Description

### TECHNICAL FIELD

The present disclosure relates to a styrene-based resin composition and an injection molded article formed using the styrene-based resin composition.

### BACKGROUND

Styrene-unsaturated carboxylic acid resins, represented by styrene-methacrylic acid copolymer resins, are widely used for packaging materials for food containers such as lunch boxes and prepared foods, foam boards for housing insulation, housing materials for lighting devices, and diffusion or light guide plates for LCD televisions having diffusing agents contained therein. This is because these resins offer excellent heat resistance, transparency, rigidity, and appearance while being inexpensive. Among them, acrylic resins, which excel in transparency, are widely used for diffusion or light guide plates in the backlight of LCD televisions. However, the rate of dimensional change increases due to the high moisture absorption of acrylic resins per se, and the heat resistance thereof is low. As a result, they do not meet the characteristics required particularly for diffusion or light guide plates for in-vehicle use.

For example, PTL 1 discloses a technology in which a composition containing a styrene-(meth)acrylic acid-based copolymer resin, an ether compound and/or alcohol with 6 or more carbon atoms, and a phenolic antioxidant and/or phosphorous-based antioxidant provides excellent color tone and transparency, with minimal color tone changes even after prolonged light exposure.

### CITATION LIST

#### Patent Literature

PTL 1: JP 2018-145309 A

### SUMMARY

#### (Technical Problem)

Changes in transparency and yellowing have been studied in the technology disclosed in PTL 1, but the strength, oil resistance, and scratch resistance thereof are insufficient. In particular, when considering use in areas where people touch directly over long periods, conventional styrene-unsaturated carboxylic acid-based resins are affected by oils from hands, leading to problems such as cracking or whitening of transparent plates, for example. Therefore, oil resistance is required.

Accordingly, the problem that the present disclosure aims to solve is to provide a styrene-based resin composition used for molded articles which is excellent in weather resistance, mechanical strength, and oil resistance without incurring a reduction in heat resistance and transparency.

#### (Solution to Problem)

In light of the above issue, the inventors of the present disclosure conducted extensive research and, as a result, succeeded in developing a styrene-based resin composition that includes a styrene-unsaturated carboxylic acid-based resin (A), a (meth)acrylic resin (B), a light stabilizer (C), and an ultraviolet absorber (D) in specified amounts and a molded article for in-vehicle use using the same, thereby achieving excellent weather resistance, mechanical strength, and oil resistance without incurring a reduction in heat resistance and transparency, thereby leading to the completion of the present disclosure. Specifically, the present disclosure is as follows:

[1] The present disclosure is a styrene-based resin composition comprising:

10 mass% or more and 100 mass% or less of a styrene-unsaturated carboxylic acid-based resin (A) having styrene-based monomer units (1) and unsaturated carboxylic acid-based monomer units (a1);
0 mass% or more and 90 mass% or less of a (meth)acrylic resin (B) having unsaturated carboxylic acid-based monomer units (b1); and
0 to 2.0 mass% of a light stabilizer (C) and 0.001 to 2.0 mass% of an ultraviolet absorber (D) relative to a total amount (100 mass%) of the styrene-based resin composition.

[2] The styrene-based resin composition according to [1], comprising:

10 mass% or more and less than 100 mass% of a styrene-unsaturated carboxylic acid-based resin (A) having styrene-based monomer units (1) and unsaturated carboxylic acid-based monomer units (a1);
more than 0 mass% and 90 mass% or less of a (meth)acrylic resin (B) having unsaturated carboxylic acid-based monomer units (b1);
0.001 to 2.0 mass% of a light stabilizer (C) and 0.001 to 2.0 mass% of an ultraviolet absorber (D) relative to the total amount (100 mass%) of the styrene-based resin composition.

[3] The styrene-based resin composition according to [1] to [2], further comprising 0.001 to 1.0 mass% of a monohydric alcohol (E) with a carbon number of 10 or more relative to the total amount (100 mass%) of the styrene-based resin composition.
[4] The styrene-based resin composition according to any one of [1] to [3], wherein the light stabilizer (C) is a hindered amine-based compound.
[5] The styrene-based resin composition according to any one of [1] to [4],
wherein the ultraviolet absorber (D) is one or more selected from the group consisting of compounds represented by the general formula (d) and the general formula (d'):

[Chem. 1]

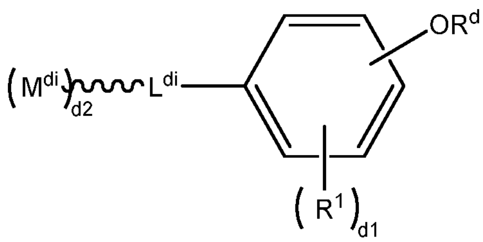

(d)

in the above general formula (d), each $M^{di}$ independently represents a monovalent or higher aromatic group, $R^d$ represents a hydrogen atom or an alkyl group having 1 to 10 carbon atoms, each $L^{di}$ independently represents a divalent to pentavalent group, $R^1$ represents an alkyl group having 1 to 15 carbon atoms or an aralkyl group having 7 to 25 carbon atoms, wherein $-CH_2-$in the alkyl group may be substituted with -O- or -C(=O)-, and one or more hydrogen atoms on the benzene ring in the aralkyl group may be substituted with a phenolic hydroxyl group, an alkyl group having 1 to 15 carbon atoms, or a condensed ring (including a heterocyclic ring (benzotriazole ring, for example)), d1 represents an integer of 0 or more and 4 or less, d2 represents an integer of 1 or more and 4 or less, and a wavy line connecting $M^{di}$ and $L^{di}$ in the above general formula (d) indicates the presence of one or more chemical bonds that are greater than or equal to a single bond,

[Chem. 2]

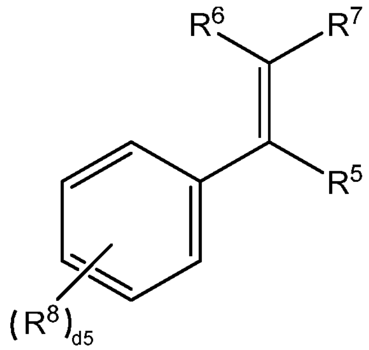

(d')

in the above general formula (d'), $R^5$ to $R^7$ each independently represent a hydrogen atom, halogen atom, hydroxyl group, cyano group, phenyl group, alkyl group having 1 to 15 carbon atoms, alkenyl group having 1 to 15 carbon atoms, or aralkyl group having 7 to 25 carbon atoms, wherein $-CH_2-$ in the alkyl group may be substituted with -O- or -C(=O)-, and one or more hydrogen atoms on the benzene ring of the aralkyl group may be substituted with a phenolic hydroxyl group, an alkyl group having 1 to 15 carbon atoms, or a condensed ring (including a

heterocyclic ring (benzotriazole ring, for example)),
each $R^8$ independently represents a halogen atom, hydroxyl group, cyano group, alkyl group having 1 to 15 carbon atoms, alkenyl group having 1 to 15 carbon atoms, or aralkyl group having 7 to 25 carbon atoms, wherein $-CH_2-$ in the alkyl group may be substituted with -O- or -C(=O)-, and one or more hydrogen atoms on the benzene ring of the aralkyl group may be substituted with a phenolic hydroxyl group, an alkyl group having 1 to 15 carbon atoms, or a condensed ring (including a heterocyclic ring (benzotriazole ring, for example)), and
d5 represents an integer of 0 or more and 4 or less, and when d5 is 2 or more, $R^8$ may be the same or different from each other.

[6] The styrene-based resin composition according to any one of [1] to [5], comprising one or more antioxidants selected from the group consisting of phenolic antioxidants, phosphorus-based antioxidants, and phosphorus-based antioxidants having a hindered phenol skeleton each in an amount of 0.001 to 0.5 mass%.
[7] The styrene-based resin composition according to any one of [1] to [6], wherein the styrene-based resin composition has Vicat softening temperature (according to ISO 306) under a load of 5 kg is 105 °C or higher.
[8] The styrene-based resin composition according to any one of [1] to [7], wherein the (meth)acrylic resin (B) is a copolymer containing methacrylic acid ester monomer units and acrylic acid ester monomer units.
[9] The styrene-based resin composition according to any one of [1] to [8], wherein a content of the unsaturated carboxylic acid-based monomer units (a1) relative to a total amount of the styrene-unsaturated carboxylic acid-based resin (A) is 8.5 mass% or more.
[10] The styrene-based resin composition according to any one of [1] to [9],

wherein the unsaturated carboxylic acid-based monomer units (a1) are one or more selected from the group consisting of (meth)acrylic acid monomer units (a1-1) and (meth)acrylic acid ester monomer units (a1-2), and
the styrene-unsaturated carboxylic acid-based resin (A) is a copolymer (A1) containing the styrene-based monomer units (1), the (meth)acrylic acid monomer units (a1-1), and the (meth)acrylic acid ester monomer units (a1-2).

[11] The styrene-based resin composition according to any one of [1] to [10], wherein the styrene-unsaturated carboxylic acid-based resin (A) has a Vicat softening temperature of 120 °C or higher.
[12] The styrene-based resin composition according to any one of [1] to [11], wherein a surface scratch hardness measured according to the pencil hardness method described in JIS K 5600-5-4 with a pencil core tip load of 750 g, a pencil angle of 45 degrees, and a scratch speed of 0.5 to 1.0 mm/sec is H or higher.
[13] The styrene-based resin composition according to any one of [1] to [12], further comprising 0.001 to 2.0 mass% of a mold release agent (F) relative to the total amount of the styrene-based resin composition.
[14] An injection molded article produced by injection molding the styrene-based resin composition according to any one of [1] to [13].
[15] A lighting cover comprising the styrene-based resin composition according to any one of [1] to [13].
[16] An injection molded article for in-vehicle use produced by injection molding the styrene-based resin composition according to any one of [1] to [13].

(Advantageous Effect)

According to the present disclosure, it is possible to provide a styrene-based resin composition used in molded articles that is excellent in weather resistance, mechanical strength, and oil resistance without incurring a reduction in heat resistance and transparency.
According to the present disclosure, it is possible to provide molded articles for in-vehicle use that exhibit excellent weather resistance, mechanical strength, and oil resistance without incurring a reduction in heat resistance and transparency.

## DETAILED DESCRIPTION

The following provides a detailed description of an embodiment of the present disclosure (hereinafter referred to as "the present embodiment"). The present disclosure is, however, not limited to the embodiments disclosed herein, and various modifications can be made within the spirit and scope of the disclosure.

### [Styrene-based Resin Composition]

The styrene-based resin composition in the present embodiment (hereinafter simply referred to as "resin

composition") contains a styrene-unsaturated carboxylic acid-based resin (A) having styrene-based monomer units (1) and unsaturated carboxylic acid-based monomer units (a1), and a (meth)acrylic resin (B) having unsaturated carboxylic acid-based monomer units (b1), wherein the content of the styrene-unsaturated carboxylic acid-based resin (A) is 10 mass% or more and 100 mass% or less and the content of the (meth)acrylic resin (B) is 0 mass% or more and 90 mass% or less relative to the total amount (100 mass%) of the styrene-based resin composition, and the composition includes 0 to 2.0 mass% of a light stabilizer (C) and 0.001 to 2.0 mass% of an ultraviolet absorber (D).

Additionally, the styrene-based resin composition in the present embodiment may also contain one or more selected from the group consisting of an monohydric alcohol (E) with ten or more carbon atoms and a mold release agent (F), if needed.

This allows to provide a styrene-based resin composition that is excellent in weather resistance, mechanical strength, and oil resistance without incurring a reduction in heat resistance and transparency.

In the styrene-based resin composition in the present embodiment, it is preferable that the Vicat softening temperature is 110 °C or higher.

In the styrene-based resin composition in the present embodiment, it is preferable that the surface scratch hardness (pencil method) is H or higher.

"Styrene-Unsaturated Carboxylic Acid-based Resin (A)"

In the present embodiment, the styrene-unsaturated carboxylic acid-based resin (A) is a copolymer resin (hereinafter also simply referred to as "resin (A)") made of styrene-based monomer units (1) and unsaturated carboxylic acid-based monomer units (a1), as essential components, and contributes to improving the heat resistance of the styrene-based resin composition as a whole. Furthermore, the styrene-unsaturated carboxylic acid-based resin (A) may also contain other monomer units (a2) in addition to the essential components of styrene-based monomer units (1) and unsaturated carboxylic acid-based monomer units (a1), if needed.

The content of the styrene-unsaturated carboxylic acid-based resin (A) relative to the total amount (100 mass%) of the styrene-based resin composition is preferably 10 mass% or more and 100 mass% or less, more preferably 10 mass% or more and less than 100 mass%, and even more preferably from 10 mass% to 98 mass%. Preferable lower limits for the content of styrene-unsaturated carboxylic acid-based resin (A) include 17 mass%, 27 mass%, 37 mass%, 47 mass%, 53 mass%, 56 mass%, 59 mass%, 62 mass%, 65 mass%, 68 mass%, and 70 mass%, in ascending order of preference, and preferable upper limits include 97 mass%, 95 mass%, 92 mass%, 89 mass%, 86 mass%, 83 mass%, 80 mass%, less than 80 mass%, 79 mass%, 78 mass%, 77 mass%, 76 mass%, 75 mass%, 74 mass%, and 71 mass%, in descending order of preference. The content of the styrene-unsaturated carboxylic acid-based resin (A) may be selected from any combination of the above upper and lower limits.

Particularly, by setting the content of styrene-unsaturated carboxylic acid-based resin (A) to 10 mass% or more, the resin composition acquires improved fluidity, enabling the production of a resin composition with an excellent molding cycle. By setting the content to 50 mass% or more, a styrene-based resin composition with excellent heat resistance can be obtained. Furthermore, by setting the content to 98 mass% or less, the improvement effect on oil resistance provided by the (meth)acrylic acid-based resin (B), which will be described later, can be sufficiently obtained.

<Styrene-based Monomer (1)>

In the styrene-unsaturated carboxylic acid-based resin (A) of the present embodiment, the content of styrene-based monomer units (1) relative to the total amount of the styrene-unsaturated carboxylic acid-based resin (A) is 60 to 98 mass%, preferably 70 to 97 mass%, more preferably 80 to 96 mass%, even more preferably 82 to 95 mass%, even more preferably 83 to 94 mass%, even more preferably 83 to 91 mass%, and particularly preferably 85 to 91.5 mass%. If the content of styrene-based monomer units (1) is less than 60 mass%, fluidity decreases, and if it exceeds 98 mass%, it becomes difficult to incorporate the desired amount of unsaturated carboxylic acid-based monomer units (a1), and the effect of improving heat resistance by the unsaturated carboxylic acid-based monomer units (a1) (particularly, (meth) acrylic acid monomer units (a1-1)) is not sufficiently exhibited.

Additionally, in the styrene-based resin composition of the present embodiment, the content of styrene-based monomer units (1) is preferably 50 to 85 mass%, more preferably 52 to 82 mass%, even more preferably 54 to 79 mass%, and still even more preferably 56 to 77 mass%. When the content of styrene-based monomer units (1) is within the above range, the effect of improving oil resistance can be sufficiently obtained.

In the present embodiment, the styrene-based monomer (1) is not particularly limited and examples include, for example, styrene, α-methylstyrene, β-methylstyrene, paramethylstyrene, orthomethylstyrene, metamethylstyrene, chlorostyrene, and bromostyrene. In particular, from an industrial perspective, styrene and α-methylstyrene are preferred, with styrene being more preferred. These may be used alone or in combination with two or more as the styrene monomers (1).

It should be noted that in the present specification, "styrene-based monomer unit (1)" refers to a repeating unit

that constitutes a polymer resulting from the polymerization of the styrene-based monomer (1), and is formed by the polymerization or cross-linking reaction where the carbon-carbon double bond in the styrene-based monomer (1) is changed into a single bond (-C-C-). The same definition applies to other monomer units described in this specification.

<Unsaturated Carboxylic Acid-based Monomer Unit (a1)>

In the styrene-unsaturated carboxylic acid-based resin (A) of the present embodiment, the unsaturated carboxylic acid-based monomer units (a1) play a role in improving oil resistance and compatibility with the (meth)acrylic resin (B), which will be described later. The content of the unsaturated carboxylic acid-based monomer units (a1) relative to the total amount of the styrene-unsaturated carboxylic acid-based resin (A) is 2 to 40 mass%, preferably 3 to 35 mass%, more preferably 5 to 30 mass%, even more preferably 8 to 25 mass%, still even more preferably 8.5 to 20 mass%, more preferably 9.0 to 18 mass%, and particularly preferably 10 to 15 mass%. If the content of the unsaturated carboxylic acid-based monomer units (a1) is less than 2 mass%, the effect of improving heat resistance is insufficient. On the other hand, a content of the unsaturated carboxylic acid-based monomer units (a1) exceeds 40 mass% is not preferred because of reduced processability due to increased resin viscosity, bubble generation during molding due to increased moisture absorption, and excessively high viscosity during production. Particularly, by setting the content of unsaturated carboxylic acid-based monomer units (a1) from 8.5 mass% to 20 mass%, good compatibility with the (meth)acrylic resin (B) can be obtained, resulting in a composition with excellent transparency.

Furthermore, the unsaturated carboxylic acid-based monomer units (a1) in the present embodiment include unsaturated carboxylic acids and their ester derivatives. Specifically, examples include (meth)acrylic acid monomer units (a1-1) and (meth)acrylic acid ester monomer units (a1-2).

- (Meth)acrylic Acid Ester Monomer Units (a1-1) -

In the present embodiment, the (meth)acrylic acid monomer units (a1-1) play a role in improving oil resistance and heat resistance. Examples of the (meth)acrylic acid monomers (a1-1) include acrylic acid or methacrylic acid. From an industrial perspective, it is particularly preferable to use these either alone or in combination of two or more as the (meth) acrylic acid monomer units (a1-1). Methacrylic acid, which has a high effect in improving heat resistance, is particularly preferred as the (meth)acrylic acid monomer units (a1-1).

In the present embodiment, the content range of the (meth)acrylic acid monomer units (a1-1) relative to the total amount of the styrene-unsaturated carboxylic acid-based resin (A) is preferably 2 to 40 mass%, more preferably 3 to 20 mass%, even more preferably 4 to 17 mass%, still even more preferably 8 to 14 mass%, preferably 10 to 13 mass%, more preferably 10.3 to 13 mass%, even more preferably 10.3 to 12.5 mass%, and most preferably 10.5 to 12.5 mass%. By setting the content of the (meth)acrylic acid monomer units (a1-1) to 2 mass% or more, the effect of improving heat resistance can be achieved, and by setting the content to 40 mass% or less, an excessive increase in viscosity can be suppressed. Particularly, by setting the content to the range of 10 to 13 mass%, it is possible to obtain a styrene-unsaturated carboxylic acid-based resin (A) that achieves both a high heat resistance improvement effect and the suppression of gel formation to a level suitable for use in transparent sheet applications.

- (Meth)acrylic Acid Ester Monomer Units (a1-2) -

In the present embodiment, the (meth)acrylic acid ester monomer units (a1-2) play a role in enhancing oil resistance and mechanical strength. It is preferable that the (meth)acrylic acid ester monomer units (a1-2) are represented by the following general formula (1):

[Chem. 3]

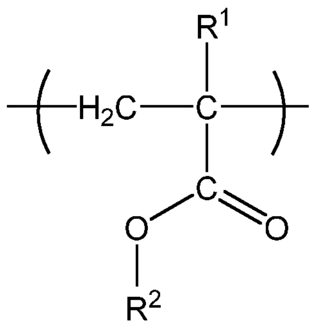

(1)

in the above general formula (1), $R^1$ represents a hydrogen atom or an alkyl group having 1 to 3 carbon atoms, and $R^2$ represents an ester substituent, specifically an alkyl group having 1 to 12 carbon atoms.

In the present embodiment, the number of carbon atoms in the ester substituent ($R^2$ in the above general formula (1)) of the (meth)acrylic acid ester monomer unit (a1-2) is preferably 10 or less, more preferably 8 or less, even more preferably 6 or less, still even more preferably 4 or less, and most preferably 3 or less. If the number of carbon atoms exceeds 10 is undesirable because the negative effect on heat resistance becomes significant.

Examples of the (meth)acrylic acid ester monomer unit (a1-2) in the present embodiment include, for example, methyl (meth)acrylate, ethyl (meth)acrylate, propyl (meth)acrylate, (n-butyl) (meth)acrylate, (t-butyl) (meth)acrylate, (isobutyl) (meth)acrylate, cyclohexyl (meth)acrylate, dibenzyl (meth)acrylate, (n-octyl) (meth)acrylate, (2-ethylhexyl) (meth)acrylate, decyl (meth)acrylate, and stearyl (meth)acrylate. These may be used either alone or in combination. Methyl (meth)acrylate, (n-butyl) (meth)acrylate, (n-octyl) (meth)acrylate, and (2-ethylhexyl) (meth)acrylate are preferred from the viewpoint of industrial availability, and methyl methacrylate is particularly preferred because the decrease in heat resistance is suppressed.

In the present embodiment, the content range of the (meth)acrylic acid ester monomer unit (a1-2) relative to the total amount of the styrene-unsaturated carboxylic acid-based resin (A) is, for example, preferably 0 to 50 mass%, more preferably 1 to 20 mass%, even more preferably 2 to 17 mass%, still even more preferably 3 to 12 mass%, and further even more preferably 4 to 10 mass%.

<Preferred Form of Styrene-Unsaturated Carboxylic Acid-based Resin (A)>

The styrene-unsaturated carboxylic acid-based resin (A) of the present embodiment may be a multicomponent copolymer containing the (meth)acrylic acid monomer units (a1-1) and the (meth)acrylic acid ester monomer units (a1-2). In other words, the styrene-unsaturated carboxylic acid-based resin (A) of the present embodiment may be a binary copolymer of the styrene-based monomer units (1) and the (meth)acrylic acid monomer units (a1-1), or may be a ternary copolymer where the styrene-based monomer (1), the (meth)acrylic acid monomer (a1-1), and the (meth)acrylic acid ester monomer (a1-2) are copolymerized. This can further provide the effects of enhancing compatibility with the (meth)acrylic resin (B), surface hardness, or mechanical strength.

In particular, when improvement in heat resistance and surface hardness is considered important, it is preferable that the styrene-unsaturated carboxylic acid-based resin (A) contains the (meth)acrylic acid monomer units (a1-1). Particularly, when improvement in appearance and mechanical strength is considered important, it is preferable that the styrene-unsaturated carboxylic acid-based resin (A) contains the (meth)acrylic acid ester monomer units (a1-2). Furthermore, improvement in compatibility with the (meth)acrylic resin (B) and high transparency in the mixture with the resin (B) are considered important, it is preferable that the styrene-unsaturated carboxylic acid-based resin (A) is a ternary copolymer where the styrene-based monomer (1), the (meth)acrylic acid monomer (a1-1), and the (meth)acrylic acid ester monomer (a1-2) are copolymerized.

Additionally, if unsaturated carboxylic acid ester monomer units, such as the (meth)acrylic acid ester monomer units (a1-2), are positioned adjacent to unsaturated carboxylic acid-based monomer units, such as the (meth)acrylic acid monomer units (a1-1), in the polymer chain, effects such as the suppression of cross-linking reactions between the unsaturated carboxylic acids can be obtained.

Furthermore, it is preferable that the styrene-unsaturated carboxylic acid-based resin (A) is a ternary copolymer of the styrene-based monomer (1) where the (meth)acrylic acid monomer (a1-1), and the (meth)acrylic acid ester monomer (a1-2) are copolymerized. If the styrene-unsaturated carboxylic acid-based resin (A) is a ternary copolymer where the styrene-based monomer (1), the (meth)acrylic acid monomer (a1-1), and the (meth)acrylic acid ester monomer (a1-2) are copolymerized, it is possible to increase the adhesion strength of members composed of the styrene-based resin composition and members composed of the (meth)acrylic resin. Moreover, the effect of improvements in heat resistance, light resistance, oil resistance, and surface hardness is also achieved.

In the present embodiment, when the styrene-unsaturated carboxylic acid-based resin (A) has the styrene-based monomer unit (1), the (meth)acrylic acid monomer units (a1-1), and the (meth)acrylic acid ester monomer units (a1-2), it is preferable that the content of the (meth)acrylic acid monomer units (a1-1) is 2 to 30 mass% and the content of the (meth)acrylic acid ester monomer units (a1-2) is 0 to 20 mass%; it is more preferable that the content of the (meth) acrylic acid monomer units (a1-1) is 3 to 20 mass%, and the content of the (meth)acrylic acid ester monomer units (a1-2) is 1 to 17 mass%; it is even more preferable that the content of the (meth)acrylic acid monomer units (a1-1) is 3.4 to 25 mass%, and the content of the (meth)acrylic acid ester monomer units (a1-2) is 3 to 15 mass%; it is still even more preferable that the content of the (meth)acrylic acid monomer units (a1-1) is 6 to 14 mass%, and the content of the (meth) acrylic acid ester monomer units (a1-2) is 4 to 10 mass%; it is still even more preferable that the content of the (meth)acrylic acid monomer units (a1-1) is 9 to 12.5 mass%, and the content of the (meth)acrylic acid ester monomer units (a1-2) is 4.5 to 7.1 mass%; and it is even more preferable that the content of the (meth)acrylic acid monomer units (a1-1) is 10.5 to 12.5 mass%, and the content of the (meth)acrylic acid ester monomer units (a1-2) is 4.5 to 7.1 mass%, relative to the total

amount of the styrene-unsaturated carboxylic acid-based resin (A). By keeping the content of the (meth)acrylic acid ester monomer units (a1-2) to 20 mass% or less, it is possible to obtain a resin composition with excellent fluidity during molding. Particularly, by setting the content of the (meth)acrylic acid monomer unit to 9 mass% or more, more preferably 10.3 mass% or more, and even more preferably 10.5 mass% or more, a resin composition with excellent heat resistance can be obtained.

When the styrene-unsaturated carboxylic acid-based resin (A) is a ternary copolymer where the styrene-based monomer (1), the (meth)acrylic acid monomer (a1-1), and the (meth)acrylic acid ester monomer (a1-2) are copolymerized, the content of the (meth)acrylic acid monomer unit (a1-1) is 10.5 to 12.5 mass%, and the content of the (meth)acrylic acid ester monomer unit (a1-2) is 4.5 to 7.1 mass% relative to the total amount of the styrene-unsaturated carboxylic acid-based resin (A), and the (meth)acrylic acid ester monomer unit (a1-2) is methyl methacrylate. As a result, it is possible to obtain a styrene-based resin composition that has a balanced combination of excellent moldability, heat resistance, light resistance, oil resistance, and surface hardness.

<Optional Monomer Units (a2)>

The styrene-unsaturated carboxylic acid-based resin (A) in the present embodiment may also contain optional monomer units (a2) other than the styrene-based monomer units (1) and the unsaturated carboxylic acid-based monomer units (a1) (including the (meth)acrylic acid monomer units (a1-1) and/or the (meth)acrylic acid ester monomer units (a1-2)) described above.

In other words, in the present embodiment, as long as the optional monomer units (a2) are copolymerizable with the styrene-based monomer (1) and the unsaturated carboxylic acid-based monomer units (a1) (which include the (meth) acrylic acid monomer units (a1-1) and/or the (meth)acrylic acid ester monomer units (a1-2)), they may be copolymerized with a monomer other than the two mentioned above without any limitation in the extent that the effects of the present disclosure are not impaired.

For example, examples of the optional monomer units (a2) other than the three monomers mentioned above include maleic anhydride, maleic acid, fumaric acid, itaconic acid, (meth)acrylonitrile, dimethyl maleate, dimethyl fumarate, diethyl fumarate, ethyl fumarate, maleimide, and nuclear-substituted maleimides.

In the present embodiment, when the styrene-unsaturated carboxylic acid-based resin (A) contains optional monomer units (a2), the content of the optional monomer units (a2) relative to the total amount of the styrene-unsaturated carboxylic acid-based resin (A) is preferably 12 mass% or less, more preferably 5 mass% or less, even more preferably 2 mass% or less, still even more preferably 1 mass% or less, and further even more preferably 0.5 mass% or less.

<Characteristics of Styrene-Unsaturated Carboxylic Acid-based Resin (A)>

The contents of the styrene-based monomer unit (1), the unsaturated carboxylic acid-based monomer units (a1) (which include the (meth)acrylic acid monomer units (a1-1) and the (meth)acrylic acid ester monomer units (a1-2)), and optional monomer units (a2) in the styrene-unsaturated carboxylic acid-based resin (A) of the present embodiment can be quantified with thermal decomposition GC/MS based on calibration curves prepared using known resin.

The melt flow rate of the styrene-unsaturated carboxylic acid-based resin (A) in the present embodiment at 200 °C is in the range of preferably 0.3 to 3.0, more preferably 0.4 to 2.5, even more preferably 0.5 to 2.0, still even more preferably 0.5 to 1.8, still even more preferably 0.5 to 1.1, and still even more preferably 0.5 to 1.0. A melt flow rate is 0.3 or more is preferred in view of the fluidity, and a melt flow rate of 3.0 or less is preferred in view of the mechanical strength of the resin. In this disclosure, melt mass rate is a value measured at a temperature of 200 °C under a load of 5.00 kg (49 N) in accordance with ISO 1133.

The weight-average molecular weight (Mw) of the styrene-unsaturated carboxylic acid-based resin (A) in the present embodiment is in the range of preferably 100,000 to 400,000, more preferably 120,000 to 320,000, even more preferably 140,000 to 280,000, still even more preferably 160,000 to 240,000, and most preferably 170,000 to 210,000. When the weight-average molecular weight is in the range of 100,000 to 400,000, the resin that exhibits excellent practicality in terms of a balance between impact strength and fluidity is obtained. The weight-average molecular weight and number-average molecular weight can be measured in terms of standard polystyrene using gel permeation chromatography (GPC).

The number-average molecular weight (Mn) of the styrene-unsaturated carboxylic acid-based resin (A) in the present embodiment is preferably 40,000 to 150,000, more preferably 50,000 to 120,000, and even more preferably 60,000 to 100,000.

The Z-average molecular weight (Mz) of the styrene-unsaturated carboxylic acid-based resin (A) in the present embodiment is preferably 200,000 to 800,000, more preferably 250,000 to 500,000, and even more preferably 300,000 to 450,000.

The Vicat softening temperature of the styrene-unsaturated carboxylic acid-based resin (A) in the present

embodiment is preferably 105 to 140 °C, more preferably 107 to 135 °C, even more preferably 108 to 130 °C, still even more preferably 115 to 127 °C, still even more preferably 120 to 125 °C, and further even more preferably 121 to 125 °C. By setting the Vicat softening temperature of the styrene-unsaturated carboxylic acid-based resin (A) to 105 °C or higher, the effect of improving the heat resistance of the composition can be obtained, and by setting it to 140 °C or lower, blending with the (meth)acrylic resin (B) is facilitated. Particularly, by setting the Vicat softening temperature to 120 °C or higher, a styrene-based resin composition with excellent heat resistance can be obtained. The method for measuring the Vicat softening temperature in this specification is measured under a load of 5 kg at a heating rate of 50 °C/hour in accordance with ISO 306.

<Method for Producing Styrene-Unsaturated Carboxylic Acid-based Resin (A)>

The method for producing the styrene-unsaturated carboxylic acid-based resin (A) in the present embodiment will be described below.

The method for producing the styrene-unsaturated carboxylic acid-based resin (A) in the present embodiment preferably includes a step of preparing a mixture solution by mixing the styrene-based monomer (1), the unsaturated carboxylic acid monomer (a1) (the (meth)acrylic acid monomer (a1-1) and/or the (meth)acrylic acid ester monomer (a1-2)), and a solvent, a polymerization step of polymerizing the mixture solution to produce a reaction product, and a step of recovering the reaction product.

There are no particular limitations on the polymerization method for the styrene-unsaturated carboxylic acid-based resin (A), but radical polymerization is preferably adopted, for example. Of these, bulk polymerization or solution polymerization methods can be preferably adopted.

Specifically, the polymerization method including a polymerization step of polymerizing polymerization raw materials (monomer components) and a devolatilization step of removing volatile components such as unreacted monomers and the polymerization solvent from the polymerization product is preferred.

In the present embodiment, when the polymerization raw materials are polymerized to obtain the styrene-unsaturated carboxylic acid-based resin (A), a polymerization initiator is typically included in the polymerization raw material composition. Examples of the polymerization initiator includes, for example, organic peroxides, including peroxy ketals such as 2,2-bis(t-butylperoxy)butane, 1,1-bis(t-butylperoxy)cyclohexane, and n-butyl-4,4-bis(t-butylperoxy) valerate, dialkyl peroxides such as di-t-butyl peroxide, t-butylcumyl peroxide, and dicumyl peroxide, diacyl peroxides such as acetyl peroxide and isobutyryl peroxide, peroxydicarbonates such as diisopropyl peroxydicarbonate, peroxy esters such as t-butyl peroxyacetate, ketone peroxides such as acetylacetone peroxide, and hydroperoxides such as t-butyl hydroperoxide. Among these, 1,1-bis(t-butylperoxy)cyclohexane is preferred from the viewpoint of the decomposition rate and the polymerization rate.

In the present embodiment, a chain transfer agent may also be used during polymerization of the styrene-unsaturated carboxylic acid-based resin (A) as necessary. Examples of chain transfer agents include, for example, $\alpha$-methylstyrene linear dimers, n-dodecyl mercaptan, t-dodecyl mercaptan, and n-octyl mercaptan.

As for the polymerization method for the styrene-unsaturated carboxylic acid-based resin (A), solution polymerization using a polymerization solvent can be employed. Aromatic solvents such as toluene, ethylbenzene, propylbenzene, and butylbenzene are preferred as the polymerization solvent, and, if needed, polar solvents such as alcohols or ketones can be combined to prepare a solvent system in which the solubility of the styrene-unsaturated carboxylic acid-based resin (A) is adjusted.

In the present embodiment, the polymerization solvent is used preferably in a range of 3 to 35 parts by mass, more preferably in a range of 5 to 30 parts by mass, relative to 100 parts by mass of all the monomers constituting the styrene-unsaturated carboxylic acid-based resin (A). If the content of the polymerization solvent exceeds 35 parts by mass relative to 100 parts by mass of all the monomers, the polymerization rate decreases, and the molecular weight of the obtained resin also decreases, leading to a reduction in mechanical strength of the resin. If the content of the polymerization solvent is less than 3 parts by mass, it may become difficult to control the removal of heat during polymerization. Adding the polymerization solvent is at a ratio of 3 to 35 parts by mass relative to 100 parts by mass of all the monomers is preferred for uniformizing the quality and from the viewpoint of control on the polymerization temperature.

Moreover, if the monovalent alcohol (E) with 10 or more carbon atoms, which is an optional component of the styrene-based resin composition in the present embodiment, is added from the polymerization system, it is preferable to add it in the ratio of 0.5 to 10 mass% relative to the total polymerization solvent.

In the present embodiment, an apparatus used in the polymerization step to obtain the styrene-unsaturated carboxylic acid-based based resin (A) is not limited, and may be appropriately selected according to a typical polymerization method of a styrene-based resin. For example, in the case where bulk polymerization is employed, a polymerization apparatus having one complete mixing-type reactor or a plurality of complete mixing-type reactors connected to one another may be used. The devolatilization step is also not limited; in the case where bulk polymerization is employed, polymerization is allowed to take place until the amount of unreacted monomers finally becomes preferably 50 mass% or

less, more preferably 40 mass% or less, and devolatilization is performed by a well-known method to remove volatile components including such unreacted monomers. For example, conventional devolatilizers, such as flash drums, twin axis devolatilizers, thin film evaporators, and extruders, can be used, but devolatilizers in which the materials reside in fewer portions are preferred. Note that the temperature for the devolatilization is typically about 190 to 280 °C, and more preferably 190 to 260 °C from the viewpoint of inhibition of decomposition. The pressure for the devolatilization is typically about 0.13 to 4.0 kPa, preferably 0.13 to 3.0 kPa, and more preferably 0.13 to 2.0 kPa. Preferred devolatilization methods include a method of removing volatile components through heating under reduced pressure, and a method of removing through an extruder or the like designed for the purpose of removing volatile components, for example.

"(Meth)acrylic Resin-based (B)"

The styrene-based resin composition in the present embodiment contains 0 mass% or more and 90 mass% or less of the (meth)acrylic resin (B) (also simply referred to as resin (B)) relative to the total amount of the styrene-based resin composition. The (meth)acrylic resin (B) contains unsaturated carboxylic acid-based monomer units (b1). Incorporating the (meth)acrylic resin (B) in the specified amount contributes to improving the oil resistance and mechanical strength of the styrene-based resin composition as a whole.

In this specification, the term "(meth)acrylic resin (B)" correctively refers to synthetic resins in which the content of the unsaturated carboxylic acid-based monomer units (b1) is 50 mass% or more relative to the total amount of the (meth) acrylic resin (B).

Furthermore, in the present disclosure, the number-average molecular weight (Mn), weight-average molecular weight (Mw), and Z-average molecular weight (Mz) of the (meth)acrylic resin (B) are values measured using gel permeation chromatography (GPC) and calibrated based on standard polystyrene, as described in the Examples section based on data detected by a differential refractometer.

The content of the (meth)acrylic resin (B) relative the total amount of the styrene-based resin composition (100 mass%) is 0 mass% or more and 90 mass% or less. Preferable lower limits for the content of the (meth)acrylic resin (B) include 0 mass% or more, more than 0 mass%, 2 mass% or more, 10 mass% or more, 11 mass% or more, 14 mass% or more, 17 mass% or more, 20 mass% or more, more than 20 mass%, 21 mass% or more, 22 mass% or more, 23 mass% or more, 24 mass% or more, 25 mass% or more, 26 mass% or more, and 29 mass% or more, in ascending order of preference. The preferable upper limits include 83 mass% or less, 73 mass% or less, 53 mass% or less, 44 mass% or less, 41 mass% or less, 38 mass% or less, 34 mass% or less, 35 mass% or less, and 30 mass% or less, in descending order of preference. By keeping the content of the (meth)acrylic resin (B) within the range of more than 0 mass% to 90 mass% or less, it is possible to suppress the decrease in heat resistance, which has been improved by the styrene-unsaturated carboxylic acid-based resin (A). In particular, by setting the content of the (meth)acrylic resin (B) to more than 20 mass% and 53 mass% or less, a styrene-based resin composition with an excellent balance of heat resistance and oil resistance can be obtained.

Particularly when the heat resistance, moldability, and low water absorption of the resin are considered important, the content of the (meth)acrylic resin (B) relative the total amount of the styrene-based resin composition (100 mass%) is 0 to 30 mass%, more preferably 0 to 20 mass%, even more preferably 0 to 15 mass%, still even more preferably 0 to 10 mass%, and further even more preferably 0 to 5 mass%.

The unsaturated carboxylic acid-based monomer units (b1) that constitute the (meth)acrylic resin (B) of the present embodiment are preferably at least one type of repeating unit selected from the group consisting of (meth)acrylic acid monomer units (b1-1) and (meth)acrylic acid ester monomer units (b1-2). Therefore, the unsaturated carboxylic acid-based monomer units (b1) include the (meth)acrylic acid monomer units (b1-1) and the (meth)acrylic acid ester monomer units (b1-2).

It is particularly preferable that the (meth)acrylic resin (B) is a copolymer containing both methacrylic acid ester monomer units and acrylic acid ester monomer units. This provides the effect of improving oil resistance and mechanical strength, while also achieving thermal decomposition resistance.

<Methacrylic Acid Monomer (b1-1)>

In the present embodiment, the (meth)acrylic acid monomer (b1-1) is acrylic acid or methacrylic acid.

<Methacrylic Acid Ester Monomer (b1-2)>

The (meth)acrylic acid ester monomer units (b1-2) constituting the (meth)acrylic resin (B) in the present embodiment include methacrylic acid ester monomer units and acrylic acid ester monomer units. Examples of the (meth)acrylic acid ester monomer (b1-2) include methyl acrylate, ethyl acrylate, (n-butyl) acrylate, (2-ethylhexyl) acrylate, (n-octyl) acrylate, benzyl acrylate, methyl methacrylate, butyl methacrylate, ethyl methacrylate, propyl methacrylate,

isopropyl methacrylate, cyclohexyl methacrylate, phenyl methacrylate, (2-ethylhexyl) methacrylate, (n-octyl) methacrylate, benzyl methacrylate, and stearyl methacrylate. Among these, methyl acrylate, (n-butyl) acrylate, methyl methacrylate, (2-ethylhexyl) methacrylate, and (n-octyl) methacrylate are preferable in view of their industrial availability and low cost. The (meth)acrylic acid ester monomers (b1-2) may be used alone or in combination, with a combination of two (meth) acrylic acid ester monomers being particularly preferred.

From the viewpoint of balancing heat resistance and thermal decomposition resistance, it is preferable that as the combinations of monomer units constituting the (meth)acrylic resin (B), copolymers where methacrylic acid ester species and acrylic acid ester species are copolymerized. Among these, a methyl methacrylate-methyl acrylate copolymer is more preferred.

<Preferred Forms of (Meth)acrylic Resin-based (B)>

The preferred (meth)acrylic resin (B) of the present embodiment is preferably a binary or ternary copolymer, and more preferably a methacrylic acid ester-acrylic acid ester copolymer obtained by copolymerizing methacrylic acid ester species (methacrylic acid ester monomer units) and acrylic acid ester species (acrylic acid ester monomer units); and a copolymer containing 0.1 to 25 mass% of the acrylic acid ester monomer units relative to the total amount of the methacrylic acid ester-acrylic acid ester is preferred, a copolymer containing 0.5 to 17 mass% of the acrylic acid ester monomer units is more preferred, a copolymer containing 1.0 to 7.0 mass% of the acrylic acid ester monomer units is even more preferred, a copolymer containing 1.2 to 4.5 mass% of the acrylic acid ester monomer units is still even more preferred, and a copolymer containing 1.5 to 3.0 mass% of the acrylic acid ester monomer units is most preferred.

A preferred (meth)acrylic resin (B) of the present embodiment is a methyl methacrylate-methyl acrylate copolymer that is more preferably a copolymer containing 0.5 to 17 mass% of methyl acrylate monomer units, and is even more preferably a copolymer containing 1.0 to 5.0 mass% of methyl acrylate monomer units, relative to the total amount of the copolymer. This effectively suppresses the decrease in heat resistance, which has been improved by the styrene-unsaturated carboxylic acid-based resin (A).

In the present embodiment, the content of the (meth)acrylic acid ester monomer units (b1-2) in the (meth)acrylic resin (B) is preferably 54 mass% or more, more preferably 64 mass% or more, even more preferably 71 mass% or more, still even more preferably 86 mass% or more, and most preferably 91 mass% or more, relative to the total amount of the (meth)acrylic resin (B). By setting the content of the (meth)acrylic acid ester monomer units (b1-2) within the range of 55.0 to 100 mass%, the (meth)acrylic resin (B) can withstand mixing extrusion and molding processing with other resins at temperatures 300 °C or lower. Therefore, the significant reduction in heat resistance when the styrene-unsaturated carboxylic acid-based resin (A) and the (meth)acrylic resin (B) are mixed can be suppressed. As for the types of methacrylic acid ester monomers (b1-2), methyl acrylate or methyl methacrylate is preferable from the viewpoints of heat resistance, industrial availability, and low cost.

In the (meth)acrylic resin (B) of the present embodiment, the content of the (meth)acrylic acid ester monomer units (b1-2) in the (meth)acrylic resin (B) is preferably 100 mass% or less, more preferably 97 mass% or less, even more preferably 91 mass% or less, still even more preferably 86 mass% or less, and most preferably 81 mass% or less, relative to the total amount of the (meth)acrylic resin (B).

In the (meth)acrylic resin (B) of the present embodiment, the upper limit of the content of the (meth)acrylic acid monomer units (b1-1) in the (meth)acrylic resin (B) is preferably 15 mass% or less, more preferably 10 mass% or less, even more preferably 5 mass% or less, still even more preferably 3 mass% or less, and most preferably 2 mass% or less, relative to the total amount of the (meth)acrylic resin (B). The lower limit of the content of the (meth)acrylic acid monomer units (b1-1) in the (meth)acrylic resin (B) is preferably 0 mass% or more, more preferably 0.5 mass% or more, even more preferably 0.7 mass% or more, still even more preferably 1.0 mass% or more, and most preferably 1.5 mass% or more. The upper and lower limits mentioned above can be combined arbitrarily.

<Optional Monomer Unit (b2)>

In the present embodiment, the (meth)acrylic resin (B) may also contain an optional monomer units (b2) other than the unsaturated carboxylic acid-based monomer units (b1) (for example, (meth)acrylic acid monomer units (b1-1) and/or (meth)acrylic acid ester monomer units (b1-2)) mentioned above. In other words, as long as the optional monomer unit (b2) is copolymerizable with the unsaturated carboxylic acid-based monomer units (b1), monomers other than those mentioned above may be copolymerized without any limitation in the extent that the effects of the present disclosure are not impaired. Examples of the optional monomer unit (b2) other than monomer units listed above include styrene, maleic anhydride, maleic acid, fumaric acid, itaconic acid, dimethyl maleate, dimethyl fumarate, diethyl fumarate, ethyl fumarate, maleimide, and nuclear-substituted maleimides.

In the present embodiment, the content of the optional monomer unit (b2) is preferably 0 to 30 mass%, more preferably 0 to 20 mass%, even more preferably 0 to 15 mass%, and still even more preferably 0 to 7 mass% relative to the

total amount of the (meth)acrylic resin (B).

The upper limit of the weight-average molecular weight (Mw) of the (meth)acrylic resin (B) in terms of standard polystyrene using the GPC method to be described later is preferably 8,000,000 or less, 6,000,000 or less, 5,000,000 or less, 3,000,000 or less, 2,000,000 or less, 1,000,000 or less, 900,000 or less, 500,000 or less, 400,000 or less, 300,000 or less, 200,000 or less, 150,000 or less, 130,000 or less, 120,000 or less, 110,000 or less, in descending order of preference. The lower limit is 40,000 or more, 50,000 or more, 60,000 or more, 70,000 or more, 80,000 or more, and 90,000 or more, in ascending order of preference. The above upper and lower limits can be combined arbitrarily to define the range of the weight-average molecular weight (Mw) of the (meth)acrylic resin (B), but it is particularly preferable to set the Mw to 70,000 or more to provide a resin composition with excellent strength, and 1,000,000 or less to suppress the viscosity difference with the styrene-unsaturated carboxylic acid-based resin (A), thereby allowing good dispersion of the (meth)acrylic resin (B) in the styrene-based resin composition. This also suppresses the generation of unmelted materials derived from the (meth)acrylic resin (B) and enables the production of molded articles with a good appearance using the composition. Furthermore, since the viscosity of the resin composition is lowered, a resin composition with a good injection molding cycle can be obtained.

The value of the number-average molecular weight (Mn) of the (meth)acrylic resin (B) is in the range of preferably 20,000 to 1,500,000, more preferably 25,000 to 300,000, and even more preferably 30,000 to 120,000, in terms of standard polystyrene using the GPC method to be described later.

The value of the Z-average molecular weight (Mz) of the (meth)acrylic resin (B) is in the range of preferably 80,000 to 10,000,000, more preferably 90,000 to 800,000, and even more preferably 100,000 to 300,000, in terms of standard polystyrene using the GPC method to be described later.

The value of the dispersity (Mw/Mn) of the (meth)acrylic resin (B) is in the range of preferably 1.1 to 6.0, more preferably 1.3 to 4.0, and even more preferably 1.5 to 3.7, in terms of standard polystyrene using the GPC method to be described later. Particularly, by setting the value in the range of 1.5 to 3.7, a styrene-based resin composition with an excellent balance of moldability and strength can be obtained.

It should be noted that the (meth)acrylic resin (B) of the present embodiment may contain high molecular weight components of 1,000,000 or more. The high molecular weight components have unsaturated carboxylic acid-based monomer units (b1), and the proportion of the (meth)acrylic resin (B) with high molecular weight components of 1,000,000 or more among the (meth)acrylic resin (B) contained in the styrene-based resin composition is preferably 1.0 mass% or less relative to the total amount of the styrene-based resin composition.

A method for controlling the content of high molecular weight components of 1,000,000 or more in the (meth)acrylic resin (B) to 1.0 mass% or less includes adjusting the type and amount of the unsaturated carboxylic acid-based monomer units (b1), the type and amount of the chain transfer agent, reaction temperature, residence time, type and amount of the polymerization initiator, type and amount of the polymerization solvent, etc. when radical polymerization is performed to obtain the unsaturated carboxylic acid-based monomer units (b1).

As described above, it is more preferable that the (meth)acrylic resin (B) of the present embodiment contains 0.0 mass% or more and 1.0 mass% or less of high molecular weight components of 1,000,000 or more relative to the total amount of the styrene-based resin composition, and the weight-average molecular weight (Mw) of the entire (meth)acrylic resin (B) is in the range of 70,000 to 300,000.

<Methacrylic Acid Monomer or Methacrylic Acid Ester Monomer in Styrene-Based Resin Composition>

In the present embodiment, the total content of all (meth)acrylic acid monomer units contained in the styrene-based resin composition is in the range of preferably 1 to 20 mass%, more preferably in the range of 2 to 15 mass%, even more preferably in the range of 3 to 10 mass%, and still even more preferably in the range of 4 to 8 mass%, relative to the total amount (100 mass%) of the styrene-based resin composition. When the content of the (meth)acrylic acid monomer units in the entire resin composition is within this range, the effect of improving heat resistance can be sufficiently obtained. Furthermore, particularly when a balance between heat resistance and moldability is considered important, the content of all (meth)acrylic acid monomer units in the styrene-based resin composition is preferably 7 to 20 mass%, more preferably 8 to 18 mass%, even more preferably 10 to 15 mass%, and still even more preferably 10.3 to 12.5 mass%.

It should be noted that the content of all (meth)acrylic acid monomer units refers to the total amount of (meth)acrylic acid monomer units present in the styrene-based resin composition, and this includes the contents of (meth)acrylic acid monomer units in the resin (A), resin (B), and any optionally added resins.

In the present embodiment, the content of all (meth)acrylic acid ester monomer units in the styrene-based resin composition is in the range of preferably 6 to 55 mass% , more preferably 10 to 50 mass%, even more preferably 14 to 45 mass%, still even more preferably 16 to 40 mass%, and further even more preferably 20 to 37 mass%, relative to the total amount (100 mass%) of the styrene-based resin composition. When the content of the (meth)acrylic acid ester monomer units in the entire composition is within this range, sufficient improvements in oil resistance and strength can be obtained. Furthermore, when moldability and low water absorption of the resin are considered important, the content of all (meth)acrylic acid ester monomer units in the styrene-based resin composition is preferably 0 to 20 mass%, more preferably 0 to 15 mass%, even more preferably 0 to 10 mass%, more preferably 0 to 7 mass%, and still even more preferably 0 to 6 mass% relative to the total amount (100 mass%) of the styrene-based resin composition.

It should be noted that the content of all (meth)acrylic acid ester monomer units refers to the total amount of (meth) acrylic acid ester monomer units present in the styrene-based resin composition, and this includes the contents of (meth) acrylic acid ester monomer units in the resin (A), resin (B), and any other optionally added resins.

By controlling the contents of all (meth)acrylic acid monomer units and all (meth)acrylic acid ester monomer units within the above ranges, it is possible to simultaneously and efficiently obtain the effect of improving heat resistance through the (meth)acrylic acid monomer units and the effect of improving oil resistance through the (meth)acrylic acid ester monomer units. As a result, a styrene-based resin composition with excellent heat resistance and oil resistance and a sheet molded from the composition can be obtained

<Method for Producing (Meth)acrylic Resin-based (B)>

There are no particular limitations on the method for producing the (meth)acrylic resin (B) in the present embodiment. However, it can be producing using bulk polymerization where the (meth)acrylic acid ester monomer and other optional monomers, as required, are polymerized, solution polymerization where a solvent is added, suspension polymerization where the organic phase is dispersed in water using a suspending agent, emulsion polymerization, etc.

"Light Stabilizer (C)"

The light stabilizer (C) of the present embodiment does not have ultraviolet absorption ability per se but functions to capture and neutralize photoradicals generated when the styrene-based resin composition absorbs ultraviolet light, thereby preventing the degradation and discoloration of the styrene-based resin composition caused by radicals. Preferred examples of the light stabilizer (C) include hindered amine compounds, and examples include secondary amine-type, tertiary amine-type, N-alkoxy-type, and other hindered amine compounds. The light stabilizer (C) may be used alone or in combination with two or more types. When used in combination with the ultraviolet absorber (D) described below, it provides a higher light resistance effect, in other words, it can suppress discoloration and reduction in strength of the styrene-based resin composition or molded articles thereof due to long-term outdoor exposure. Since the light stabilizer (C) mainly functions at the resin surface where photoradical generation is higher, low-molecular-weight types are preferred for enhanced effectiveness. However, the molecular weight thereof is necessary to be adjusted to an appropriate molecular weight to prevent mold contamination due to excessive bleed-out, etc.

Among hindered amine compounds, secondary amine-type hindered amines are preferred as the light stabilizer (C) for their weather resistance and initial color tone when added.

The content of the light stabilizer (C) is preferably 0 mass% to 2.0 mass%, more preferably 0.001 mass% to 2.0 mass% relative to the total amount of the styrene-based resin composition. Preferred upper limits include 1.8 mass% or less, 1.6 mass% or less, 1.4 mass% or less, 1.2 mass% or less, 1.0 mass% or less, 0.8 mass% or less, 0.7 mass% or less, 0.6 mass% or less, 0.5 mass% or less, 0.4 mass% or less, 0.3 mass% or less, 0.2 mass% or less, and 0.1 mass% or less, in descending order of preference. Preferred lower limits include 0.005 mass% or more, 0.010 mass% or more, 0.021 mass% or more, 0.051 mass% or more, 0.061 mass% or more, 0.071 mass% or more, 0.079 mass% or more, and 0.089 mass% or more, in ascending order of preference. The upper and lower limits mentioned above can be combined arbitrarily to define the content of the light stabilizer (C).

As the light stabilizer (C) of the present embodiment, hindered amine compounds are preferred. examples of such hindered amine compounds include bis(1,2,2,6,6-pentamethyl-4-piperidyl) sebacate, bis(1-undecyloxy-2,2,6,6-tetramethylpiperidin-4-yl) carbonate, tetrakis(2,2,6,6-tetramethyl-4-piperidyl) butane-1,2,3,4-tetracarboxylate, bis(1,2,2,6,6-pentamethyl-4-piperidyl) sebacate, N,N'-bis(2,2,6,6-tetramethylpiperidin-4-yl)hexane-1,6-diamine, butyl(3,5-di-t-butyl-4-hydroxybenzyl) malonate bis(1,2,2,6,6-pentamethyl-4-piperidyl), and N,N'-1,6-hexanediyl-bis(N-(2,2,6,6-tetramethylpiperidin-4-yl)formamide). Specific product manes include ADK STAB LA-52, ADK STAB LA-57, ADK STAB LA-63P, ADK STAB LA-68, ADK STAB LA-72, ADK STAB LA-77Y, ADK STAB LA-77G, and ADK STAB LA-81 (manufactured by ADEKA Corporation), JF-90G and JF-95 (manufactured by Johoku Chemical Co., Ltd.), and Chimasorb 2020FDL, Chimasorb 944FDL, Tinuvin 622SF, and Uvinul 4050FF (manufactured by BASF Japan Ltd.).

"Ultraviolet Absorber (D)"

The ultraviolet absorber (D) of the present embodiment functions to absorb ultraviolet rays that would otherwise be absorbed by the styrene-based resin composition, converting them into heat or chemical energy to suppress the generation of photoradicals generated when ultraviolet light is absorbed by the styrene-based resin composition and thus prevent degradation and discoloration of the resin. Preferred examples of the ultraviolet absorber (D) are compounds

containing two or more aromatic rings connected via a linking group that includes atoms with unpaired electrons (such as oxygen, nitrogen, sulfur, or phosphorus atoms), and at least one of the aromatic rings has a phenolic hydroxyl group. These compounds have chemical structures that can convert the absorbed light into chemical energy after reaching an excited state. Examples of the ultraviolet absorbers (D) include, for example, benzotriazole-based compounds, triazine-based compounds, benzophenone-based compounds, benzoate-based compounds, cyanoacrylate-based compounds, oxalic acid anilide-based compounds, malonic acid ester-based compounds, formamidine-based compounds, and salicylate-based compounds. These ultraviolet absorbers (D) may be used alone or in combination with two or more types, and when used in combination with the light stabilizer (C), they provide a higher light resistance effect, in other words, they suppress discoloration and reduction in strength of the styrene-based resin composition after exposure to light. Preferably, ultraviolet absorbers (D) that are capable of absorbing ultraviolet rays in the wavelength range (250 to 350 nm) that are easily absorbed by the resins added to the styrene-based resin composition, instead.

The ultraviolet absorber (D) of the present embodiment is more preferably one or two or more selected from the group consisting of benzotriazole-based compounds, triazine-based compounds, benzophenone-based compounds, benzoate-based compounds, cyanoacrylate-based compounds, malonic acid ester-based compounds, and oxalic acid anilide-based compounds, for example.

Specifically, the preferred ultraviolet absorber (D) of the present embodiment is one or two compounds selected from the group consisting of the compounds represented by the following general formulas (d) and (d'):

[Chem. 4]

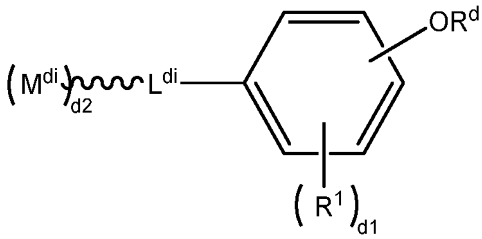

(d)

in the above general formula (d), each $M^{di}$ independently represents a monovalent or higher aromatic group, $R^d$ represents a hydrogen atom or an alkyl group having 1 to 10 carbon atoms, each $L^{di}$ independently represents a divalent to pentavalent group, $R^1$ represents an alkyl group having 1 to 15 carbon atoms or an aralkyl group having 7 to 25 carbon atoms, wherein $-CH_2-$in the alkyl group may be substituted with -O- or -C(=O)-, and one or more hydrogen atoms on the benzene ring in the aralkyl group may be substituted with a phenolic hydroxyl group, an alkyl group having 1 to 15 carbon atoms, or a condensed ring (including a heterocyclic ring (benzotriazole ring, for example)), d1 represents an integer of 0 or more and 4 or less, and d2 represents an integer of 1 or more and 4 or less, The wavy line connecting $M^{di}$ and $L^{di}$ in the above general formula (d) indicates the presence of one or more chemical bonds that are greater than or equal to a single bond, and d1 of 0 represents no substitution,

[Chem. 5]

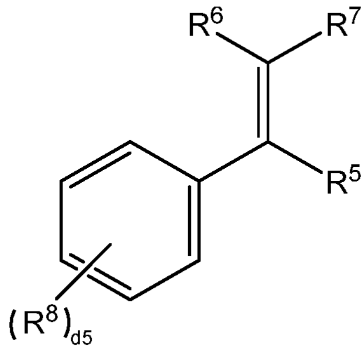

(d')

in the above general formula (d'), $R^5$ to $R^7$ each independently represent a hydrogen atom, halogen atom, hydroxyl group, cyano group, phenyl group, alkyl group having 1 to 15 carbon atoms, alkenyl group having 1 to 15 carbon atoms, or aralkyl group having 7 to 25 carbon atoms, wherein $-CH_2-$ in the alkyl group may be substituted with -O- or -C(=O)-, and one or more hydrogen atoms on the benzene ring of the aralkyl group may be substituted with a phenolic hydroxyl group, an alkyl group having 1 to 15 carbon atoms, or a condensed ring (including a heterocyclic ring (benzotriazole ring, for example)),

each $R^8$ independently represents a halogen atom, hydroxyl group, cyano group, alkyl group having 1 to 15 carbon atoms, alkenyl group having 1 to 15 carbon atoms, or aralkyl group having 7 to 25 carbon atoms, wherein $-CH_2-$ in the alkyl group may be substituted with -O- or -C(=O)-, and one or more hydrogen atoms on the benzene ring of the aralkyl group may be substituted with a phenolic hydroxyl group, an alkyl group having 1 to 15 carbon atoms, or a condensed ring (including a heterocyclic ring (benzotriazole ring, for example)), and

d5 represents an integer of 0 or more and 4 or less, and when d5 is 2 or more, $R^8$ may be the same or different from each other.

In the above general formula (d), each $M^{di}$ independently represents a monovalent or higher unsubstituted aromatic group or substituted aromatic group where one or more hydrogen atoms are substituted with a substituent $R^2$, and preferably is a monovalent to tetravalent aromatic ring where one or more hydrogen atoms may be substituted by the substituent $R^2$, and more preferably a group represented by the following formulas (I) or (II):

[Chem. 6]

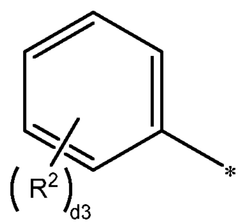

(I)

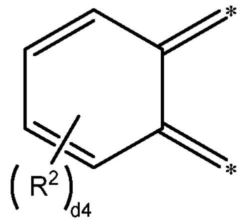

(II)

in the above formula (I) or (II), each $R^2$ independently represents a halogen atom, hydroxyl group, cyano group, or an alkyl group having 1 to 15 carbon atoms, wherein $-CH_2-$ in the alkyl group may be substituted with -O- or -C(=O)-, d3 represents an integer of 0 to 5, and d4 represents an integer of 0 or more and 4 or less.

The substituent $R^2$ preferably represents a halogen atom, hydroxyl group, cyano group, or an alkyl group having 1 to 15 carbon atoms, wherein $-CH_2-$ in the alkyl group may be substituted with -O- or -C(=O)-.

In the above general formula (d), each $L^{di}$ independently represents a divalent to pentavalent group, and specifically, is preferably a linking group represented by -C(=O)-, -C(=O)-O-, -O-C(=O)-, -N=, -NH-C(=O)-C(=O)-NH-, or the following formulas (III) or (IV).

[Chem. 7]

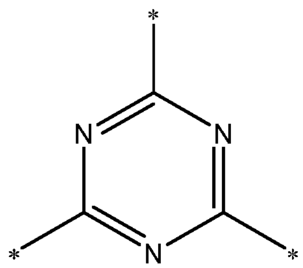

(III)

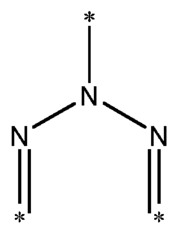

(IV)

In the above general formula (d), d1 represents an integer of 0 or more and 4 or less, and is preferably 0, 1, 2, or 3.

In the above general formula (d), d2 relates to the number of bonds (valence) of $L^{di}$. When d2 is 1, $L^{di}$ is a divalent group. Similarly, when d2 is 2, $L^{di}$ is a trivalent group; when d2 is 3, $L^{di}$ is a tetravalent group; and when d2 is 4, $L^{di}$ is a pentavalent group. Therefore, d2 may be the number of bonds (valence) of $L^{di}$ minus 1.

In the above general formula (d), $R^1$ represents an alkyl group having 1 to 15 carbon atoms, wherein $-CH_2-$ in the alkyl group may be substituted with -O- or -C(=O)-, and preferably, $R^1$ is a linear or branched alkyl group having 1 to 13 carbon atoms, an alkoxy group having 1 to 13 carbon atoms, or an alkoxy group having 1 to 13 carbon atoms with an ester bond. Additionally, when d1 is an integer of 2 or more, the multiple $R^1$ groups may be identical or different.

As one preferred aspect of the ultraviolet absorber (D) of the present embodiment, specifically, compounds represented by the following general formula (d) are preferred.

Among the compounds represented by the above general formula (d), one or more compounds selected from the group consisting of the following general formula (d-1), general formula (d-2), general formula (d-3), and general formula (d-4) are more preferred:

[Chem. 8]

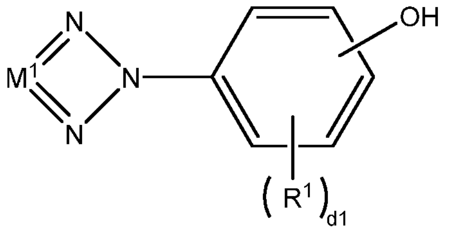

(d-1)

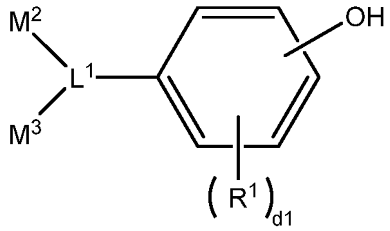

(d-2)

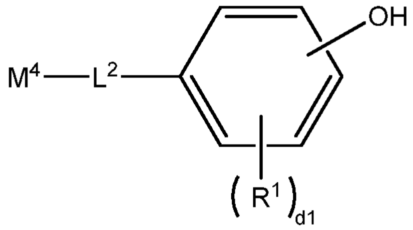

(d-3)

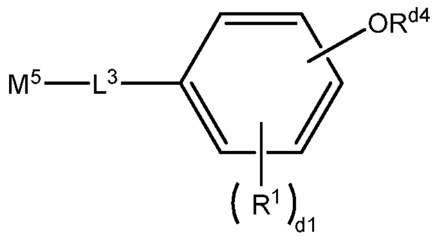

(d-4)

in the above general formula (d-1), $M^1$ represents a group represented by the above formula (II),
in the above general formula (d-2), $M^2$ and $M^3$ represent groups represented by the above formula (I), and $L^1$ represents -N= or a group represented by the above formula (III),
in the above general formula (d-3), $M^4$ represents a group represented by the above formula (I), and $L^2$ represents -C(=O)-, -C(=O)-O-, or -O-C(=O)-, and
in the above general formula (d-4), $M^5$ represents a hydrogen atom, a halogen atom, a hydroxyl group, a cyano group, an alkyl group having 1 to 15 carbon atoms, an alkenyl group having 1 to 15 carbon atoms, or an aralkyl group having 7 to 25 carbon atoms, and preferably represents a group represented by the above formula (I), $R^{d4}$ represents an alkyl group having 1 to 10 carbon atoms, and $L^3$ represents -NH-C(=O)-C(=O)-NH-.

Note that "$R^1$ and d1" in the above general formulas (d-1) to (d-4) are as defined by "$R^1$ and d1" in the above general formula (d).

Among the compounds represented by the above general formula (d-1), compounds represented by the following general formulas (d-1.1) or (d-1.2) are preferred:

[Chem. 9]

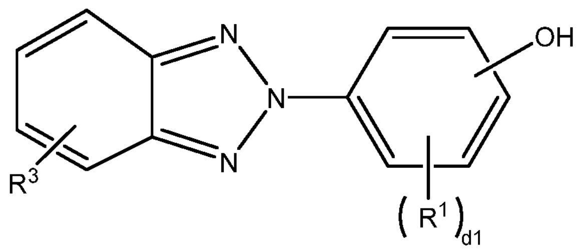

(d-1.1)

[Chem. 10]

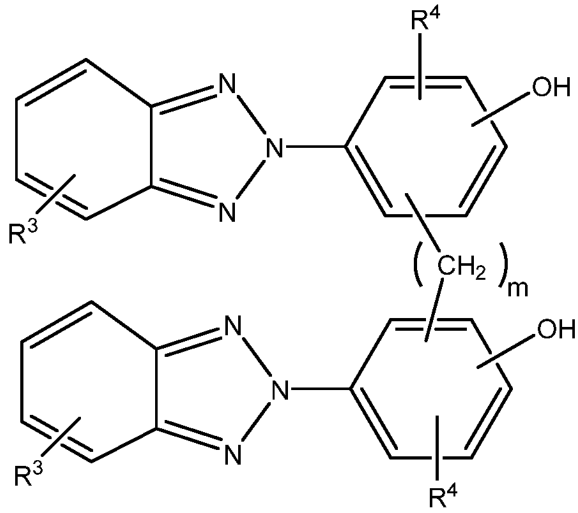

(d-1.2)

in the above general formula (d-1.1), $R^3$ represents a hydrogen atom, a halogen atom, a hydroxyl group, a cyano group, or an alkyl group having 1 to 15 carbon atoms, wherein $-CH_2-$ in the alkyl group may be substituted with -O- or -C(=O)-, and $R^1$ and d1 are as defined by "$R^1$ and d1" in the above general formula (d), and, in the above general formula (d-1.2), $R^3$ represents a hydrogen atom, a halogen atom, a hydroxyl group, a cyano group, or an alkyl group having 1 to 15 carbon atoms, wherein $-CH_2-$ in the alkyl group may be substituted with -O- or -C(=O)-, $R^4$ independently represents a hydrogen atom, an alkyl group having 1 to 15 carbon atoms, or an alkoxy group, and m represents an integer of 1 to 5.

Among the compounds represented by the above general formula (d-2), compounds represented by the following general formula (d-2.1) are preferred:

[Chem. 11]

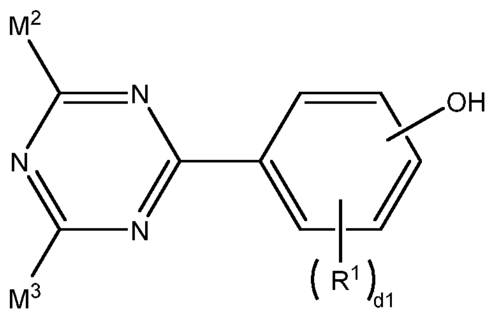

(d-2.1)

in the above general formula (d-2.1), $M^2$ and $M^3$ represent groups represented by the above formula (I), and $R^1$ and d1 are as defined by "$R^1$ and d1" in the above general formula (d).

Among the compounds represented by the above general formula (d-3), compounds represented by the following general formula (d-3.1) are preferred.

[Chem. 12]

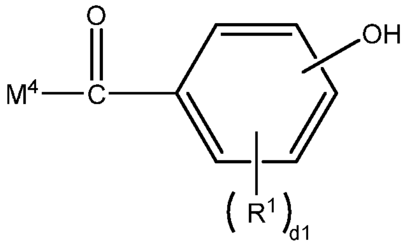

(d-3.1)

in the above general formula (d-3.1), $M^4$ represents a group represented by the above formula (I), and $R^1$ and d1 are as defined by "$R^1$ and d1" in the above general formula (d).

As a preferred ultraviolet absorber (D) of the present embodiment, specifically, compounds represented by the following general formula (d-4.1) are also preferably used.

[Chem. 13]

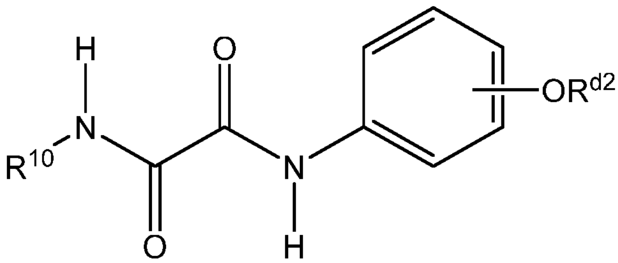

(d-4.1)

in the above general formula (d-4.1), each $R^{10}$ independently represents a hydrogen atom, a halogen atom, a hydroxyl group, a cyano group, an alkyl group having 1 to 15 carbon atoms, an alkenyl group having 1 to 15 carbon atoms, or an aralkyl group having 7 to 25 carbon atoms, wherein $-CH_2-$ in the alkyl group may be substituted with -O- or -C(=O)-.

In the compounds represented by the general formula (d-4.1), from the viewpoint of compatibility with styrene-based resins and stability, $R^{10}$ is preferably an aralkyl group having 7 to 25 carbon atoms, more preferably an aralkyl group having 7 to 20 carbon atoms, even more preferably an aralkyl group having 7 to 18 carbon atoms.

As another preferred ultraviolet absorber (D) in the present embodiment, specifically, compounds represented by the following general formula (d') are also preferably used.

[Chem. 14]

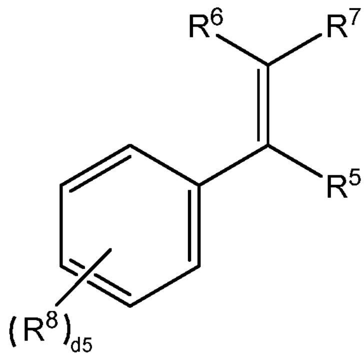

(d')

in the above general formula (d'), $R^5$ to $R^7$ each independently represent a hydrogen atom, halogen atom, hydroxyl group, cyano group, phenyl group, alkyl group having 1 to 15 carbon atoms, alkenyl group having 1 to 15 carbon atoms, or aralkyl group having 7 to 25 carbon atoms, wherein $-CH_2-$ in the alkyl group may be substituted with -O- or -C(=O)-, and one or more hydrogen atoms on the benzene ring of the aralkyl group may be substituted with a phenolic hydroxyl group, an alkyl group having 1 to 15 carbon atoms, or a condensed ring (including a heterocyclic ring (benzotriazole ring, for example)),

each $R^8$ independently represents a halogen atom, hydroxyl group, cyano group, alkyl group having 1 to 15 carbon

atoms, alkenyl group having 1 to 15 carbon atoms, or aralkyl group having 7 to 25 carbon atoms, wherein $-CH_2-$ in the alkyl group may be substituted with -O- or -C(=O)-, and one or more hydrogen atoms on the benzene ring of the aralkyl group may be substituted with a phenolic hydroxyl group, an alkyl group having 1 to 15 carbon atoms, or a condensed ring (including a heterocyclic ring (benzotriazole ring, for example)),

d5 represents an integer of 0 or more and 4 or less, and when d5 is 2 or more, $R^8$ may be the same or different from each other.

In the general formula (d'), $R^5$ independently represents a hydrogen atom, a halogen atom, a hydroxyl group, a cyano group, a phenyl group, an alkyl group having 1 to 15 carbon atoms, an alkenyl group having 1 to 15 carbon atoms, or an aralkyl group having 7 to 25 carbon atoms, wherein $-CH_2-$in the alkyl group may be substituted with -O- or -C(=O)-. Particularly, from the viewpoint of stability, $R^5$ is preferably a phenyl group or a hydrogen atom.

Among the preferred forms of $R^6$ and $R^7$ in the above general formula (d'), groups represented by the following general formula (V) or cyano groups (-CN) are preferred:

[Chem. 15]

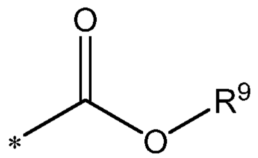

(V)

in the above general formula (V), $R^9$ represents a hydrogen atom, a halogen atom, a hydroxyl group, a cyano group, an alkyl group having 1 to 15 carbon atoms, an alkenyl group having 1 to 15 carbon atoms, or an aralkyl group having 7 to 25 carbon atoms, wherein $-CH_2-$ in the alkyl group may be substituted with -O- or -C(=O)-, and $-CH_3$ in the alkyl group may be substituted with -CN.

Particularly, from the viewpoint of compatibility with styrene-based resins and stability, in the above general formula (V), $R^9$ is preferably an alkyl group having 1 to 15 carbon atoms, more preferably an alkyl group having 1 to 10 carbon atoms, even more preferably an alkyl group having 1 to 5 carbon atoms, still even more preferably an alkyl group having 1 to 3 carbon atoms, and particularly preferably an alkyl group having 1 to 2 carbon atoms.

As the preferred forms of $R^8$ in the above general formula (d'), groups represented by the general formula (V) or alkyl groups having 1 to 15 carbon atoms are cited, wherein $-CH_2-$ in the alkyl group may be substituted with -O- or -C(=O)-.

The position of $R^8$ in the above general formula (d') is preferably at the para-position on the benzene ring in the above general formula (d').

In the above general formula (d'), from the viewpoint of stability, d5 is preferably 0 or 1.

The content of the ultraviolet absorber (D) in the present embodiment is preferably 0.001 to 2.0 mass% relative to the total amount of the styrene-based resin composition. Preferable upper limits include 1.8 mass% or less, 1.6 mass% or less, 1.4 mass% or less, 1.2 mass% or less, 1.0 mass% or less, 0.8 mass% or less, 0.7 mass% or less, 0.6 mass% or less, 0.5 mass% or less, 0.4 mass% or less, 0.3 mass% or less, 0.2 mass% or less, 0.1 mass% or less, and 0.05 mass% or less, in descending order of preference, and preferable lower limits include 0.002 mass% or more, 0.004 mass% or more, 0.006 mass% or more, 0.010 mass% or more, and 0.021 mass% or more, in ascending order of preference. The content of the ultraviolet absorber (D) can be selected from any combination of the above-mentioned upper and lower limits.

Examples of the benzotriazole-based compound mentioned above include, for example, 2-(2'-hydroxy-5'-methylphenyl)benzotriazole, 2,2'-methylenebis[6-(2H-benzotriazol-2-yl)-4-tert-octylphenol], 2-(2'-hydroxy-3',5'-di-tert-amylphenyl)benzotriazole, 2-(2'-hydroxy-5'-tert-octylphenyl)benzotriazole, 6-(2-benzotriazolyl)-4-tert-octyl-6'-tert-butyl-4'-methyl-2,2'-methylenebisphe nol, 2-(2'-hydroxy-3'-tert-butyl-5'-methylphenyl)-5-chlorobenzotriazole, and 2-(2H-benzotriazol-2-yl)-4-(1,1,3,3-tetramethylbutyl)phenol. Specific product names include ADK STAB LA-32, ADK STAB LA-36, and ADK STAB LA-36RG manufactured by ADEKA Corporation, JF-77, JF-79, JF-80, JF-83, JF-832, and AST-500 manufactured by Johoku Chemical Co., Ltd., and Tinuvin P, Tinuvin 234, Tinuvin 234FF, Tinuvin 326, Tinuvin 329, and Tinuvin 360 manufactured by BASF Japan Ltd.

Examples of the triazine-based compound mentioned above include, for example, 2-(4,6-diphenyl-1,3,5-triazine-2-yl)-5-[2-(2-ethylhexanoyloxy)ethoxy]phenol, 2,4,6-tris(2-hydroxy-4-hexyl-3-methylphenyl)-1,3,5-triazine, N,N',N"-tris(m-tolyl)-1,3,5-triazine-2,4,6-triamine, 2,4,6-tris(4-butoxy-2-hydroxyphenyl)-1,3,5-triazine, 2,4-bis(2,4-dimethylphenyl)-6-(2-hydroxy-4-n-octyloxyphenyl)-1,3,5-triazine, ethylhexyl triazine, 2-(2,4-dihydroxyphenyl)-4,6-bis(2,4-dimethylphenyl)-1,3,5-triazine, 2,4,6-tris(2,4-dihydroxyphenyl)-1,3,5-triazine, bemotrizinol, 2-(2-hydroxy-4-methoxyphenyl)-4,6-diphenyl-1,3,5-triazine, and 2-(2,4-dihydroxyphenyl)-4,6-diphenyl-1,3,5-triazine. Specific product names include ADK STAB LA-46 and ADK STAB LA-F70 manufactured by ADEKA Corporation, and Tinuvin 1577ED and Tinuvin 1600 manufactured by BASF Japan Ltd.

Examples of the benzophenone-based compound mentioned above include, for example, 2-hydroxy-4-(octyloxy)benzophenone, 2-hydroxy-4-methoxybenzophenone, 2,2'-dihydroxy-4,4'-dimethoxybenzophenone, 2,4-dihydroxybenzophenone, and 2,2',4,4'-tetrahydroxybenzophenone. Specific product names include ADK STAB 1413 manufactured by ADEKA Corporation and Chimassorb 81 and Chimassorb 81FL manufactured by BASF Japan Ltd.

Examples of the cyanoacrylate-based compound mentioned above include, for example, 2,2-bis{[(2-cyano-3,3-diphenylacryloyl)oxy]methyl}propane-1,3-diyl bis(2-cyano-3,3-diphenylacrylate), 2-cyano-3,3-diphenylacrylic acid ethyl, and 2-ethylhexyl (2Z)-3-cyano-2,3-diphenylprop-2-enoate. Specific product names include Uvinul 3030, Uvinul 3035, and Uvinul 3039 manufactured by BASF Japan Ltd.

Examples of the malonic acid ester-based compound mentioned above include, for example, (4-methoxybenzylidene)malonate and tetraethyl 2,2'-(1,4-phenylene dimethanylylidene) dimalonate. Specific products include Hostavin PR-25 GR, Hostavin B-CAP manufactured by Clariant.

Examples of the oxalic acid anilide-based compound mentioned above include, for example, N-(2-ethylphenyl)-N'-(2-ethoxyphenyl)diamide oxalate. Specific products include Hostavin VSU P manufactured by Clariant.

In the present embodiment, two or more ultraviolet absorbers (D) may be used in combination. A preferred form involves the use of an ultraviolet absorber (D) that can efficiently absorb the ultraviolet absorption peak derived from the aromatic groups of the styrene-based resin in the region (wavelengths of 250 to 300 nm) where ultraviolet absorption enhances during photo-deterioration, and an ultraviolet absorber (D) that can efficiently absorb ultraviolet rays in the ultraviolet region (wavelengths of 300 to 400 nm) that falls most heavily on the surface of the Earth. In the present embodiment, a particularly preferred ultraviolet absorber (D) contains a compound represented by the above-mentioned general formula (d-2.1), and a compound represented by the above-mentioned general formula (d-1.1) or a compound represented by the above-mentioned general formula (d-3.1). Specifically, as an ultraviolet absorber (D) that can efficiently absorb wavelengths of 250 to 300 nm, a combination of a triazine-based ultraviolet absorber with a benzotriazole-based ultraviolet absorber or benzophenone-based ultraviolet absorber is preferred.

When initial color tone is particularly considered important, it is preferable to use a combination of a malonic acid ester-based or oxalic acid anilide-based ultraviolet absorber, which has minimal absorption in the visible light range (wavelengths of 380 nm and above) and absorbs only in the ultraviolet region (near 250 to 350 nm), and a triazine-based ultraviolet absorber that efficiently absorbs wavelengths of 250 to 300 nm, in small quantities. Furthermore, by combining a malonic acid ester-based or oxalic acid anilide-based ultraviolet absorber with a benzophenone-based compound or cyanoacrylate-based compound, which have small absorption in the visible light range and cause little discoloration upon addition, a styrene-based resin composition with excellent initial color tone can be obtained.

In the present embodiment, when initial color tone is considered important, as the ultraviolet absorber (D), an ultraviolet absorber that has small absorption in the visible light range (wavelengths of 380 nm or more) and has absorption in the ultraviolet range (near 250 to 350 nm) are preferred. As the ultraviolet absorber (D), specifically, malonic acid ester-based compounds and oxalic acid anilide-based compounds that only have absorption near 250 to 350 nm are particularly preferred. Additionally, benzophenone-based compounds and cyanoacrylate-based compounds that have small absorption in the visible light range and cause little discoloration upon addition are also preferably used as alternative preferred ultraviolet absorbers (D).

In the present embodiment, the ultraviolet absorbers (D) that can efficiently absorb the ultraviolet absorption peak derived from the aromatic groups of the styrene-based resin in the region (wavelengths of 250 to 300 nm) where ultraviolet absorption enhances during photo-deterioration are effective. Specifically, triazine-based compounds are cited as ultraviolet absorbers (D) that can efficiently absorb wavelengths of 250 to 300 nm. When a triazine-based compound is used as the ultraviolet absorber (D), sufficient effects can be achieved even with a small amount of addition and discoloration of the resin when added can be reduced.

"Monovalent Alcohol (E) with 10 or More Carbon Atoms"

The monovalent alcohol (E) with 10 or more carbon atoms (hereinafter simply referred to as alcohol (E)) in the present embodiment) is an optional component of the styrene-based resin composition, and suppresses the gelling of the styrene-unsaturated carboxylic acid-based resin (A) during molding. It contributes to the styrene-based resin composition with a good appearance and the improvement in the appearance of molded articles made from the styrene-based resin composition, and also imparts a mold release effect upon injection molding. The content of the monovalent alcohol (E) with 10 or more carbon atoms is 0.01 to 1.0 mass%, preferably 0.03 to 0.8 mass%, more preferably 0.05 to 0.6 mass%, and even more preferably 0.07 to 0.5 mass% relative to the total amount (100 mass%) of the styrene-based resin composition. By keeping the content of the monovalent alcohol (E) to 0.01 mass% or more, the gelling of the styrene-unsaturated carboxylic acid-based resin (A) during molding can be suppressed. By keeping the content at 1.0 mass% or less, the decrease in heat resistance and the generation of odor can be minimized. Particularly, when the content of the monovalent alcohol (E) with 10 or more carbon atoms is set to 0.07 to 0.5 mass%, sufficient effects of gelling suppression and mold release can be obtained without incurring a reduction in heat resistance.

When excellent mold release properties are required, particularly for molded articles with complex shapes, the content of the monovalent alcohol (E) with 10 or more carbon atoms is preferably 0.1 to 0.5 mass%, more preferably 0.1 to 0.4 mass%, and even more preferably 0.1 to 0.3 mass% relative to the total amount of the styrene-based resin composition. By maintaining the content of the monovalent alcohol (E) with 10 or more carbon atoms within 0.1 to 0.5 mass%, a styrene-based resin composition with particularly high mold-release effects can be obtained without incurring a reduction in heat resistance. If the content of monovalent alcohol with 10 or more carbon atoms is less than 0.1 mass%, the mold release performance may decrease, particularly for complex-shaped molded articles. If the content exceeds 0.5 mass%, concerns arise, such as reduction in heat resistance and mold contamination.

The monovalent alcohol (E) with 10 or more carbon atoms is an alcohol containing one hydroxyl group and having 10 or more carbon atoms. It may include a heteroatom such as oxygen or nitrogen in the carbon chain constituting the monovalent alcohol (E), and may contain a bond other than single bonds, such as a double bond, triple bond, ester bond, or amide bond, within the carbon chain. The carbon number is preferably 16 or more, more preferably 17 or more, and even more preferably 18 or more and 50 or less. It is sufficient that the monovalent alcohol (E) with 10 or more carbon atoms is contained in the styrene-based resin composition or molded articles made from the styrene-based resin composition. Therefore, by including (or adding) a monohydric alcohol (E) with 10 or more carbon atoms in the polymerization solution used when the styrene-unsaturated carboxylic acid-based resin (A) or the (meth)acrylic resin (B) is polymerized, the monohydric alcohol (E) can be allowed to remain in the resin composition, which is the final product, as a residual component. Alternatively, it can be incorporated by adding it during the kneading of the styrene-unsaturated carboxylic acid-based resin (A) and the (meth)acrylic resin (B) and mixing it in the extruder.

From the viewpoint of the stability of molecular bonds, it is preferable that the carbon chain forming the monovalent alcohol (E) does not contain heteroatoms and is composed only of an alkyl group. Since monovalent alcohols composed solely of an alkyl group exhibit excellent thermal stability and compatibility with styrene-based resins, they exhibit the effect of reducing mold contamination during molding. The number of carbon atoms in the alcohol is preferably 15 or more, more preferably 16 or more, even more preferably 17 or more and 50 or less, and particularly preferably 18 or more and 30 or less.

In the present embodiment, the boiling point of the monovalent alcohol (E) with 10 or more carbon atoms is preferably 260 °C or higher, more preferably 270 °C or higher, and even more preferably 290 °C or higher. If the boiling point of the alcohol is lower than 260 °C, the volatility increases, and there is a tendency for unpleasant odors to occur during molding.

Although the monovalent alcohol (E) with 10 or more carbon atoms is not particularly limited, examples include, for example, 1-hexadecanol, isohexadecanol, 1-octadecanol, 5,7,7-trimethyl-2-(1,3,3-trimethylbutyl)-1-octanol, isooctadecanol, 1-isoicosanol, stearyl alcohol, 8-methyl-2-(4-methylhexyl)-1-decanol, 2-heptyl-1-undecanol, 2-heptyl-4-methyl-1-decanol, 2-(1,5-dimethylhexyl)-5,9-dimethyl-1-decanol, polyoxyethylene alkyl ethers.

The polyoxyethylene alkyl ethers mentioned above are preferably compounds represented by the following general formula (2):

[Chem. 16]

$$R-O-\left(CH_2-CH_2-O\right)_X-H \qquad (2)$$

in the above general formula (2), R represents an alkyl group with 12 to 20 carbon atoms, and X represents the average number of ethylene oxide additions, which is an integer from 1 to 15.

Examples of the specific product names of the preferred alcohol (E) include "FINEOXOCOL 180" manufactured by Nissan Chemical, "KALCOL 8098" manufactured by Kao Corporation, and "EMULGEN 109P" manufactured by Kao Corporation.

"Mold Release Agent (F)"

In a preferred embodiment, the styrene-based resin composition contains a mold release agent (F). The mold release agent (F) can be incorporated as an internal lubricant (F1) by being kneaded into the styrene-based resin composition when it is prepared, or as an external lubricant (F2) by dry blending after granulation of the styrene-based resin composition, or both methods may be combined.

The content of the mold release agent (F) in the styrene-based resin composition is preferably 0.001 to 2.0 mass% relative to the total amount (100 mass%) of the styrene-based resin composition. Preferable upper limits of the content include 1.8 mass% or less, 1.7 mass% or less, 1.6 mass% or less, 1.5 mass% or less, 1.4 mass% or less, 1.3 mass% or less, 1.2 mass% or less, 1.1 mass% or less, 1.0 mass% or less, 0.9 mass% or less, 0.8 mass% or less, 0.7 mass% or less, or 0.6 mass% or less, in descending order of preference. Preferable lower limits include 0.003 mass% or

more, 0.005 mass% or more, 0.007 mass% or more, 0.009 mass% or more, 0.012 mass% or more, 0.031 mass% or more, 0.066 mass% or more, 0.090 mass% or more, 0.11 mass% or more, 0.16 mass% or more, 0.21 mass% or more, 0.26 mass% or more, or 0.31 mass% or more, in ascending order of preference. By keeping the content within the range of 0.001 to 2.0 mass%, a styrene-based resin composition with excellent mold-release properties can be obtained. Particularly, a range of 0.01 to 0.8 mass% results in a styrene-based resin composition with an excellent balance between mold-release properties and heat resistance.

When the molded article has a complex shape and excellent mold-release properties are required, the content of a monovalent alcohol (E) with 10 or more carbon atoms as the mold release agent (F) is preferably 0.1 to 0.5 mass%, more preferably 0.1 to 0.4 mass%, and even more preferably 0.1 to 0.3 mass%, relative to the total amount of the styrene-based resin composition. By maintaining the content of the monovalent alcohol (E) with 10 or more carbon atoms within 0.1 to 0.5 mass%, a styrene-based resin composition with particularly high mold-release effects can be obtained without incurring a reduction in heat resistance.

In the case where the styrene-based resin composition of the present embodiment contains a mold release agent (F) as an internal lubricant (F1), the content of the internal lubricant (F1) is preferably 0.05 to 2.0 mass%, more preferably 0.10 to 1.5 mass%, even more preferably 0.10 to 1.0 mass%, still even more preferably 0.13 to 1.0 mass%, and further preferably 0.17 to 0.8 mass% relative to the total amount (100 mass%) of the styrene-based resin composition. Particularly, by setting the content in the range of 0.13 to 1.0 mass%, it is possible to suppress excessive bleed-out and obtain a styrene-based resin composition with excellent mold release properties.

In cases where the styrene-based resin composition of the present embodiment contains a mold release agent (F) as an external lubricant (F2), the content of the mold release agent as the external lubricant (F2) is preferably 0.005 to 0.5 mass%, more preferably 0.007 to 0.2 mass%, and even more preferably 0.008 to 0.1 mass% relative to the total amount (100 mass%) of the styrene-based resin composition. Particularly, by setting it in the range of 0.008 to 0.1 mass%, it is possible to obtain a styrene-based resin composition that suppresses mold contamination while exhibiting excellent mold release properties.

Examples of the mold release agent (F) include, for example, stearic acid, zinc stearate, calcium stearate, glycerin, monostearate glycerol, distearate glycerol, ethylene bis-stearamide, stearamide, oleamide, erucamide, and hardened castor oil. From the viewpoint of imparting mold-release properties to styrene resins, stearic acid, zinc stearate, and calcium stearate are preferred.

When monostearate glycerol and/or distearate glycerol are used as the mold release agent (F), a styrene-based resin composition with excellent mold-release properties and initial color tone can be obtained. Specific product names of preferred mold release agents (F) include "EXCEL S-95," "EXCEL VS-95," "EXCEL O-95R," "EXCEL P-40," "EXCEL P-40P," "EXCEL 122V," "EXCEL 200," "EXCEL O-95N," "EXCEL O-95F," and "Step SS" manufactured by Kao Corporation, and "RIKEMAL S-100," "RIKEMAL S-100P," and "RIKEMAL H-100" manufactured by Riken Vitamin Co., Ltd. The content of the monostearate glycerol or distearate glycerol used as the mold release agent (F) is 0.01 to 0.5 mass%, more preferably 0.03 to 0.45 mass%, even more preferably 0.05 to 0.4 mass%, still even more preferably 0.05 to 0.35 mass%, further even more preferably 0.08 to 0.30 mass%, further even more preferably 0.10 to 0.30 mass%, and further even more preferably 0.10 to 0.25 mass% relative to the total amount (100 mass%) of the styrene-based resin composition.

When monostearate glycerol or distearate glycerol is contained in an amount of 0.03 to 0.45 mass% relative to the total amount (100 mass%) of the styrene-based resin composition, a styrene-based resin composition with particularly excellent mold-release properties and initial color tone can be obtained.

"Other Components (Additives)"

In addition to the components mentioned above, the styrene-based resin composition of the present embodiment may also contain various additives commonly used in styrene-based resins to obtain a styrene-based resin composition and achieve well-known effects. Examples of such additives include, for example, stabilizers, higher fatty acid-based surfactants, antioxidants, plasticizers, anti-blocking agents, antistatic agents, anti-fogging agents, and mineral oils. Additionally, thermoplastic elastomers such as styrene-maleic anhydride copolymers, methyl methacrylate-butyl acrylate block copolymers, methyl methacrylate-(2-ethylhexyl) acrylate block copolymers, styrene-butadiene block copolymers, as well as a cross-linked material (G), e.g., reinforcing materials such as core-shell-type MBS resin particles, may also be added in the content not impairing the physical properties. There are no specific restrictions on the method of blending the cross-linked material (G) or additives. For example, they may be added upon polymerization followed by performing polymerization, or mixed in advance with a blender before melt-kneading using a blender, followed by melt-kneading in an extruder or Banbury mixer.

When a cross-linked material (G) is used in the present embodiment, the content of the cross-linked material (G) is preferably 3 mass% or less, more preferably 2 mass% or less, even more preferably 1 mass% or less, still even more preferably 0.5 mass% or less, further even more preferably 0.1 mass% or less, particularly preferably 0.05 mass% or less, and more particularly preferably 0.01 mass% or less relative to the total amount of the styrene-based resin composition.

Lowering the amount of the cross-linked material (G) improves transparency.

Other than the above-described reinforcing material, examples of the cross-linked material (G) include cross-linked resin particles composed of copolymers formed by polymerizing one or more monomers selected from the group consisting of (meth)acrylic acid ester monomers, styrene-based monomers, and butadiene.

In particular, from the viewpoint of stability during processing and prevention of thermal degradation, examples of antioxidants include, for example hindered phenol-based antioxidants such as octadecyl 3-(3,5-di-tert-butyl-4-hydroxyphenyl)propionate, 4,6-bis(octylthiomethyl)-o-cresol, bis(3-tert-butyl-4-hydroxy-5-methylbenzene-propanoic acid) ethylene bis(oxyethylene), 2,2'-dimethyl-2,2'-(2,4,8,10-tetraoxaspiro[5.5]undecane-3,9-diyl)dipropane-1, 1'-diyl bis [3-(3-tert-butyl-4-hydroxy-5-methylphenyl)propanoate], 2-{1-[2-hydroxy-3,5-bis(2-methylbutan-2-yl)phenyl]ethyl}-4,6-bis(2-methylb utan-2-yl)phenyl propa-2-enoate, and acrylic acid 2-tert-butyl-6-[(3-tert-butyl-2-hydroxy-5-methylphenyl) methyl]-4-methylphe nyl (product names include, for example, Irganox 1076 and Irganox 245 manufactured by BASF Japan, SUMIRIZER GA-80, SUMIRIZER GS, and SUMIRIZER GM manufactured by Sumitomo Chemical Co., Ltd.), phosphorus-based antioxidants such as tris(2,4-di-tert-butylphenyl) phosphite, 3,9-bis(2,6-di-tert-butyl-4-methylphenoxy)-2,4,8,10-tetraoxa-3,9-diphosphasp iro[5.5]undecane, triphenyl phosphite, triisodecyl phosphite, and 3,9-dioctadecanyl-2,4,8,10-tetraoxa-3,9-diphosphaspiro[5.5]undecane (product names include, for example, Irgafos 168 manufactured by BASF Japan, ADK STAB PEP-36, ADK STAB TPP, ADK STAB 3010, and ADK STAB PEP-8 manufactured by ADEKA Corporation). Additionally, phosphorus-based antioxidants with a hindered phenol backbone, such as 6-[3-(3-t-butyl-4-hydroxy-5-methylphenyl)propoxy]-2,4,8,10-tetra-t-butyl dibenzo[d,f][1,3,2]dioxaphosphaphen (a product name is, for example, SUMIRIZER GP manufactured by Sumitomo Chemical Co., Ltd.), can also be used.

These stabilizers may be used alone or in combination of two or more. There is no particular restriction on the timing of addition; it can be added either during the polymerization step or the devolatilization step. The stabilizer can also be mixed with the product using mechanical equipment such as extruders or mixers.

The (total) content of antioxidants in the styrene-based resin composition of the present embodiment is 0.001 to 1.0 mass% relative to the total amount of the styrene-based resin composition. The preferred lower limit of the addition amount is 0.001 mass% or more, more preferably 0.005 mass% or more, even more preferably 0.008 mass% or more, more preferably 0.01 mass% or more, more preferably 0.05 mass% or more, more preferably 0.08 mass% or more, more preferably 0.1 mass% or more, and more preferably 0.21 mass% or more. The preferred upper limit of the addition amount is 1.0 mass% or less, more preferably 0.9 mass% or less, more preferably 0.8 mass% or less, more preferably 0.7 mass% or less, more preferably 0.6 mass% or less, and more preferably 0.5 mass% or less, and more preferably 0.4 mass% or less. Increasing the content of antioxidants in the styrene-based resin composition reduces the likelihood of degradation of the resin during processing and thermal degradation, but makes the resin more prone to discoloration. Conversely, decreasing the content of antioxidants makes the resin more susceptible to degradation of the resin during processing and thermal degradation, but makes the resin less prone to discoloration.

The (total) content of phenolic antioxidants in the styrene-based resin composition of the present embodiment is 0.001 to 1.0 mass% relative to the total amount of the styrene-based resin composition. The preferred lower limit of the addition amount of phenolic antioxidants is 0.001 mass% or more, more preferably 0.005 mass% or more, more preferably 0.008 mass% or more, more preferably 0.01 mass% or more, more preferably 0.05 mass% or more, more preferably 0.08 mass% or more, more preferably 0.1 mass% or more, and more preferably 0.21 mass% or more. The preferred upper limit of the addition amount is 1.0 mass% or less, more preferably 0.9 mass% or less, more preferably 0.8 mass% or less, more preferably 0.7 mass% or less, more preferably 0.6 mass% or less, more preferably 0.5 mass% or less, and more preferably 0.4 mass% or less. Increasing the content of phenolic antioxidants in the styrene-based resin composition reduces the likelihood of degradation of the resin during processing and thermal degradation, but makes the resin more prone to discoloration. Conversely, decreasing the content of antioxidants makes the resin more susceptible to degradation of the resin during processing and thermal degradation, but makes the resin less prone to discoloration.

The (total) content of phosphorus-based antioxidants in the styrene-based resin composition of the present embodiment is 0.001 to 1.0 mass% relative to the total amount of the styrene-based resin composition. The preferred lower limit of the phosphorus-based antioxidant addition amount is 0.001 mass% or more, more preferably 0.005 mass% or more, even more preferably 0.008 mass% or more, further more preferably 0.01 mass% or more, more preferably 0.05 mass% or more, more preferably 0.08 mass% or more, more preferably 0.1 mass% or more, and more preferably 0.21 mass% or more. The preferred upper limit of the addition amount is 1.0 mass% or less, more preferably 0.9 mass% or less, more preferably 0.8 mass% or less, more preferably 0.7 mass% or less, more preferably 0.6 mass% or less, more preferably 0.5 mass% or less, and more preferably 0.4 mass% or less. Increasing the content of phosphorus-based antioxidants in the styrene-based resin composition reduces the likelihood of degradation of the resin during processing and thermal degradation, but makes the resin more prone to discoloration. Conversely, decreasing the content of antioxidants makes the resin more susceptible to degradation of the resin during processing and thermal degradation, but makes the resin less prone to discoloration.

In the present embodiment, when both phenolic antioxidants and phosphorus-based antioxidants are used, the molar ratio of phenolic antioxidants to phosphorus-based antioxidants is in the range of 5:1 to 1:5, more preferably 4:1 to

1:4, even more preferably 3:1 to 1:3, even more preferably 2:1 to 1:3, even more preferably 1:1 to 1:3, and even more preferably 1:1 to 1:2.8. These ratios are particularly effective in preventing resin discoloration.

In the present embodiment, particularly, when a phenolic antioxidant that can capture and neutralize alkyl radicals generated by light or thermal degradation, such as SUMIRIZER GS (chemical name: 2-[1-(2-hydroxy-3,5-di-tert-pentylphenyl)ethyl]-4,6-di-tert-pentylphenyl acrylate) or SUMIRIZER GM (chemical name: acrylic acid 2-tert-butyl-6-[(3-tert-butyl-2-hydroxy-5-methylphenyl)methyl]-4-methylphe nyl) is used in combination with a phosphorus-based antioxidant, it is possible to significantly improve thermal stability during processing and suppress discoloration of the resin due to thermal degradation, etc.

In the present embodiment, among phosphorus-based antioxidants, Irgafos 168 (chemical name: tris(2,4-di-tert-butylphenyl)phosphite)) has particularly an effect of being excellent in hydrolysis resistance, making it suitable for use with resins that have moisture absorption properties or under high humidity conditions.

Additionally, among phosphorus-based antioxidants, ADK STAB PEP-36 (chemical name: 3,9-bis(2,6-di-tert-butyl-4-methylphenoxy)-2,4,8,10-tetraoxa-3,9-diphosphaspiro[5.5]undecane), ADK STAB TPP (chemical name: triphenyl phosphite), ADK STAB 3010 (chemical name: triisodecyl phosphite), and ADK STAB PEP-8 (chemical name: 3,9-dioctadecyl-1,2,4,8,10-tetraoxa-3,9-diphosphaspiro[5.5]undecane) exhibit high effects in improving thermal stability during processing and are less prone to discoloration.

In the present embodiment, sulfur-based antioxidants can also be used, and examples include dilauryl 3,3'-thiodipropionate, dimyristyl 3,3'-thiodipropionate, distearyl 3,3'-thiodipropionate, pentaerythritol tetrakis(3-laurylthiopropionate), ditridecyl 3,3'-thiodipropionate, and 2-mercaptobenzimidazole.

In the present embodiment, the preferred form for using antioxidants is a combination of a phenolic antioxidant with a hindered phenol structure and a phosphorus-based antioxidant with a phosphite ester structure, wherein the total content of the antioxidants is 0.1 to 0.5 mass%, and the molar ratio of the phenolic antioxidant to the phosphorus-based antioxidant is in the range of preferably phenolic antioxidant : phosphorus-based antioxidant = 1:1 to 1:3. In this case, a styrene-based resin composition with excellent initial color tone and thermal stability can be obtained.

In the present embodiment, the light stabilizer (C) is preferably a compound having a hindered amine structure that can capture and neutralize photoradicals generated when the styrene-based resin composition absorbs ultraviolet rays, thereby preventing degradation and discoloration of the styrene-based resin composition caused by radicals. On the other hand, the antioxidants are classified into phenolic antioxidants with a hindered phenol structure and phosphorus-based antioxidants with a phosphite ester structure. Since it is difficult to strictly classify antioxidants and light stabilizers (C), in this specification, when calculating the content of light stabilizers (C) and/or antioxidants, for example, in the case of an antioxidant that has both a hindered phenol structure and a phosphite ester structure, the addition amount is calculated by counting the amount into both a phenolic antioxidant and a phosphorus-based antioxidant. Similarly, in cases where both a hindered amine structure and a hindered phenol structure are present, the content is similarly calculated by counting it into both a light stabilizer and a phenolic antioxidant.

[Physical Properties of Styrene-based Resin Composition]

The physical properties of the styrene-based resin composition in the present embodiment will be described below.

<Vicat softening temperature>

In the present embodiment, the Vicat softening temperature of the styrene-based resin composition is preferably 105 °C or higher, more preferably 110 °C or higher, even more preferably 115 °C or higher, still even more preferably 118 °C or higher, and further even more preferably 121 °C or higher. Setting the Vicat softening temperature to 105 °C or higher allows molded articles to resist thermal deformation even inside a car during the daytime, and setting it to 110 °C or higher provides molded articles that resist thermal deformation even in the daytime summer heat inside a car. As will be described later, the Vicat softening temperature can be measured under the conditions of a load of 5 kg and a heating rate of 50 °C/h in accordance with ISO 306.

In the present embodiment, it is preferred that the surface scratch hardness of the styrene-based resin composition is H or higher. The surface scratch hardness is measured in accordance with the pencil hardness test specified in JIS K 5600-5-4, under the conditions of a pencil core tip load of 750 g, a pencil angle of 45 degrees, and a scratch speed of 0.5 to 1.0 mm/sec.

When the surface scratch hardness of the styrene-based resin composition is H or higher, it is possible to suppress whitening caused by cracks, scratches, or oil contamination by human hands, for example, when molded articles made from the styrene-based resin composition are used as transparent panels for in-vehicle use (such as transparent covers of speedometers or covers for lighting devices).

<Melt Mass Flow Rate>

In the present embodiment, the melt mass flow rate of the styrene-based resin composition at 200 °C under a load of 5 kg is preferably in the range of 0.1 to 2.0 g/10 min, more preferably 0.2 to 1.5 g/10 min, even more preferably 0.4 to 1.0 g/10 min, and still even more preferably 0.5 to 1.0 g/10 min. A melt mass flow rate of 0.3 g/10 min or more provides good moldability, and a melt mass flow rate of 2.0 g/10 min or less ensures a resin with excellent strength. A melt mass flow rate of 0.5 to 1.0 g/10 min provides a resin with an excellent balance between moldability and strength.

<Content of Conjugated Diene Monomer Unit>

The styrene-based resin composition of the present embodiment may contain a rubber-like polymer that includes conjugated diene monomer units, such as high-impact polystyrene, MBS resin, ABS resin, styrene-based elastomers, or core-shell-type butadiene rubber particles, if needed. In the present embodiment, the content of conjugated diene monomer units derived from high-impact polystyrene, MBS resin, ABS resin, styrene-based elastomers, core-shell-type butadiene rubber particles, etc., is preferably 0 to 25 mass%, more preferably 0 to 10 mass%, more preferably 0.05 to 7 mass%, even more preferably 0.10 to 5 mass%, and still even more preferably 0.20 to 3 mass% relative to the total amount of the styrene-based resin composition. By setting the content of conjugated diene monomer units within the above range, a composition with an excellent balance between transparency and strength can be obtained.

<Styrene Component and Unsaturated Carboxylic Acid Component Content in Styrene-Based Resin Composition>

The styrene-based resin composition in the present embodiment contains styrene components and unsaturated carboxylic acid components. The term "styrene components" as used herein collectively refers to the styrene-based monomer units (1) and styrene-based monomer units included in the other monomers (b2).

On the other hand, "unsaturated carboxylic acid components" collectively refers to the unsaturated carboxylic acid-based monomer units (a1) and the unsaturated carboxylic acid-based monomer units (b2), In other words, it collectively refers to unsaturated carboxylic acid-based monomer units that can be included in the (meth)acrylic acid monomer units (a1-1), the (meth)acrylic acid ester monomer units (a1-2), the (meth)acrylic acid monomer units (b1-1), and the (meth)acrylic acid ester monomer units (b1-2).

In the present embodiment, the content of styrene components relative to the total amount (100 mass%) of the styrene-based resin composition is preferably 50 to 85 mass%, more preferably 55 to 83 mass%, and even more preferably 58 to 80 mass%. By setting the content in the range of 50 to 85 mass%, a styrene-based resin composition with an excellent balance of moldability and heat resistance can be obtained.

In the present embodiment, the content of the unsaturated carboxylic acid components is preferably 10 to 80 mass%, more preferably 20 to 72 mass%, and even more preferably 34 to 51 mass% relative to the total amount (100 mass%) of the styrene-based resin composition. By setting the content of the unsaturated carboxylic acid components in the range of 17 to 50 mass%, a styrene-based resin composition with an excellent balance of heat resistance, oil resistance, and strength can be obtained. Particularly by setting the content to 25 mass% or more, the composition will have resistance against oil at temperatures exceeding 90 °C.

<Composition of (Meth)acrylic Acid Monomer Units in Styrene-Based Resin Composition>

In the present embodiment, it is preferred that the unsaturated carboxylic acid-based monomer units are (meth) acrylic acid monomer units. The content of the (meth)acrylic acid monomer units in the styrene-based resin composition is preferably 2 to 40 mass%, more preferably 3 to 20 mass%, even more preferably 4 to 17 mass%, still even more preferably 8 to 14 mass%, preferably 10 to 13 mass%, even more preferably 10.3 to 13 mass%, , still even more preferably 10.3 to 12.5 mass%, and most preferably 10.5 to 12.5 mass% relative to the total amount (100 mass%) of the styrene-based resin composition. By setting the content of the (meth)acrylic acid monomer units to 2 mass% or more, an effect of improving heat resistance can be achieved, and by setting the content to 40 mass% or less, viscosity can be prevented from excessively increased. Particularly, by setting the content within the range of 10 to 13 mass%, it is possible to obtain a styrene-based resin composition with a high heat resistance improvement effect while also controlling gel formation to a level suitable for transparent sheet applications.

<Composition of (Meth)acrylate Monomer Units in Styrene-Based Resin Composition>

In the present embodiment, it is preferred that the unsaturated carboxylic acid ester monomer units are (meth) acrylic acid methyl monomer units. The content of the (meth)acrylic acid monomer units in the styrene-based resin composition is preferably 6 to 55 mass%, more preferably 10 to 50 mass%, even more preferably 14 to 45 mass%, still even

more preferably 16 to 40 mass%, and further even more preferably 20 to 37 mass% relative to the total amount (100 mass%) of the styrene-based resin composition,. When the content of the (meth)acrylic acid ester monomer units in the composition is within this range, the effects of improving the oil resistance and strength can be sufficiently obtained.

Additionally, when molding properties and low water absorption are considered important, the content of all (meth)acrylic acid methyl monomer units contained in the styrene-based resin composition is preferably 0 to 20 mass%, more preferably 0 to 15 mass%, even more preferably 0 to 10 mass%, and still even more preferably 0 to 6 mass%.

It should be noted that the content of all (meth)acrylic acid ester monomer units refers to the total amount of (meth) acrylic acid ester monomer units present in the styrene-based resin composition, and this includes the content of (meth) acrylic acid ester monomer units in the resin (A), the resin (B), and any other resins optionally added.

<2 mm Plate Haze>

In the present embodiment, the haze (cloudiness) of a 2 mm plate that is a test piece formed from the styrene-based resin composition is preferably 15% or less, more preferably 7% or less, even more preferably 3% or less, and most preferably 1.5% or less. Particularly, when the haze is 3% or less, molded articles with excellent transparency can be obtained.

In the present embodiment, the method for preparing the 2 mm plate is as described in the examples below. The 2 mm plate is formed by injection molding under the following conditions.

Molding machine: EC60N manufactured by Toshiba Machine Co., Ltd.
Cylinder temperature: 220 - 240 - 220 - 200 °C
Measurement: 45 mm
Pressure holding switching: 10 mm
Injection time: 10 seconds
Cooling time: 15 seconds
Injection rate: 23 mm/seconds
Pressure holding rate: 23 mm/seconds
Pressure holding time: 10 seconds
Mold temperature: 45 °C

"Physical properties of styrene-based resin composition"

The styrene-based resin composition of the present embodiment contains the resin (A), the resin (B), the light stabilizer (C), and the UV absorber (D), and the total content of the resin (A) and resin (B) accounts for preferably 65 to 100 mass%, more preferably 75 to 95 mass% of the entire styrene-based resin composition.

The styrene-based resin composition of the present embodiment contains the resin (A), the resin (B), the light stabilizer (C), the UV absorber (D), and additives, and the total content of the resin (A), the resin (B), the light stabilizer (C), the UV absorber (D), and the additives accounts for preferably 70 to 100 mass%, more preferably 80 to 95 mass% of the entire styrene-based resin composition.

The styrene-based resin composition of the present embodiment contains the resin (A), the resin (B), and the resin (C), and the total content of the resin (A), the resin (B), and the resin (C) accounts for preferably 70 to 100 mass%, more preferably 80 mass% or more and 90 mass% or less of the entire styrene-based resin composition.

The styrene-based resin composition of the present embodiment contains the resin (A), the resin (B), the light stabilizer (C), the UV absorber (D), and the monovalent alcohol (E), and the total content of the resin (A), the resin (B), the light stabilizer (C), the UV absorber (D), and the monovalent alcohol (E) accounts for preferably 85 to 100 mass%, more preferably 90 to 95 mass% of the entire styrene-based resin composition.

The styrene-based resin composition of the present embodiment contains the resin (A), the resin (B), the light stabilizer (C), the UV absorber (D), the monovalent alcohol (E), and the mold release agent (F), and the total content of the resin (A), the resin (B), the light stabilizer (C), the UV absorber (D), the monovalent alcohol (E), and the mold release agent (F) accounts for preferably 70 to 100 mass%, more preferably 80 mass% or more and 90 mass% or less of the entire styrene-based resin composition.

The styrene-based resin composition of the present embodiment contains the resin (A), the resin (B), the light stabilizer (C), the UV absorber (D), the monovalent alcohol (E), the mold release agent (F), and additives, and the total content of the resin (A), the resin (B), the light stabilizer (C), the UV absorber (D), the monovalent alcohol (E), the mold release agent (F), and additives accounts for preferably 85 to 100 mass%, more preferably 90 to 95 mass% of the entire styrene-based resin composition.

Particularly Preferred Form of the Styrene-Based Resin Composition

A particularly preferred form of the present embodiment is a styrene-based resin composition including

59 to 89 mass% of a styrene-unsaturated carboxylic acid-based resin (A) having styrene-based monomer units (1) and unsaturated carboxylic acid-based monomer units (a1); and
14 to 90 mass% of a (meth)acrylic resin (B) having unsaturated carboxylic acid-based monomer units (b1); and
0.001 to 2.0 mass% of a light stabilizer (C) and 0.001 to 2.0 mass% of an ultraviolet absorber (D) relative to a total amount (100 mass%) of the styrene-based resin composition,
wherein the content of total styrene monomer units in the styrene-based resin composition is 58.8 to 71.6 mass%,
The (meth)acrylic resin (B) is a copolymer containing methyl methacrylate monomer units and methyl acrylate monomer units, and
the total content of all methyl methacrylate monomer units and all methyl acrylate monomer units in the styrene-based resin composition is 16 to 40 mass% relative to the total styrene-based resin composition.

This provides a styrene-based resin composition that has excellent compatibility with acrylic resins and is suitable for use in molded articles that require excellent weather resistance, mechanical strength, and oil resistance without incurring a reduction in heat resistance and transparency.

[Production Method for Styrene-Based Resin Composition]

In the present embodiment, the method for producing the styrene-based resin composition is not particularly limited to any specific method for blending, melting, kneading, and granulating the raw material components, and methods commonly used for the production of styrene-based resin compositions can be employed. For example, the components described above may be blended (mixed) by a drum tumbler, a HENSCHEL mixer, or the like, melt-kneaded by using a Banbury mixer, a single screw extruder, a twin screw extruder, a kneader, or the like, and granulated by a rotary cutter, a fan cutter, or the like, to thereby obtain a resin composition. The resin temperature of the melt-kneading is preferably 180 to 270 °C. In order to achieve the target resin temperature, the cylinder temperature of the extruder or the like is preferably set to a temperature that is lower than the resin temperature by 10 to 20 °C. A resin temperature is less than 180 °C is not preferable because sufficient mixing cannot be achieved. On the other hand, a resin temperature greater than 270°C is not preferable because thermal decomposition of the resin occurs.

[Molded Article]

The method for producing a molded article using the styrene-based resin composition of the present embodiment is as follows. The styrene-based resin composition can be made into a molded article by the foregoing melt-kneading molding machine, or using obtained pellets of the styrene-based resin composition as a raw material, by injection molding, injection compression molding, extrusion molding, blow molding, press molding, vacuum molding, foam molding, or the like. Among these, the injection molding method is preferable.

<Injection Molded Article>

Another aspect of the present disclosure is a molded article produced by injection molding of the above-described styrene-based resin composition. This molded article exhibits excellent heat resistance, transparency, weather resistance, mechanical strength, and surface hardness, and can be preferably used for in-vehicle use.
Specifically, examples include lighting covers and injection molded articles for in-vehicle use that include styrene-based resin compositions.

EXAMPLES

Next, the present disclosure will be described in more detail with reference to examples and comparative examples. However, the present disclosure is not limited to these examples. The methods for analyzing and evaluating the resin and molded articles used in the examples and comparative examples are described below.

[Evaluation of Properties of Each of the resins and resin compositions]

(1) Measurement of Weight-average Molecular Weight

The weight-average molecular weight (Mw) of each of the resins and resin compositions produced in the examples and comparative examples was measured using gel permeation chromatography (GPC) under the following conditions:

Measurement apparatus: HLC-8220 manufactured by Tosoh Corp.
Fractionation column: Two TSK gel Super HZM-H (inner diameter: 4.6 mm) manufactured by Tosoh Corp., connected in series
Guard column: TSK guard column Super HZ-H manufactured by Tosoh Corp.
Measuring solvent: Tetrahydrofuran (THF)
Sample concentration: After dissolving 5 mg of the sample to be measured in 10 mL of solvent, filtration was carried out with a 0.45 μm filter.
Injection amount: 10 μL
Measuring temperature: 40 °C
Flow rate: 0.35 mL/min
Detector: differential refractometer
Eleven types of TSK standard polystyrene (F-850, F-450, F-128, F-80, F-40, F-20, F-10, F-4, F-2, F-1, A-5000) by Tosoh Corp. were used to construct a calibration curve. The calibration curve was constructed using a first-order approximation.

(2) Measurement of Melt Mass Flow Rate (MFR)

The melt mass flow rate (g/10 min) of each of the resins and resin compositions produced in the examples and comparative examples was measured under the conditions of 200 °C and a load of 49 N according to ISO 1133.

(3) Measurement of Vicat Softening Temperature

The Vicat softening temperature of each of the resins and resin compositions produced in the examples and comparative examples was measured according to ISO 306. The applied load was 50 N, and the heating rate was 50 °C/h. A Vicat softening temperature higher than 105 °C gave the injection molded articles that were less likely to undergo thermal deformation even at high temperatures of 100 °C or higher.

(4) Measurement of Content of Monovalent Alcohol (E) with Carbon Numbers 10 or More and Other Impurities in Styrene-Based Resin Composition

The content of the monovalent alcohol (E) with 10 or more carbon atoms in the total styrene-based resin composition was measured using gas chromatography under the following conditions.
Preparation of sample: 1.0 g of a resin was dissolved in 5 mL of methyl ethyl ketone, then 5 mL of hexane adjusted so that the concentration of p-diethylbenzene (as an internal standard) was to 200 μg/g was added to precipitate the polymer component. The supernatant was taken as the test solution for measurement.

Measurement apparatus: 6850 Series GC System manufactured by Agilent
Detector: FID
Column: DB-WAX

Length: 60 m
Film thickness: 0.50 μm
Diameter: 0.32 mmϕ

Injection amount: 1 μL
Split ratio: 50:1
Column temperature: Held at 100 °C for 5 minutes → heated at 10 °C/min to 130 °C → heated at 10 °C/min to 180 °C → held at 180 °C for 10 minutes → heated at 20 °C/min to 220 °C → held at 220 °C for 10 minutes Inlet temperature: 230 °C
Detector temperature: 300 °C
Carrier gas: Helium

In detecting the peak of the monovalent alcohol (E) with 10 or more carbon atoms, appropriate adjustments of conditions, such as pretreatments, e.g., sample dilution ratios, columns used, and detection conditions, may be made to avoid peak overlaps or saturation of peak intensity.

(5) Measurement of Content of Each Monomer Unit

The content of each monomer unit contained in the resin composition prepared in the examples and comparative examples was measured by pyrolysis GC/MS under the following conditions:

<Measuring Conditions>

Pyrolysis unit

Apparatus: PY-3030D manufactured by Frontier Lab
Furnace temperature: 600 °C
Boundary temperature: 300 °C

GC/MS

Apparatus: GCMS-QP2020NX manufactured by Shimadzu Corporation
Column: Ultra Alloy-5
(Length: 30 m, film thickness: 0.25 μm, diameter: 0.25 mmϕ)
Column temperature: Held at 50 °C for 5 minutes → heated at 10 °C/min → heated at 7 °C/min from 100 °C → held at 300 °C for 10 minutes
Inlet temperature: 300 °C
Detector temperature: 300 °C
Split ratio: 1/300
Carrier gas: Helium
Detection method: Mass spectrometer (MSD)
Sample amount: 50 μg
Detection mode: Scan mode or SIM mode

In detecting each monomer peak, appropriate adjustments of conditions, such as pretreatments, e.g., sample dilution ratios, columns used, and detection conditions, may be made to avoid peak overlaps or saturation of peak intensity.

(6) Measurement of Total Light Transmittance, Haze, and YI (Yellowness Index) of 2 mm Plates

Each resin composition produced in the examples and comparative examples was injection-molded into 2 mm plates. After conditioning in a temperature-controlled room at 23 °C and 50% humidity for more than 48 hours, the haze and YI values were measured using a color-difference haze meter (COH-300A) manufactured by Nippon Denshoku Industries Co., Ltd., and the average of three samples was taken as the final value.

(8) Measurement of YI (Yellowness Index) of 300 mm Long Optical Path Test Pieces with Length of

Each resin composition produced in the examples and comparative examples was injection-molded into 300 mm long optical path test pieces. After conditioning in a temperature-controlled room at 23 °C and 50% humidity for more than 48 hours, the YI was measured using a long optical path spectrophotometer (ASA-1) manufactured by Nippon Denshoku Industries Co., Ltd., and the average of three samples was taken as the final value. In particular, when the initial color tone is important, the YI value in the long optical path is considered important.

(9) Evaluation of Oil Resistance

Each resin composition produced in the examples and comparative examples was injection-molded into 2.5 mm plates. The plates were immersed in coconut oil (manufactured by Wako Pure Chemical Industries, Ltd.) at 100 °C for 15 minutes. Afterward, haze was measured using a haze meter (NDH-2000) manufactured by Nippon Denshoku Industries Co., Ltd. The change in haze (Δ haze) before and after immersion was calculated using the following formula, and the oil

resistance was evaluated according to the evaluation criteria below.

$$\Delta \text{ haze} = \text{Haze after test (\%)} - \text{Haze before test (\%)}$$

<Evaluation Criteria>

◎: Δ haze was less than 1%
O: Δ haze was 1% or more and 3% or less
Δ: Δ haze was more than 3% and 5% or less
X: Δ haze was more than 5%

(10) Measurement of Surface Hardness

Each resin composition produced in the examples and comparative examples was injection-molded into 2 mm plates. The surface hardness was measured according to the scratch hardness test (pencil method) described in JIS K 5600-5-4. The test was performed using a cart adjustable to a pencil core tip load of 750 g, a pencil angle of 45 degrees, and a scratch speed of 0.5 to 1.0 mm/sec. The highest pencil hardness that did not damage the surface was recorded.

(11) Measurement of Plane Impact Strength (kg·cm)

After drying each resin composition produced in the examples and comparative examples in a dryer with ventilation capability at 80 °C for more than 2 hours, the resin compositions were molded into sheets with a thickness of 0.7 mm using a compression molding machine set at 250 °C. The plane impact strength was measured using a film impact tester (No. 195) manufactured by Toyo Seiki Seisaku-sho, Ltd., and the average of eight samples was recorded as the final value.

(12) Weather Resistance Test

Each resin composition produced in the examples and comparative examples was injection-molded into 2 mm plates. Weather resistance tests were conducted using a xenon weather meter (Ci4000) manufactured by Atlas. The test conditions included rain simulation, black panel temperature of 62 °C, and radiation intensity of 0.4 $W/m^2$ at 340 nm. After 1000 hours, the color difference (ΔE) was measured using a color-difference haze meter (COH-300A) manufactured by Nippon Denshoku Industries Co., Ltd., and the average of three samples was recorded as the final value.

[Evaluation of Characteristics of Plate-shaped Molded Articles]

Each resin composition produced in the examples and comparative example was injection-molded into plate-shaped molded articles of 150 mm in vertical length × 300 mm in horizontal length × 3.5 mm in thickness using a mold with a three-point gate and a cylinder temperature of 250 °C, and were subjected to the following evaluations.

(13) Weather Resistance of Injection Molded Articles

The above injection molded articles were placed outdoors at a site 40 meters above sea level, and after 2000 hours, the difference in yellowness index (ΔYI) was measured using a color-difference haze meter (COH-300A) manufactured by Nippon Denshoku Industries Co., Ltd. The average value of three samples was measured, and the following criteria were used for evaluation.

O: ΔYI was less than 1.0
Δ: ΔYI was 1.0 or more and less than 2.0
X: ΔYI was 2.0 or more

(14) Molding Cycleability

The above plate-shaped injection molded articles were molded 300 times. The number of defective products mainly caused by poor mold release was recorded, and was evaluated according to the following criteria.

◎: The number of defective products was 1 or fewer
O: The number of defective products was 2 or 3
Δ: The number of defective products was more than 3 and fewer than 12
×: The number of defective products was 12 or more

(15) Moldability (Flowability)

(15-1) Moldability (Flowability)-1

The moldability (flowability) of the examples and comparative examples was evaluated by molding 2 mm thick plates using an injection molding machine EC60N manufactured by Toshiba Machine Co., Ltd. at a cylinder temperature of 210 °C and mold temperature of 45 °C, and an injection pressure of 60 MPa. The moldability was evaluated based on the following criteria.

O: Moldable without problems
Short: A short shot occurred

(15-2) Moldability (Flowability)-2

The moldability (flowability) of the examples and comparative examples was evaluated using an injection molding machine EC60N manufactured by Toshiba Machine Co., Ltd. at a cylinder temperature of 220 °C and a mold temperature of 45 °C. The minimum injection pressure required to mold a 2 mm thick plate without causing a short shot was evaluated. In this evaluation, a lower injection pressure required for molding indicates that even products with complex shapes or thin portions can be molded without causing short shots at relatively low cylinder temperatures. Molding at lower cylinder temperatures shortens cooling time, reduces volatile components, and reduces the likelihood of mold staining.

(16) Moldability (Water Absorption)

The moldability (flowability) of the examples and comparative examples was evaluated by allowing the pellets to stand at a temperature of 23 °C and humidity of 50% for 24 hours. Subsequently, 20 plates with a thickness of 2 mm were molded using an injection molding machine EC60N manufactured by Toshiba Machine Co., Ltd. at a cylinder temperature of 240 °C, a mold temperature of 45 °C, and an injection pressure of 60 MPa. The number of plates showing silver streaks (caused by moisture in the resin) was evaluated according to the following criteria.

◎: 0 to 1
O: 1 to 4
Δ: 5 to 9
X: 10 or more

(17) Mold Stain upon Injection Molding

Mold staining was evaluated using, as an index, the number of shots until any deposit was observed on the mold after continuous molding when the styrene-based resin composition was injection-molded at 220 °C in accordance with JIS K 7152. The number of shots before mold staining was observed was evaluated according to the following criteria.

O: 100 or more shots
Δ: 50 to 100 shots
X: Less than 50 shots

(18) Surface Appearance of Injection Molded Articles

Ten pieces of the above injection molded articles were molded and were visually observed to evaluate the presence or absence of foreign matter on both surfaces of the molded articles according to the following criteria.

O: 5 or fewer foreign matters
Δ: 5 or more and fewer than 10 foreign matters
X: 10 or more foreign matters

(19) Transparency of Injection Molded Articles

The above injection molded articles were cut into sections of 50 mm in vertical length × 100 mm in horizontal length using an ultrasonic cutter. The haze of the molded articles was measured using a haze meter (NDH-2000) manufactured by Nippon Denshoku Industries Co., Ltd., and the average of three samples was recorded. An evaluation was based on the following criteria.

O: Haze was 3.0% or less
Δ: Haze was more than 3.0% and 5.0% or less
X: Haze was more than 5.0%

(20) Heat Resistance of Injection Molded Articles

The above injection molded articles were placed in a thermostatic chamber set to 115 °C, and they were removed after 30 minutes, and cooled to room temperature. The thermal dimensional change rate in the horizontal direction was measured, and evaluated according to the following criteria.

◎: The dimensional change rate was less than 0.5%
O: The dimensional change rate was 0.5% or more and less than 1%
Δ: The dimensional change rate was 1% or more and less than 7%
X: The dimensional change rate was 7% or more

(21) Scratch Resistance of Injection Molded Article

After the center part of the injection molded article was randomly scratched 20 times with a fingernail, the scratched area was cleaned with methanol. The scratched area was visually observed and evaluated according to the following criteria.

O: No visible scratches were observed
Δ: 1 to 2 visible scratches were observed
X: 3 or more visible scratches were observed

(22) Strength of Injection Molded Article

An injection molded article was cut into a piece of 80 mm in horizontal length × 80 mm in vertical length using an ultrasonic cutter, and film impact was measured using a film impact tester (No. 195) manufactured by Toyo Seiki Seisaku-sho, Ltd. Ten samples were measured and evaluated based on the following criteria.

O: The number of broken samples was 2 or fewer
Δ: The number of broken samples was 3 or more and 5 or fewer
X: The number of broken samples was 6 or more

[Preparation of Resins and Production Examples of Styrene-based Resin Compositions]

The preparation of each resin and the specific method for producing the styrene-based resin compositions will be described below.

<Production Example of Styrene-Unsaturated Carboxylic Acid-based Resin (A)>

- Preparation of Resin a-1 -

A polymerization feed composition consisting of 65.5 parts by mass of styrene (containing 20 μg/g of t-butyl catechol as a polymerization inhibitor), 3.3 parts by mass of methyl methacrylate, 5.8 parts by mass of methacrylic acid (containing 50 μg/g of 4-methoxyphenol as a polymerization inhibitor), 22.9 parts by mass of ethylbenzene, 2.5 parts by mass of 2-ethyl-1-hexanol, and 0.027 parts by mass of 1,1-bis(t-butylperoxy)cyclohexane was continuously supplied at a rate of 0.8 liters/hour to a 3.6-liter complete mixing-type reactor. This mixture was then continuously fed to a devolatilizer, which was connected to a single-screw extruder designed to remove unreacted monomers and volatile components such as polymerization solvents. The polymerization temperature in the complete mixing-type reactor was set to 130 °C. The

temperature of the single-screw extruder was set to 210 to 230 °C, and the pressure to 10 torr to devolatilize the unreacted monomers and polymerization solvents. The volatilized components were condensed using a condenser cooled to -5 °C and collected as unreacted liquid, while the styrene-based resin was recovered as resin pellets. The physical properties of the Resin a-1 obtained through the above-mentioned analysis methods are summarized in Table 1.

- Preparation of Resins a-2, a-3, and a-5 to a-13 -

By adjusting the feed amounts of each monomer and the polymerization conditions, Resins a-2, a-3, and a-5 to a-13 were prepared following a procedure similar to that of Resin a-1. The compositions and physical properties of the obtained resins a-1 to a-3 and a-5 to a-13 are summarized in Table 1.

- Preparation of Resin a-4 -

Using only styrene as the monomer, Resin a-4 was obtained as a styrene homopolymer with the composition and physical properties summarized in Table 1, following similar procedures as described above.

[Table 1]

| Table 1 | | | Resin a-1 | Resin a-2 | Resin a-3 | Resin a-4 | Resin a-5 | Resin a-6 | Resin a-7 | Resin a-8 | Resin a-9 | Resin a-10 | Resin a-11 | Resin a-12 | Resin a-13 |
|---|---|---|---|---|---|---|---|---|---|---|---|---|---|---|---|
| Composition | Styrene monomer unit | mass% | 84.0 | 92.0 | 96.4 | 100.0 | 84.0 | 84.0 | 79.0 | 88.0 | 69.0 | 78.0 | 94.5 | 86.0 | 89.0 |
| | Methacrylic acid monomer unit | mass% | 11.0 | 8.0 | 3.6 | 0.0 | 11.0 | 11.0 | 16.0 | 11.0 | 11.0 | 20.0 | 0.5 | 9 | 11.0 |
| | Methyl methacrylate monomer unit | mass% | 5.0 | 0.0 | 0.0 | 0.0 | 5.0 | 5.0 | 5.0 | 1.0 | 20.0 | 2.0 | 5.0 | 5 | 0.0 |
| Physical properties | Number-average molecular weight Mn | x10,000 | 7.4 | 8.1 | 9.1 | 9.0 | 9.2 | 5.4 | 7.3 | 7.5 | 6.8 | 5.1 | 8.1 | 7.8 | 7.5 |
| | Weight-average molecular weight Mw | x10,000 | 19.4 | 18.5 | 22.5 | 22.0 | 21.8 | 15.2 | 19.1 | 19.6 | 18.8 | 15.1 | 22.1 | 19.8 | 19.6 |
| | Z-average molecular weight Mz | x10,000 | 39.3 | 31.0 | 41.8 | 38.0 | 42.1 | 27.8 | 38.7 | 39.9 | 37.7 | 26.5 | 44.2 | 39.8 | 39.9 |
| | Mw/Mn | - | 2.6 | 2.3 | 2.5 | 2.4 | 2.4 | 2.8 | 2.6 | 2.6 | 2.8 | 3.0 | 2.7 | 2.5 | 2.6 |
| | Mz/Mw | - | 2.0 | 1.7 | 1.9 | 1.7 | 1.9 | 1.8 | 2.0 | 2.0 | 2.0 | 1.8 | 2.0 | 2.0 | 2.0 |
| | Melt mass flow rate | g/10 min | 0.7 | 1.6 | 2.4 | 3.1 | 0.3 | 1.8 | 0.2 | 1 | 0.3 | 0.4 | 2.2 | 1.1 | 0.8 |
| | Vicat softening temperature | °C | 124 | 118 | 109 | 101 | 124 | 123 | 131 | 122 | 124 | 138 | 105.0 | 120 | 120 |

The obtained resins a-1 to a-13 contained impurities, such as residual styrene monomer in the range of approximately 100 to 500 μg/g, ethylbenzene in the range of approximately 10 to 200 μg/g, 2-ethyl-1-hexanol in the range of approximately 30 to 120 μg/g, and styrene dimers and trimers in the range of approximately 1000 to 5000 μg/g. These impurities, derived from the residuals of the above polymerization feedstock composition, were quantified using the same gas chromatography method as used for the quantification of monovalent alcohols (E) with carbon atoms of 10 or more, as previously described.

<Example of Manufacturing (Meth)acrylic Resin-based (B)>

- Preparation of Resin b-1 -

A suspension agent was prepared by adding 2 kg of water, 65 g of calcium phosphate tribasic, 39 g of calcium carbonate, and 0.39 g of sodium lauryl sulfate into a 5 L vessel equipped with a stirrer and then mixing and stirring. Subsequently, 26 kg of water was added to a 60-L reactor, which was heated to 80 °C to prepare for suspension polymerization. After confirming that the temperature had stabilized at 80 °C, 1.56 kg of methyl methacrylate, 0.03 kg of methyl acrylate, 0.99 g of lauroyl peroxide, 4.33 g of n-octyl mercaptan, and the above-described suspension agent were added as polymerization feedstock. Next, suspension polymerization was performed while the temperature was kept at about 80 °C. After the exothermic peak was observed, the temperature was raised to 92 °C at a rate of 1 °C/min, and the temperature was maintained at 92 °C for 60 minutes. Subsequently, the mixture was cooled to 50 °C, and then 20 mass% sulfuric acid was added to dissolve the suspension agent. The polymerized reaction solution was removed from the 60-L reactor, passed through a sieve with a mesh size of 1.7 mm to remove large aggregates, and the solid components were separated using a Buchner funnel to obtain bead-shaped polymer. This bead-shaped polymer was washed on the Buchner funnel using approximately 20 L of distilled water and dehydrated with this washing and dehydrating cycle repeated five times, dried, and pelletized using a single-screw extruder to obtain pelletized Resin b-1.

- Preparation of Resins b-2 to b-8 -

By adjusting the feed amounts of each monomer and polymerization conditions, Resins b-2 to b-8 were prepared following a procedure similar to that of Resin b-1. The compositions and physical properties of the obtained resins b-1 to b-8 are summarized in Table 2.

[Table 2]

| Table 2 | | | Resin b-1 | Resin b-2 | Resin b-3 | Resin b-4 | Resin b-5 | Resin b-6 | Resin b-7 | Resin b-8 |
|---|---|---|---|---|---|---|---|---|---|---|
| Composition | Methyl methacrylate monomer unit | mass% | 98 | 98 | 87 | 94 | 85 | 56 | 80 | 80 |
| | Methyl acrylate monomer unit | mass% | 2 | 2 | 14 | 6 | 0 | 0 | 0 | 2 |
| | (n-butyl) acrylate monomer unit | mass% | 0 | 0 | 0 | 0 | 15 | 0 | 20 | 18 |
| | Styrene monomer unit | mass% | 0 | 0 | 0 | 0 | 0 | 44 | 0 | 0 |
| Physical properties | Number-average molecular weight Mn | x10,000 | 5.1 | 3.1 | 5.6 | 9.1 | 115 | 6.5 | 5.7 | 5.9 |
| | Weight-average molecular weight Mw | x10,000 | 9.7 | 10.4 | 11.4 | 18.0 | 494 | 12.1 | 12.1 | 12.4 |
| | Z-average molecular weight Mz | x10,000 | 14.6 | 19.2 | 18.2 | 27.2 | 873 | 17.2 | 19.4 | 19.6 |
| | Mw/Mn | - | 1.9 | 3.4 | 2.0 | 2.0 | 4.3 | 1.9 | 2.1 | 2.1 |
| | Mz/Mw | - | 1.5 | 1.8 | 1.6 | 1.5 | 1.8 | 1.4 | 1.6 | 1.6 |
| | Vicat softening temperature | ℃ | 105 | 105 | 90 | 100 | 69 | 103 | 57 | 64 |

<<Monovalent Alcohol (E) with 10 or More Carbon Atoms Used in Examples>>

In the examples of this specification, the following types of alcohol were used as the monovalent alcohol (E) with 10 or more carbon atoms.

As a monovalent alcohol (E-1), Fine Oxocol 180 manufactured by Nissan Chemical Corporation (compound name: 5,7,7-trimethyl-2-(1,3,3-trimethylbutyl)-1-octanol) was used.

As a monovalent alcohol (E-2), Kalkol 8098 (compound name: stearyl alcohol) was used.

As a monovalent alcohol (E-3), Emulgen 109P manufactured by Kao Corporation (polyoxyethylene (9) lauryl ether mono alcohol) was used.

The following compounds or products listed in Table 3 and having the chemical structures were used as light stabilizers (C).

[Table 3]

| Table 3 | Compound name or product name | Molecular weight (g/mol) |
|---|---|---|
| Light stabilizer c-1 | Bis(2,2,6,6-tetramethyl-4-piperidyl) sebacate | 481 |
| Light stabilizer c-2 | Bis(1-undecyloxy-2,2,6,6-tetramethylpiperidin-4-yl) carbonate | 681 |
| Light stabilizer c-3 | Tetrakis(2,2,6,6-tetramethyl-4-piperidyl) butane-1,2,3,4-tetracarboxylate | 791 |
| Light stabilizer c-4 | Bis(1,2,2,6,6-pentamethyl-4-piperidyl) sebacate | 792 |
| Light stabilizer c-5 | ADK STAB LA-68 | 1,900 |
| Light stabilizer c-6 | N,N'-1,6-hexanediylbis(N-(2,2,6,6-tetramethylpiperidin-4-yl)formamide) | 451 |

Light Stabilizer c-1:

[Chem. 17]

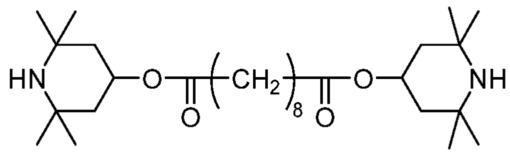

CAS No.: 52829-07-9

Light Stabilizer c-2:

[Chem. 18]

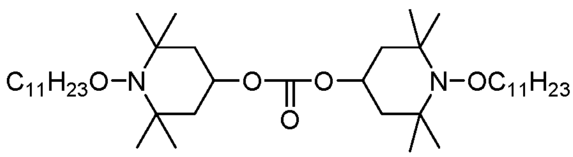

CAS No.: 705257-84-7

Light Stabilizer c-3:

[Chem. 19]

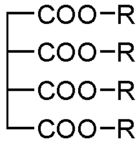

R=

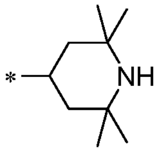

CAS No.: 64022-61-3

Light Stabilizer c-4:

[Chem. 20]

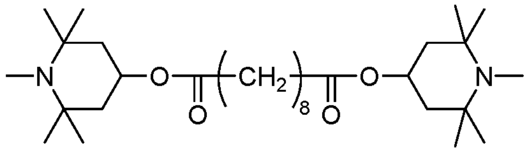

CAS No.: 41556-26-7

Light Stabilizer c-5:

[Chem. 21]

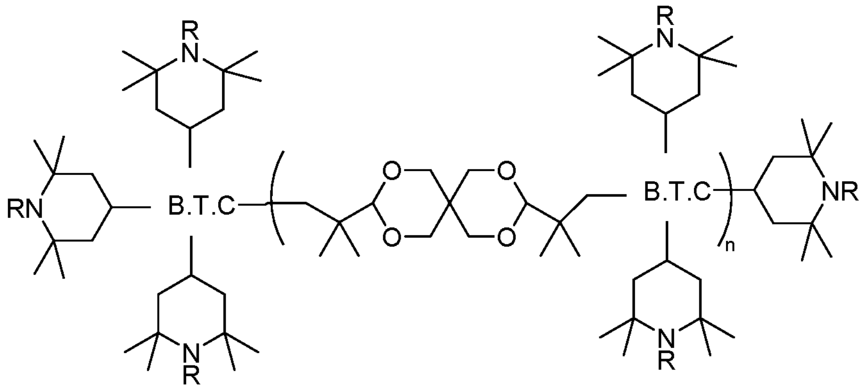

R= $CH_3$ or H

B.T.C.=

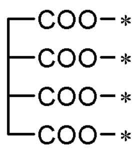

Mixture of CAS Nos.: 101357-37-3 and 85631-01-2

The following compounds or products listed in Table 4 and having the chemical structures were used as ultraviolet absorbers (D).

[Table 4]

| Table 4 | Compound name | Molecular weight (g/mol) | Melting point (°C) |
|---|---|---|---|
| UV absorber (d.1) | 2-(2-Hydroxy-5-methylphenyl) benzotriazole | 225 | 128 |
| UV absorber (d.2) | 2-(2-Hydroxy-5-tert-octylphenyl) benzotriazole | 323 | 104 |
| UV absorber (d.3) | 2-(4,6-Diphenyl-1,3,5-triazin-2-yl)-5-[2-(2-ethylhexanoyloxy)ethoxy] phenol | 512 | 105 |
| UV absorber (d.4) | 2,4,6-Tris(2-hydroxy-4-hexyloxy-3-methylphenyl)-1,3,5-triazine | 700 | 149 |
| UV absorber (d.5) | 2-Hydroxy-4-n-octyloxybenzophenone | 326 | 47 |
| UV absorber (d.6) | 2-(4,6-Diphenyl-1,3,5-triazin-2-yl)-5-(hexyloxy) phenol | 426 | 148 |
| UV absorber (d.7) | 2,2-Bis{[(2-cyano-3,3-diphenylacryloyl)oxy]methyl} propane-1,3-diyl bis(2-cyano-3,3-diphenylacrylate) | 1061 | About 170 |
| UV absorber (d.8) | p-Methoxybenzylidene malonate dimethyl ester | 250 | 55 |
| UV absorber (d.9) | Tetraethyl 2,2'-(1,4-phenylenedimethanilylidene) dimalonate | 418 | 137 |
| UV absorber (d.10) | N-(2-Ethylphenyl)-N'-(2-ethoxyphenyl) oxalamide | 312 | 124 |

Ultraviolet Absorber (d.1):

[Chem. 22]

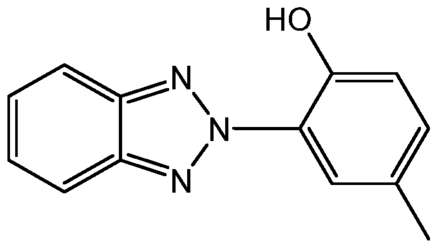

(d.1)

CAS No.: 22440-22-4

Ultraviolet Absorber (d.2):

[Chem. 23]

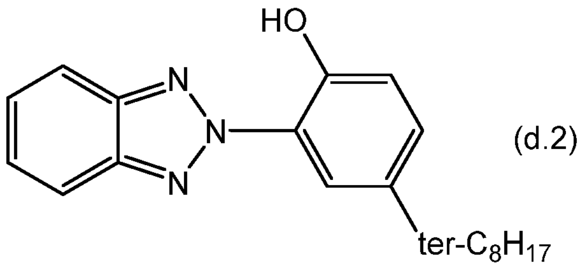

(d.2)

CAS No.: 3147-75-9

Ultraviolet Absorber (d.3):

[Chem. 24]

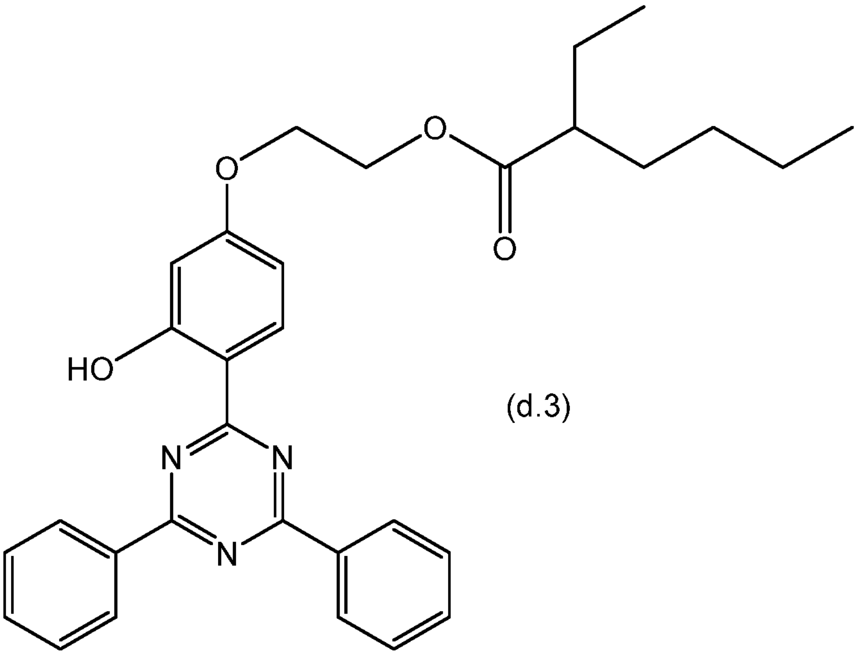

(d.3)

CAS No.: 371146-04-2

Ultraviolet Absorber (d.4):

[Chem. 25]

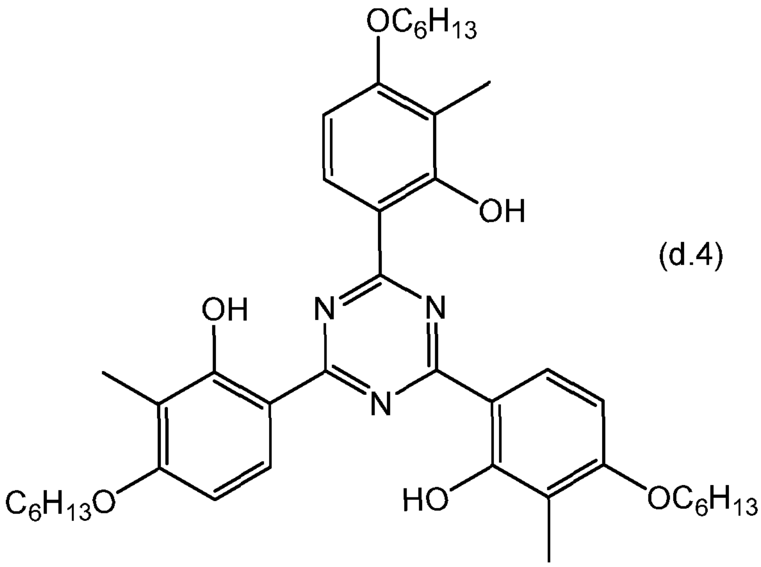

(d.4)

CAS No.: 222529-65-9

Ultraviolet Absorber (d.5):

[Chem. 26]

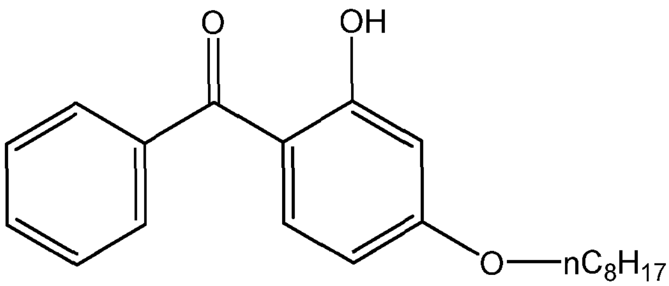

(d.5)

CAS No.: 1843-05-6

Ultraviolet Absorber (d.6):

[Chem. 27]

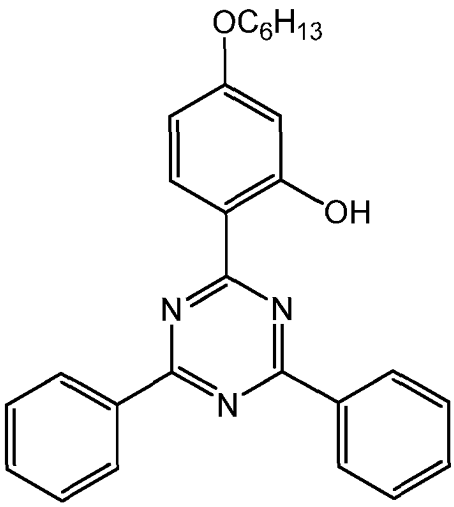

(d.6)

CAS No.: 147315-50-2

Ultraviolet Absorber (d.7):

[Chem. 28]

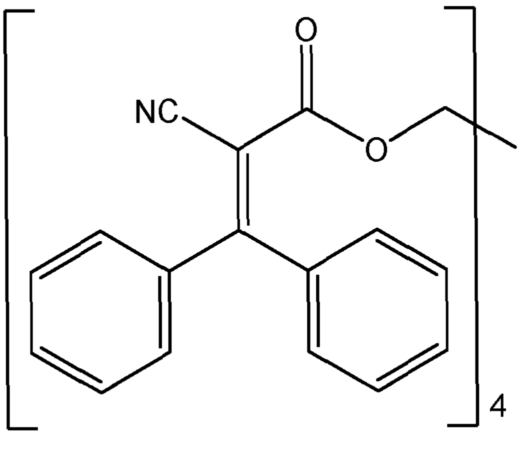

(d.7)

CAS No.: 178671-58-4

Ultraviolet Absorber (d.8):

[Chem. 29]

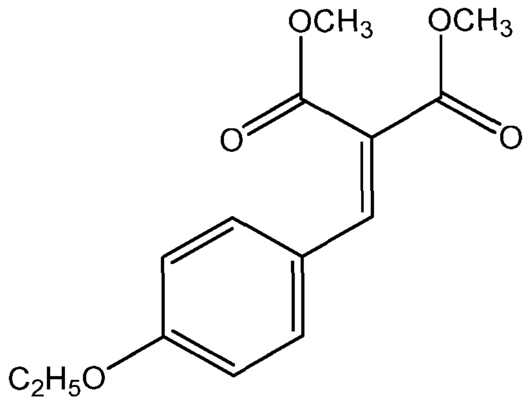

(d.8)

CAS No.: 7443-25-6

Ultraviolet Absorber (d.9):

[Chem. 30]

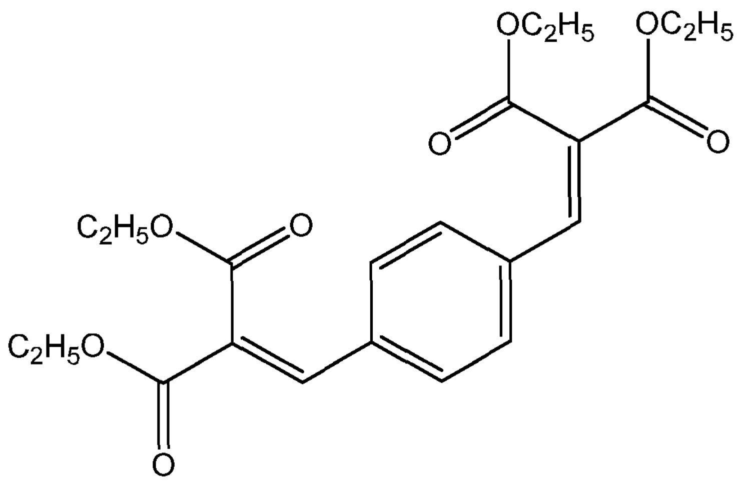

(d.9)

CAS No.: 6337-43-5

Ultraviolet Absorber (d.10):

[Chem. 31]

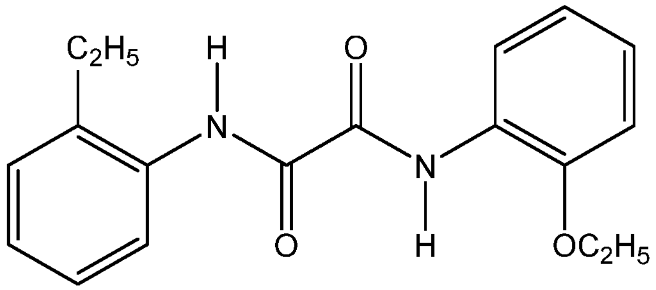

(d.10)

CAS No.: 23949-66-8

The following compounds or products listed in Table 5 were used as mold release agents (F).

[Table 5]

| Table 5 | Compound name | Molecular weight (g/mol) |
|---|---|---|
| Mold release agent f-1 | stearic acid | 284 |
| Mold release agent f-2 | Zinc Stearate | 632 |
| Mold release agent f-3 | calcium stearate (CaSO4) | 607 |
| Mold release agent f-4 | glycerol monostearate | 359 |
| Mold release agent f-5 | Ethylene bisstearate amide | 593 |

<Production Example of Cross-linked Products (G)>

- Preparation of Cross-linked Product g-1 -

Production of MMA-nBA Copolymer Cross-linked Beads (C) that was Unmelted Compound

A 5-L autoclave equipped with a stirrer was charged with 30 parts by mass of methyl methacrylate, 70 parts by mass of n-butyl acrylate, 5 parts by mass of divinylbenzene as a cross-linking agent, 0.2 parts by mass of benzoyl peroxide as a polymerization initiator, 0.001 parts by mass of sodium dodecylbenzene sulfonate as a suspension stabilizer, 0.5 parts by mass of calcium phosphate tribasic, and 200 parts by mass of pure water. The polymerization was carried out at 95 °C for 6 hours and then at 125 °C for 3 hours. After the reaction was completed, washing, dehydration, and drying were performed to obtain Cross-linked product g-1. The average particle diameter of Cross-linked product g-1 was 4 μm, and the refractive index was 1.470.

- Preparation of Cross-linked Product g-2 -

A 5-L autoclave equipped with a stirrer was charged with 50 parts by mass of styrene, 50 parts by mass of methyl methacrylate, 5 parts by mass of divinylbenzene as a cross-linking agent, 0.2 parts by mass of benzoyl peroxide as a polymerization initiator, 0.001 parts by mass of sodium dodecylbenzene sulfonate as a suspension stabilizer, 0.5 parts by mass of calcium phosphate tribasic, and 200 parts by mass of pure water. The polymerization was carried out at 95 °C for 6 hours and then at 125 °C for 3 hours. After the reaction was completed, washing, dehydration, and drying were performed to obtain Cross-linked product g-2. The average particle diameter of Cross-linked product g-2 was 8 μm, and the refractive index was 1.545.

- Preparation of Cross-linked Product g-3 -

A 5-L autoclave equipped with a stirrer was charged with 100 parts by mass of methyl methacrylate, 5 parts by mass of divinylbenzene as a cross-linking agent, 0.2 parts by mass of benzoyl peroxide as a polymerization initiator, 0.001 parts by mass of sodium dodecylbenzene sulfonate as a suspension stabilizer, 0.5 parts by mass of calcium phosphate tribasic, and 200 parts by mass of pure water. The polymerization was carried out at 95 °C for 6 hours and then at 125 °C for 3 hours. After the reaction was completed, washing, dehydration, and drying were performed to obtain Cross-linked product g-3. The average particle diameter of Cross-linked product g-3 was 8 μm, and the refractive index was 1.494.

- Preparation of Cross-linked Product g-4 -

A pressure-resistant container equipped with a stirrer was charged with 200 parts by mass of pure water, 0.008 parts by mass of disodium ethylenediaminetetraacetate, 0.002 parts by mass of sodium polyoxyethylene alkyl ether phosphate, 0.0012 parts by mass of ferric sulfate, and 0.03 parts by mass of disodium ethylenediaminetetraacetate. After degassing, 100 parts by mass of butadiene, 0.05 parts by mass of sodium formaldehyde sulfoxylate, and 0.2 parts by mass of paramethane hydroperoxide were added. Then, 1.4 parts by mass of sodium polyoxyethylene alkyl ether phosphate were dropped into the reaction solution over 6 hours. The reaction solution was maintained at a pH of 6.5 to 7.5 and a temperature of 50 °C for 124 hours to obtain diene-based rubber latex with an average particle diameter of 0.2 μm at a conversion rate of 98% by weight.

Next, while the rubber latex obtained above (approximately 71 parts of solid content) was kept at 60 °C, 55 parts by mass of methyl methacrylate and 5 parts by mass of (n-butyl) acrylate as monomers were adding over the course of one hour. Simultaneously to the addition of the above-described monomers, 0.09 parts by mass of t-butyl hydroperoxide and 0.1 parts by mass of sodium formaldehyde sulfoxylate were added, and the entire amount was added over two hours while the reaction solution was maintained at pH of 6.5 to 7.5 and a temperature of about 60 °C. The reaction solution was maintained at about 60 °C for one hour to obtain graft copolymer latex with an average particle diameter of 200 nm. After 1 part by mass of Irganox 1076 was added as an antioxidant, coagulation treatment was carried out using calcium chloride solution, followed by washing, dehydration, and drying to obtain the powder form of the rubbery polymer cross-linked product (g-4).

Additionally, the following products were used as cross-linked products in the examples and comparative examples, in addition to the cross-linked products mentioned above:

Cross-linked product (g-5): METABLEN W-450A (product name) manufactured by Mitsubishi Chemical Corporation
Cross-linked product (g-6): Techpolymer MBX-5 (product name) manufactured by Sekisui Chemical Co., Ltd.

<<Antioxidants (H) Used in Examples>>

In the examples of this specification, the following two types of antioxidants were used:

- Phenolic antioxidant h-1: Irganox 1076 manufactured by BASF Japan
  Compound name: Octadecyl 3-(3,5-di-tert-butyl-4-hydroxyphenyl)propionate
- Phenolic antioxidant h-2: SUMIRIZER GA-80 manufactured by Sumitomo Chemical Co., Ltd.
  Compound name: 2,2'-Dimethyl-2,2'-(2,4,8,10-tetraoxaspiro[5.5]undecan-3,9-diyl)dipropane-1, 1'-diyl bis[3-(3-tert-butyl-4-hydroxy-5-methylphenyl)propionate]
- Phenolic antioxidant h-3: SUMIRIZER GS manufactured by Sumitomo Chemical Co., Ltd.
  Compound name: 2-[1-(2-Hydroxy-3,5-di-tert-pentylphenyl)ethyl]-4,6-di-tert-pentylphenyl acrylate
- Phosphorus-based antioxidant h-4: Irgafos 168 manufactured by BASF Japan
  Compound name: Tris(2,4-di-tert-butylphenyl)phosphite
- Phosphorus-based antioxidant h-5: ADK STAB PEP-36 manufactured by ADEKA Corporation
  Compound name: 3,9-Bis(2,6-di-tert-butyl-4-methylphenoxy)-2,4,8,10-tetraoxa-3,9-diphosphas piro[5.5]undecane
- Phosphorus-based antioxidant h-6: ADK STAB TPP manufactured by ADEKA Corporation
  Compound name: Triphenyl phosphite
- Phosphorus-based antioxidant h-7: ADK STAB 3010 manufactured by ADEKA Corporation
  Compound name: Triisodecyl phosphite
- Phosphorus-based antioxidant h-8: ADK STAB PEP-8 manufactured by ADEKA Corporation
  Compound name: 3,9-Dioctadecyl-1-yl-2,4,8,10-tetraoxa-3,9-diphosphaspiro[5.5]undecane
- Phosphorus-based antioxidant having hindered phenol skeleton h-9: SUMIRIZER GP manufactured by Sumitomo Chemical Co., Ltd.
  Compound name: 6-[3-(3-tert-Butyl-4-hydroxy-5-methylphenyl)propoxy]-2,4,8,10-tetra-tert-but yl dibenzo[d,f][1,3,2] dioxaphosphhepin

[Table 6]

| Table 6 | Compound name | Molecular weight (g/mol) |
|---|---|---|
| Phenolic antioxidant h-1 | Octadecyl-3-(3,5-ditert-butyl-4-hydroxyphenyl) propionate | 531 |
| Phenolic antioxidant h-2 | 2,2'-Dimethyl-2,2'-(2,4,8,10-tetraoxaspiro[5.5]undecane-3,9-diyl)dipropane-1,1'-diyl bis[3-(3-tert-butyl-4-hydroxy-5-methylphenyl)propanoate] | 741 |
| Phenolic antioxidant h-3 | 2-[1-(2-Hydroxy-3,5-ditert-pentylphenyl)ethyl]-4,6-ditert-pentylphenyl acrylate | 549 |
| Phosphorus-based antioxidants h-4 | Tris(2,4-ditert-butylphenyl) phosphite | 647 |
| Phosphorus-based antioxidants h-5 | 3,9-Bis(2,6-ditert-butyl-4-methylphenoxy)-2,4,8,10-tetraoxa-3,9-diphosphaspiro[5.5]undecane | 633 |
| Phosphorus-based antioxidants h-6 | Triphenyl phosphite | 310 |
| Phosphorus-based antioxidants h-7 | Triisodecyl phosphite | 503 |
| Phosphorus-based antioxidants h-8 | 3,9-Dioctadecyl-2,4,8,10-tetraoxa-3,9-diphosphaspiro[5.5]undecane | 733 |
| Phosphorus-based antioxidant with hindert phenol skeleton h-9 | 6-[3-(3-tert-Butyl-4-hydroxy-5-methylphenyl)propoxy]-2,4,8,10-tetra-tert-butyldibenzo[d,f][1,3,2]dioxaphosphepin | 661 |

<Production Example of Styrene-based Resin Composition>

The detailed production methods of the styrene-based resin compositions will be described below.

- Example 1 -

70.0 parts by mass of Resin a-1 listed in Table 1 as the styrene-unsaturated carboxylic acid-based resin (A), 30.0 parts by mass of Resin b-1 listed in Table 2 as the (meth)acrylic resin (B), 0.12 parts by mass of Light stabilizer c-1 listed in Table 3, i.e., bis(2,2,6,6-tetramethyl-4-piperidyl) sebacate as the light stabilizer (C), 0.08 parts by mass of ultraviolet absorber d-1 listed in Table 4, i.e., 2-(2-hydroxy-5-methylphenyl)benzotriazole as the ultraviolet absorber (D), 0.11 parts by mass of monohydric alcohol (E-1), i.e., Fineoxocol 180 (compound name: 5,7,7-trimethyl-2-(1,3,3-trimethylbutyl)-1-octanol) as the monohydric alcohol (E) with a carbon number of 10 or more, and 0.13 parts by mass of the monohydric alcohol (E-2), i.e., Kalcol 8098 (compound name: stearyl alcohol) were dry-blended. After kneading and extrusion using a twin-screw extruder (TEM26SS) manufactured by Shibaura Machine Co., Ltd., and pelletizing, 0.01 parts by mass of ethylene bisstearamide as the external lubricant (F2) was dry-blended to obtain a styrene-based resin composition (1) in the form of pelletized resin. The screw rotation speed was 150 rpm, the cylinder temperature was 180 to 230 °C, and the feed rate was 10 kg/h. The resin temperature was 250 to 260 °C. The evaluation results of the obtained styrene-based resin composition (1) and molded articles thereof are summarized in Table 7-1.

- Examples 2 to 45 -

Styrene-based resin compositions (2) to (45) and molded articles thereof were obtained in the same manner as in Example 1 except for changing the composition as summarized in Tables 7-1 to 7-3. The evaluation results of each composition and molded article are summarized in Tables 7-1 to 7-3.

[Table 7-1]

| Table 7-1 | | | Ex. 1 | Ex. 2 | Ex. 3 | Ex. 4 | Ex. 5 | Ex. 6 | Ex. 7 | Ex. 8 | Ex. 9 | Ex. 10 | Ex. 11 | Ex. 12 | Ex. 13 | Ex. 14 | Ex. 15 |
|---|---|---|---|---|---|---|---|---|---|---|---|---|---|---|---|---|---|
| Type of each resin | Styrene-based resin (A) | - | a-1 | a-1 | a-1 | a-1 | a-1 | a-1 | a-1 | a-1 | a-1 | a-1 | a-1 | a-1 | a-1 | a-1 | a-1 |
| | (Meth)acrylic resin (B) | - | b-1 | b-1 | b-1 | b-1 | b-1 | b-1 | b-1 | b-1 | b-1 | b-1 | b-1 | b-1 | b-1 | b-1 | b-1 |
| | Light Stabilizer (C) | - | c-1 | c-1 | c-1 | c-1 | c-1 | c-1 | c-1 | c-1 | c-1 | c-1 | c-1 | c-1 | c-1 | c-1 | c-1 |
| | UV absorber (D-1) | - | d-1 | d-1 | d-1 | d-2 | d-3 | d-3 | d-3 | d-4 | d-4 | d-4 | d-5 | d-5 | d-5 | d-1 | d-3 |
| | UV absorber (D-2) | - | - | - | - | - | - | - | - | - | - | - | - | - | - | - | - |
| | Internal Lubricant (F1) | - | - | - | - | - | - | - | - | - | - | - | - | - | - | - | - |
| | External lubricant (F2) | - | f-5 | f-5 | f-5 | f-5 | f-5 | f-5 | f-5 | f-5 | f-5 | f-5 | f-5 | f-5 | f-5 | f-5 | f-5 |
| | Type of cross-linked material (G) | - | - | - | - | - | - | - | - | - | - | - | - | - | - | - | - |
| | Type of antioxidant (H-1) | - | - | - | - | - | - | - | - | - | - | - | - | - | - | - | - |
| | Antioxidant (H-2) | - | - | - | - | - | - | - | - | - | - | - | - | - | - | - | - |
| Formulation | Styrene-based resin (A) | pt by mass | 70 | 70 | 70 | 70 | 70 | 70 | 70 | 70 | 70 | 70 | 70 | 70 | 70 | 85 | 85 |
| | (Meth)acrylic resin (B) | pt by mass | 30 | 30 | 30 | 30 | 30 | 30 | 30 | 30 | 30 | 30 | 30 | 30 | 30 | 15 | 15 |
| | Light stabilizer (C) | pt by mass | 0.12 | 0.30 | 0.60 | 0.30 | 0.12 | 0.30 | 0.60 | 0.12 | 0.30 | 0.60 | 0.12 | 0.30 | 0.60 | 0.30 | 0.30 |
| | UV absorber (D-1) | pt by mass | 0.08 | 0.20 | 0.40 | 0.28 | 0.08 | 0.20 | 0.40 | 0.11 | 0.27 | 0.55 | 0.08 | 0.20 | 0.40 | 0.20 | 0.20 |
| | UV absorber (D-2) | pt by mass | 0.00 | 0.00 | 0.00 | 0.00 | 0.00 | 0.00 | 0.00 | 0.00 | 0.00 | 0.00 | 0.00 | 0.00 | 0.00 | 0.00 | 0.00 |
| | Fine Oxocor 180 (E-1) | pt by mass | 0.11 | 0.11 | 0.11 | 0.11 | 0.11 | 0.11 | 0.11 | 0.11 | 0.11 | 0.11 | 0.11 | 0.11 | 0.11 | 0.13 | 0.13 |
| | Stearyl alcohol (E-2) | pt by mass | 0.13 | 0.13 | 0.13 | 0.13 | 0.13 | 0.13 | 0.13 | 0.13 | 0.13 | 0.13 | 0.13 | 0.13 | 0.13 | 0.11 | 0.11 |
| | Emulgen 109P (E-3) | pt by mass | 0.00 | 0.00 | 0.00 | 0.00 | 0.00 | 0.00 | 0.00 | 0.00 | 0.00 | 0.00 | 0.00 | 0.00 | 0.00 | 0.00 | 0.00 |
| | Internal lubricant (F1) | pt by mass | 0.00 | 0.00 | 0.00 | 0.00 | 0.00 | 0.00 | 0.00 | 0.00 | 0.00 | 0.00 | 0.00 | 0.00 | 0.00 | 0.00 | 0.00 |
| | External lubricant (F2) | pt by mass | 0.01 | 0.01 | 0.01 | 0.01 | 0.01 | 0.01 | 0.01 | 0.01 | 0.01 | 0.01 | 0.01 | 0.01 | 0.01 | 0.01 | 0.01 |
| | Cross-linked body (G) | pt by mass | 0.00 | 0.00 | 0.00 | 0.00 | 0.00 | 0.00 | 0.00 | 0.00 | 0.00 | 0.00 | 0.00 | 0.00 | 0.00 | 0.00 | 0.00 |
| | Antioxidant (H-1) | pt by mass | 0.00 | 0.00 | 0.00 | 0.00 | 0.00 | 0.00 | 0.00 | 0.00 | 0.00 | 0.00 | 0.00 | 0.00 | 0.00 | 0.00 | 0.00 |
| | Antioxidant (H-2) | pt by mass | 0.00 | 0.00 | 0.00 | 0.00 | 0.00 | 0.00 | 0.00 | 0.00 | 0.00 | 0.00 | 0.00 | 0.00 | 0.00 | 0.00 | 0.00 |
| Monomer composition in resin composition | Styrene monomer unit | mass% | 58.5 | 58.4 | 58.1 | 58.3 | 58.5 | 58.4 | 58.1 | 58.5 | 58.3 | 58.0 | 58.5 | 58.4 | 58.1 | 70.9 | 70.9 |
| | Methacrylic acid monomer unit | mass% | 7.7 | 7.6 | 7.6 | 7.6 | 7.7 | 7.6 | 7.6 | 7.7 | 7.6 | 7.6 | 7.7 | 7.6 | 7.6 | 9.3 | 9.3 |
| | Methyl methacrylate monomer unit | mass% | 32.8 | 32.7 | 32.5 | 32.6 | 32.8 | 32.7 | 32.5 | 32.7 | 32.6 | 32.4 | 32.8 | 32.7 | 32.5 | 18.8 | 18.8 |
| | Methyl acrylate monomer unit | mass% | 0.6 | 0.6 | 0.6 | 0.6 | 0.6 | 0.6 | 0.6 | 0.6 | 0.6 | 0.6 | 0.6 | 0.6 | 0.6 | 0.3 | 0.3 |
| | (n-butyl) acrylate monomer unit | mass% | 0.0 | 0.0 | 0.0 | 0.0 | 0.0 | 0.0 | 0.0 | 0.0 | 0.0 | 0.0 | 0.0 | 0.0 | 0.0 | 0.0 | 0.0 |
| | Total (meth)acrylic acid ester monomer units | mass% | 33.4 | 33.3 | 33.1 | 33.2 | 33.4 | 33.3 | 33.1 | 33.3 | 33.2 | 33.0 | 33.4 | 33.3 | 33.1 | 19.1 | 19.1 |
| | Total unsaturated carboxylic acid monomer | mass% | 41.0 | 40.9 | 40.7 | 40.9 | 41.0 | 40.9 | 40.7 | 41.0 | 40.9 | 40.6 | 41.0 | 40.9 | 40.7 | 28.4 | 28.4 |
| Properties of composition | Number-average molecular weight (Mn) | x10,000 | 6.4 | 6.3 | 6.1 | 6.3 | 6.3 | 6.3 | 6.1 | 5.9 | 6.3 | 6.4 | 6.1 | 6.5 | 5.9 | 7.4 | 7.1 |
| | Weight-average molecular weight (Mw) | x10,000 | 16.1 | 16.2 | 16.1 | 16.0 | 16.1 | 16.2 | 16.1 | 16.6 | 16.0 | 16.1 | 16.1 | 16.8 | 16.6 | 17.3 | 17.5 |
| | Z-average molecular weight (Mz) | x10,000 | 29.1 | 29.3 | 30.0 | 29.1 | 29.1 | 31.1 | 30.4 | 29.7 | 29.1 | 29.1 | 30.0 | 32.1 | 29.7 | 32.2 | 31.6 |
| | Mw/Mn | - | 2.5 | 2.6 | 2.6 | 2.5 | 2.6 | 2.6 | 2.6 | 2.8 | 2.5 | 2.5 | 2.6 | 2.6 | 2.8 | 2.3 | 2.5 |
| | Mz/Mw | - | 1.8 | 1.8 | 1.9 | 1.8 | 1.8 | 1.9 | 1.9 | 1.8 | 1.8 | 1.8 | 1.9 | 1.9 | 1.8 | 1.9 | 1.8 |
| | Melt mass flow rate | g/10min | 0.5 | 0.5 | 0.5 | 0.5 | 0.5 | 0.5 | 0.5 | 0.5 | 0.5 | 0.5 | 0.5 | 0.5 | 0.5 | 0.6 | 0.6 |
| | Vicat softening temperature | ℃ | 118 | 118 | 118 | 118 | 118 | 118 | 118 | 118 | 118 | 118 | 118 | 118 | 118 | 120 | 120 |
| | Oil resistance | - | ◎ | ◎ | ◎ | ◎ | ◎ | ◎ | ◎ | ◎ | ◎ | ◎ | ◎ | ◎ | ◎ | ◎ | ◎ |
| | Surface hardness | - | 2H | 2H | 2H | 2H | 2H | 2H | 2H | 2H | 2H | 2H | 2H | 2H | 2H | 2H | 2H |
| | Plane impact strength | kg·cm | 12 | 12 | 12 | 12 | 12 | 12 | 12 | 12 | 12 | 12 | 12 | 12 | 12 | 10 | 10 |
| | Total light transmittance of 2mm plate | % | 91 | 91 | 91 | 91 | 91 | 91 | 91 | 91 | 91 | 91 | 91 | 91 | 91 | 91 | 91 |
| | Haze of 2mm plate | % | 0.3 | 0.3 | 0.3 | 0.3 | 0.3 | 0.3 | 0.3 | 0.3 | 0.3 | 0.3 | 0.3 | 0.3 | 0.3 | 0.3 | 0.3 |
| | YI of 2mm plate | - | 0.9 | 0.9 | 0.9 | 0.9 | 0.9 | 0.9 | 0.9 | 0.9 | 0.9 | 0.9 | 0.9 | 0.9 | 0.9 | 0.9 | 0.9 |
| | YI of 300 mm long optical path test piece | - | 33 | 35 | 39 | 34 | 30 | 32 | 34 | 30 | 32 | 34 | 26 | 28 | 29 | 35 | 32 |
| | Weather resistance test (color difference ΔE after 1000 h of Xe irradiation) | - | 0.6 | 0.4 | 0.3 | 0.4 | 0.4 | 0.2 | 0.2 | 0.4 | 0.2 | 0.2 | 0.6 | 0.4 | 0.3 | 0.6 | 0.4 |
| Evaluation of plate-shaped injection molded products | Weather resistance | - | ○ | ○ | ○ | ○ | ○ | ○ | ○ | ○ | ○ | ○ | ○ | ○ | ○ | ○ | ○ |
| | Heat resistance | - | ○ | ○ | ○ | ○ | ○ | ○ | ○ | ○ | ○ | ○ | ○ | ○ | ○ | ○ | ○ |
| | Scratch resistance | - | ○ | ○ | ○ | ○ | ○ | ○ | ○ | ○ | ○ | ○ | ○ | ○ | ○ | ○ | ○ |
| | Molding Cycleability | - | ○ | ○ | ○ | ○ | ○ | ○ | ○ | ○ | ○ | ○ | ○ | ○ | ○ | ○ | ○ |
| | Formability (flowability)-1 | - | ○ | ○ | ○ | ○ | ○ | ○ | ○ | ○ | ○ | ○ | ○ | ○ | ○ | ○ | ○ |
| | Formability (flowability)-2 | MPa | 56 | 55 | 54 | 55 | 55 | 55 | 54 | 55 | 55 | 54 | 55 | 55 | 54 | 53 | 53 |
| | Formability (water absorption) | - | ○ | ○ | ○ | ○ | ○ | ○ | ○ | ○ | ○ | ○ | ○ | ○ | ○ | ○ | ○ |
| | Mold stain | - | ○ | ○ | ○ | ○ | ○ | ○ | ○ | ○ | ○ | ○ | ○ | ○ | ○ | ○ | ○ |
| | Transparency | - | ○ | ○ | ○ | ○ | ○ | ○ | ○ | ○ | ○ | ○ | ○ | ○ | ○ | ○ | ○ |
| | Surface Appearance | - | ○ | ○ | ○ | ○ | ○ | ○ | ○ | ○ | ○ | ○ | ○ | ○ | ○ | ○ | ○ |
| | Strength | - | ○ | ○ | ○ | ○ | ○ | ○ | ○ | ○ | ○ | ○ | ○ | ○ | ○ | ○ | ○ |

[Table 7-2]

| Table 7-2 | | | Ex. 16 | Ex. 17 | Ex. 18 | Ex. 19 | Ex. 20 | Ex. 21 | Ex. 22 | Ex. 23 | Ex. 24 | Ex. 25. | Ex. 26 | Ex. 27. | Ex. 28. | Ex. 29. | Ex. 30 |
|---|---|---|---|---|---|---|---|---|---|---|---|---|---|---|---|---|---|
| Type of each resin | Styrene-based resin (A) | - | a-1 | a-1 | a-1 | a-1 | a-1 | a-1 | a-1 | a-1 | a-1 | a-1 | a-1 | a-1 | a-1 | a-1 | a-1 |
| | (Meth)acrylic resin (B) | - | b-1 | b-1 | b-1 | b-1 | b-1 | b-1 | b-1 | b-1 | b-1 | b-1 | b-1 | b-1 | b-1 | b-1 | b-1 |
| | Light Stabilizer (C) | - | c-1 | c-1 | c-1 | c-1 | c-2 | c-3 | c-4 | c-5 | c-1 | c-1 | c-1 | c-1 | c-1 | c-1 | c-1 |
| | UV absorber (D-1) | - | d-5 | d-1 | d-3 | d-5 | d-3 | d-3 | d-3 | d-3 | d-3 | d-3 | d-3 | d-3 | d-3 | d-3 | d-3 |
| | UV absorber (D-2) | - | - | - | - | - | - | - | - | - | - | - | - | - | - | - | - |
| | Internal Lubricant (F1) | - | - | - | - | - | - | - | - | - | f-1 | f-2 | f-3 | f-4 | f-1 | - | - |
| | External lubricant (F2) | - | f-5 | f-5 | f-5 | f-5 | f-5 | f-5 | f-5 | f-5 | f-5 | f-5 | f-5 | f-5 | f-5 | f-5 | f-5 |
| | Type of cross-linked material (G) | - | - | - | - | - | - | - | - | - | - | - | - | - | - | - | - |
| | Type of antioxidant (H-1) | - | - | - | - | - | - | - | - | - | - | - | - | - | - | - | - |
| | Antioxidant (H-2) | - | - | - | - | - | - | - | - | - | - | - | - | - | - | - | - |
| Formulation | Styrene-based resin (A) | pt by mass | 85 | 55 | 55 | 70 | 70 | 70 | 70 | 70 | 70 | 70 | 70 | 70 | 70 | 30 | 10 |
| | (Meth)acrylic resin (B) | pt by mass | 15 | 45 | 45 | 30 | 30 | 30 | 30 | 30 | 30 | 30 | 30 | 30 | 30 | 70 | 90 |
| | Light stabilizer (C) | pt by mass | 0.30 | 0.30 | 0.30 | 0.30 | 0.42 | 0.49 | 0.49 | 0.55 | 0.30 | 0.30 | 0.30 | 0.30 | 0.30 | 0.30 | 0.30 |
| | UV absorber (D-1) | pt by mass | 0.20 | 0.20 | 0.20 | 0.20 | 0.20 | 0.20 | 0.20 | 0.20 | 0.20 | 0.20 | 0.20 | 0.20 | 0.20 | 0.20 | 0.20 |
| | UV absorber (D-2) | pt by mass | 0.00 | 0.00 | 0.00 | 0.00 | 0.00 | 0.00 | 0.00 | 0.00 | 0.00 | 0.00 | 0.00 | 0.00 | 0.00 | 0.00 | 0.00 |
| | Fine Oxocor 180 (E-1) | pt by mass | 0.13 | 0.08 | 0.08 | 0.11 | 0.11 | 0.11 | 0.11 | 0.11 | 0.11 | 0.11 | 0.11 | 0.11 | 0.11 | 0.05 | 0.02 |
| | Stearyl alcohol (E-2) | pt by mass | 0.11 | 0.14 | 0.14 | 0.13 | 0.13 | 0.13 | 0.13 | 0.13 | 0.13 | 0.13 | 0.13 | 0.13 | 0.13 | 0.16 | 0.18 |
| | Emulgen 109P (E-3) | pt by mass | 0.00 | 0.00 | 0.00 | 0.00 | 0.00 | 0.00 | 0.00 | 0.00 | 0.00 | 0.00 | 0.00 | 0.00 | 0.00 | 0.00 | 0.00 |
| | Internal lubricant (F1) | pt by mass | 0.00 | 0.00 | 0.00 | 0.00 | 0.00 | 0.00 | 0.00 | 0.00 | 0.20 | 0.20 | 0.20 | 0.10 | 0.60 | 0.00 | 0.00 |
| | External lubricant (F2) | pt by mass | 0.01 | 0.01 | 0.01 | 0.01 | 0.01 | 0.01 | 0.01 | 0.01 | 0.01 | 0.01 | 0.01 | 0.01 | 0.01 | 0.01 | 0.01 |
| | Cross-linked body (G) | pt by mass | 0.00 | 0.00 | 0.00 | 0.00 | 0.00 | 0.00 | 0.00 | 0.00 | 0.00 | 0.00 | 0.00 | 0.00 | 0.00 | 0.00 | 0.00 |
| | Antioxidant (H-1) | pt by mass | 0.00 | 0.00 | 0.00 | 0.00 | 0.00 | 0.00 | 0.00 | 0.00 | 0.00 | 0.00 | 0.00 | 0.00 | 0.00 | 0.00 | 0.00 |
| | Antioxidant (H-2) | pt by mass | 0.00 | 0.00 | 0.00 | 0.00 | 0.00 | 0.00 | 0.00 | 0.00 | 0.00 | 0.00 | 0.00 | 0.00 | 0.00 | 0.00 | 0.00 |
| Monomer composition in resin composition | Styrene monomer unit | mass% | 70.9 | 45.9 | 45.9 | 58.4 | 58.3 | 58.3 | 58.3 | 58.2 | 58.3 | 58.3 | 58.3 | 58.3 | 58.0 | 25.5 | 8.9 |
| | Methacrylic acid monomer unit | mass% | 9.3 | 6.0 | 6.1 | 7.6 | 7.6 | 7.6 | 7.6 | 7.6 | 7.6 | 7.6 | 7.6 | 7.6 | 7.6 | 3.3 | 1.1 |
| | Methyl methacrylate monomer unit | mass% | 18.9 | 46.5 | 46.2 | 32.7 | 32.6 | 32.6 | 32.6 | 32.6 | 32.6 | 32.6 | 32.6 | 32.6 | 32.5 | 69.1 | 87.5 |
| | Methyl acrylate monomer unit | mass% | 0.3 | 0.9 | 0.9 | 0.6 | 0.6 | 0.6 | 0.6 | 0.6 | 0.6 | 0.6 | 0.6 | 0.6 | 0.6 | 1.4 | 1.8 |
| | (n-butyl) acrylate monomer unit | mass% | 0.0 | 0.0 | 0.0 | 0.0 | 0.0 | 0.0 | 0.0 | 0.0 | 0.0 | 0.0 | 0.0 | 0.0 | 0.0 | 0.0 | 0.0 |
| | Total (meth)acrylic acid ester monomer units | mass% | 19.2 | 47.4 | 47.1 | 33.3 | 33.2 | 33.2 | 33.2 | 33.2 | 33.2 | 33.2 | 33.2 | 33.2 | 33.1 | 70.5 | 89.3 |
| | Total unsaturated carboxylic acid monomer | mass% | 28.5 | 53.4 | 53.1 | 40.9 | 40.8 | 40.8 | 40.8 | 40.8 | 40.8 | 40.8 | 40.8 | 40.9 | 40.7 | 73.8 | 90.4 |
| Properties of composition | Number-average molecular weight (Mn) | x10,000 | 7.5 | 6.6 | 6.5 | 6.7 | 6.3 | 6.3 | 6.3 | 6.3 | 6.3 | 6.3 | 6.3 | 6.3 | 6.3 | 6.6 | 5.6 |
| | Weight-average molecular weight (Mw) | x10,000 | 17.0 | 15.2 | 15.4 | 15.2 | 16.2 | 16.0 | 16.1 | 16.0 | 16.2 | 16.2 | 16.2 | 16.2 | 16.2 | 13.2 | 12.2 |
| | Z-average molecular weight (Mz) | x10,000 | 30.1 | 28.4 | 28.2 | 28.5 | 29.3 | 29.1 | 29.1 | 29.1 | 31.1 | 31.1 | 31.1 | 31.1 | 31.1 | 27.4 | 24.4 |
| | Mw/Mn | - | 2.3 | 2.3 | 2.4 | 2.3 | 2.6 | 2.5 | 2.6 | 2.5 | 2.6 | 2.6 | 2.6 | 2.6 | 2.6 | 2.0 | 2.2 |
| | Mz/Mw | - | 1.8 | 1.9 | 1.8 | 1.9 | 1.8 | 1.8 | 1.8 | 1.8 | 1.9 | 1.9 | 1.9 | 1.9 | 1.9 | 2.1 | 2.0 |
| | Melt mass flow rate | g/10min | 0.6 | 0.4 | 0.4 | 0.5 | 0.5 | 0.5 | 0.5 | 0.5 | 0.5 | 0.5 | 0.5 | 0.5 | 0.5 | 0.3 | 0.2 |
| | Vicat softening temperature | ℃ | 120 | 115 | 115 | 115 | 118 | 118 | 118 | 117 | 118 | 118 | 118 | 118 | 115 | 111 | 107 |
| | Oil resistance | - | ◎ | ◎ | ◎ | ◎ | ◎ | ◎ | ◎ | ◎ | ◎ | ◎ | ◎ | ◎ | ◎ | ◎ | ◎ |
| | Surface hardness | - | 2H | 3H | 3H | 3H | 2H | 2H | 2H | 2H | 2H | 2H | 2H | 2H | 2H | 3H | 3H |
| | Plane impact strength | kg-cm | 10 | 14 | 14 | 14 | 12 | 12 | 12 | 12 | 12 | 12 | 12 | 12 | 12 | 12 | 12 |
| | Total light transmittance of 2mm plate | % | 91 | 91 | 91 | 91 | 91 | 91 | 91 | 91 | 91 | 91 | 91 | 91 | 91 | 91 | 91 |
| | Haze of 2mm plate | % | 0.3 | 0.3 | 0.3 | 0.3 | 0.3 | 0.3 | 0.3 | 0.3 | 0.3 | 0.3 | 0.3 | 0.3 | 0.3 | 0.3 | 0.3 |
| | YI of 2mm plate | - | 0.9 | 0.9 | 0.9 | 0.9 | 1.6 | 0.9 | 0.9 | 0.9 | 0.9 | 0.9 | 0.9 | 0.9 | 0.9 | 0.9 | 0.9 |
| | YI of 300 mm long optical path test piece | - | 27 | 34 | 31 | 27 | 47 | 33 | 34 | 34 | 32 | 32 | 32 | 30 | 33 | 32 | 31 |
| | Weather resistance test (color difference ΔE after 1000 h of Xe irradiation) | - | 0.5 | 0.4 | 0.2 | 0.3 | 2.2 | 0.3 | 0.4 | 0.3 | 0.2 | 0.3 | 0.3 | 0.3 | 0.3 | 0.3 | 0.3 |
| Evaluation of plate-shaped injection molded products | Weather resistance | - | ○ | ○ | ○ | ○ | △ | ○ | ○ | ○ | ○ | ○ | ○ | ○ | ○ | ○ | ○ |
| | Heat resistance | - | ○ | ○ | ○ | ○ | ○ | ○ | ○ | ○ | ○ | ○ | ○ | ○ | ○ | ○ | △ |
| | Scratch resistance | - | ○ | ○ | ○ | ○ | ○ | ○ | ○ | ○ | ○ | ○ | ○ | ○ | ○ | ○ | ○ |
| | Molding Cycleability | - | ○ | △ | △ | ○ | ○ | ○ | ○ | ○ | ○ | ○ | ○ | ◎ | ○ | △ | △ |
| | Formability (flowability)-1 | - | ○ | ○ | ○ | ○ | ○ | ○ | ○ | ○ | ○ | ○ | ○ | ○ | ○ | Short | Short |
| | Formability (flowability)-2 | MPa | 53 | 62 | 62 | 55 | 56 | 55 | 55 | 55 | 54 | 54 | 54 | 54 | 53 | 67 | 72 |
| | Formability (water absorption) | - | ○ | △ | △ | ○ | ○ | ○ | ○ | ○ | ○ | ○ | ○ | ○ | ○ | △ | △ |
| | Mold stain | - | ○ | ○ | ○ | ○ | ○ | ○ | ○ | ○ | ○ | ○ | ○ | ○ | △ | ○ | ○ |
| | Transparency | - | ○ | ○ | ○ | ○ | ○ | ○ | ○ | ○ | ○ | ○ | ○ | ○ | ○ | ○ | ○ |
| | Surface Appearance | - | ○ | ○ | ○ | ○ | ○ | ○ | ○ | ○ | ○ | ○ | ○ | ○ | ○ | ○ | ○ |
| | Strength | - | ○ | ○ | ○ | ○ | ○ | ○ | ○ | ○ | ○ | ○ | ○ | ○ | ○ | ○ | ○ |

[Table 7-3]

| Table 7-3 | | | Ex. 31 | Ex. 32 | Ex. 33 | Ex. 34 | Ex. 35 | Ex. 36 | Ex. 37. | Ex. 38. | Ex. 39 | Ex. 40 | Ex. 41 | Ex. 42 | Ex. 43. | Ex. 44. | Ex. 45 |
|---|---|---|---|---|---|---|---|---|---|---|---|---|---|---|---|---|---|
| Type of each resin | Styrene-based resin (A) | - | a-1 | a-1 | a-1 | a-1 | a-1 | a-2 | a-1 | a-2 | a-3 | a-1 | a-1 | a-1 | a-1 | a-1 | a-1 |
| | (Meth)acrylic resin (B) | - | b-2 | b-3 | b-4 | b-5 | b-5 | b-5 | b-6 | b-1 | b-1 | b-1 | b-1 | b-1 | b-1 | b-1 | b-1 |
| | Light Stabilizer (C) | - | c-1 | c-1 | c-1 | c-1 | c-1 | c-1 | c-1 | c-1 | c-1 | c-1 | c-1 | c-1 | c-1 | c-1 | c-1 |
| | UV absorber (D-1) | - | d-3 | d-3 | d-3 | d-3 | d-3 | d-3 | d-3 | d-3 | d-3 | d-3 | d-3 | d-3 | d-3 | d-3 | d-3 |
| | UV absorber (D-2) | - | - | - | - | - | - | - | - | - | - | - | d-1 | d-5 | - | - | d-1 |
| | Internal Lubricant (F1) | - | - | - | - | - | - | - | - | - | - | - | - | - | - | - | - |
| | External lubricant (F2) | - | f-5 | f-5 | f-5 | f-5 | f-5 | f-5 | f-5 | f-5 | f-5 | f-5 | f-5 | f-5 | f-5 | f-5 | f-5 |
| | Type of cross-linked material (G) | - | - | - | - | - | - | - | - | - | - | - | - | - | - | - | - |
| | Type of antioxidant (H-1) | - | - | - | - | - | - | - | - | - | - | - | - | - | h-1 | - | h-1 |
| | Antioxidant (H-2) | - | - | - | - | - | - | - | - | - | - | - | - | - | - | h-4 | h-4 |
| Formulation | Styrene-based resin (A) | pt by mass | 70 | 70 | 70 | 70 | 95 | 95 | 70 | 70 | 70 | 70 | 70 | 70 | 70 | 70 | 70 |
| | (Meth)acrylic resin (B) | pt by mass | 30 | 30 | 30 | 30 | 5 | 5 | 30 | 30 | 30 | 30 | 30 | 30 | 30 | 30 | 30 |
| | Light stabilizer (C) | pt by mass | 0.30 | 0.30 | 0.30 | 0.30 | 0.30 | 0.30 | 0.30 | 0.30 | 0.30 | 1.60 | 0.30 | 0.30 | 0.30 | 0.30 | 0.30 |
| | UV absorber (D-1) | pt by mass | 0.20 | 0.20 | 0.20 | 0.20 | 0.20 | 0.20 | 0.20 | 0.20 | 0.20 | 1.20 | 0.10 | 0.10 | 0.20 | 0.20 | 0.10 |
| | UV absorber (D-2) | pt by mass | 0.00 | 0.00 | 0.00 | 0.00 | 0.00 | 0.00 | 0.00 | 0.00 | 0.00 | 0.00 | 0.10 | 0.10 | 0.00 | 0.00 | 0.10 |
| | Fine Oxocor 180 (E-1) | pt by mass | 0.11 | 0.11 | 0.11 | 0.11 | 0.00 | 0.00 | 0.11 | 0.11 | 0.11 | 0.11 | 0.11 | 0.11 | 0.11 | 0.11 | 0.11 |
| | Stearyl alcohol (E-2) | pt by mass | 0.13 | 0.13 | 0.13 | 0.13 | 0.10 | 0.10 | 0.13 | 0.13 | 0.13 | 0.13 | 0.13 | 0.13 | 0.13 | 0.13 | 0.13 |
| | Emulgen 109P (E-3) | pt by mass | 0.00 | 0.00 | 0.00 | 0.00 | 0.20 | 0.20 | 0.00 | 0.00 | 0.00 | 0.00 | 0.00 | 0.00 | 0.00 | 0.00 | 0.00 |
| | Internal lubricant (F1) | pt by mass | 0.00 | 0.00 | 0.00 | 0.00 | 0.00 | 0.00 | 0.00 | 0.00 | 0.00 | 0.00 | 0.00 | 0.00 | 0.00 | 0.00 | 0.00 |
| | External lubricant (F2) | pt by mass | 0.01 | 0.01 | 0.01 | 0.01 | 0.01 | 0.01 | 0.01 | 0.01 | 0.01 | 0.01 | 0.01 | 0.01 | 0.01 | 0.01 | 0.01 |
| | Cross-linked body (G) | pt by mass | 0.00 | 0.00 | 0.00 | 0.00 | 0.00 | 0.00 | 0.00 | 0.00 | 0.00 | 0.00 | 0.00 | 0.00 | 0.00 | 0.00 | 0.00 |
| | Antioxidant (H-1) | pt by mass | 0.00 | 0.00 | 0.00 | 0.00 | 0.00 | 0.00 | 0.00 | 0.00 | 0.00 | 0.00 | 0.00 | 0.00 | 0.10 | 0.00 | 0.10 |
| | Antioxidant (H-2) | pt by mass | 0.00 | 0.00 | 0.00 | 0.00 | 0.00 | 0.00 | 0.00 | 0.00 | 0.00 | 0.00 | 0.00 | 0.00 | 0.00 | 0.10 | 0.10 |
| Monomer composition in resin composition | Styrene monomer unit | mass% | 58.7 | 58.7 | 58.7 | 58.7 | 79.4 | 86.8 | 71.7 | 64.2 | 67.2 | 57.1 | 58.4 | 58.4 | 58.3 | 58.3 | 58.3 |
| | Methacrylic acid monomer unit | mass% | 7.5 | 7.5 | 7.5 | 7.5 | 10.3 | 7.4 | 7.5 | 5.6 | 2.5 | 7.5 | 7.6 | 7.6 | 7.6 | 7.6 | 7.6 |
| | Methyl methacrylate monomer unit | mass% | 32.5 | 29.0 | 31.3 | 28.6 | 8.8 | 4.2 | 20.1 | 29.0 | 29.0 | 31.9 | 32.7 | 32.7 | 32.6 | 32.6 | 32.6 |
| | Methyl acrylate monomer unit | mass% | 0.6 | 4.0 | 1.8 | 0.0 | 0.0 | 0.0 | 0.0 | 0.6 | 0.6 | 0.6 | 0.6 | 0.6 | 0.6 | 0.6 | 0.6 |
| | (n-butyl) acrylate monomer unit | mass% | 0.0 | 0.0 | 0.0 | 4.5 | 0.7 | 0.7 | 0.0 | 0.0 | 0.0 | 0.0 | 0.0 | 0.0 | 0.0 | 0.0 | 0.0 |
| | Total (meth)acrylic acid ester monomer units | mass% | 33.1 | 33.0 | 33.1 | 33.1 | 9.5 | 4.9 | 20.1 | 29.6 | 29.6 | 32.5 | 33.3 | 33.3 | 33.2 | 33.2 | 33.2 |
| | Total unsaturated carboxylic acid monomer | mass% | 40.6 | 40.5 | 40.6 | 40.6 | 19.8 | 12.3 | 27.6 | 35.1 | 32.1 | 40.0 | 40.9 | 40.9 | 40.9 | 40.9 | 40.8 |
| Properties of composition | Number-average molecular weight (Mn) | x10,000 | 5.7 | 6.2 | 7.6 | 8.5 | 7.6 | 7.9 | 6.6 | 6.7 | 8.7 | 6.1 | 6.3 | 6.3 | 6.3 | 6.3 | 6.3 |
| | Weight-average molecular weight (Mw) | x10,000 | 15.7 | 15.4 | 18.7 | 27.5 | 22.5 | 23.1 | 15.7 | 16.9 | 17.9 | 16.0 | 16.2 | 16.2 | 16.2 | 16.2 | 16.2 |
| | Z-average molecular weight (Mz) | x10,000 | 29.3 | 27.8 | 35.2 | 184.0 | 92.1 | 96.0 | 30.2 | 29.8 | 31.8 | 29.2 | 31.1 | 31.1 | 31.1 | 31.1 | 31.1 |
| | Mw/Mn | - | 2.8 | 2.5 | 2.5 | 3.2 | 3.0 | 2.9 | 2.4 | 2.5 | 2.1 | 2.6 | 2.6 | 2.6 | 2.6 | 2.6 | 2.6 |
| | Mz/Mw | - | 1.9 | 1.8 | 1.9 | 6.7 | 4.1 | 4.2 | 1.9 | 1.8 | 1.8 | 1.8 | 1.9 | 1.9 | 1.9 | 1.9 | 1.9 |
| | Melt mass flow rate | g/10min | 0.5 | 0.5 | 0.4 | 0.2 | 0.3 | 0.4 | 0.5 | 0.6 | 0.5 | 0.5 | 0.5 | 0.5 | 0.5 | 0.5 | 0.5 |
| | Vicat softening temperature | °C | 118 | 113 | 116 | 117 | 118 | 112 | 117 | 114 | 107 | 111 | 118 | 118 | 118 | 118 | 118 |
| | Oil resistance | - | ◎ | ◎ | ◎ | ◎ | ○ | ○ | ◎ | ◎ | ○ | ◎ | ◎ | ◎ | ◎ | ◎ | ◎ |
| | Surface hardness | - | 2H | 2H | 2H | F | H | F | 2H | 2H | F | 2H | 2H | 2H | 2H | 2H | 2H |
| | Plane impact strength | kg·cm | 12 | 12 | 12 | 12 | 12 | 12 | 12 | 12 | 12 | 12 | 12 | 12 | 12 | 12 | 12 |
| | Total light transmittance of 2mm plate | % | 91 | 91 | 91 | 91 | 91 | 91 | 91 | 91 | 82 | 91 | 91 | 91 | 91 | 91 | 91 |
| | Haze of 2mm plate | % | 0.3 | 0.3 | 0.3 | 0.3 | 0.3 | 0.3 | 0.3 | 0.3 | 5 | 0.3 | 0.3 | 0.3 | 0.3 | 0.3 | 0.3 |
| | YI of 2mm plate | - | 0.9 | 0.9 | 0.9 | 0.9 | 0.9 | 0.9 | 0.9 | 0.9 | 1.2 | 0.9 | 0.9 | 0.9 | 0.9 | 0.9 | 0.9 |
| | YI of 300 mm long optical path test piece | - | 33 | 33 | 33 | 34 | 33 | 33 | 33 | 35 | 38 | 41 | 33 | 30 | 35 | 33 | 31 |
| | Weather resistance test (color difference ΔE after 1000 h of Xe irradiation) | - | 0.3 | 0.3 | 0.3 | 0.5 | 1.1 | 1.4 | 1.6 | 1.5 | 1.7 | 0.2 | 0.1 | 0.1 | 0.1 | 0.1 | 0.06 |
| Evaluation of plate-shaped injection molded products | Weather resistance | - | ○ | ○ | ○ | ○ | ○ | ○ | ○ | ○ | ○ | ○ | ○ | ○ | ○ | ○ | ○ |
| | Heat resistance | - | ○ | ○ | ○ | ○ | ○ | ○ | ○ | ○ | Δ | ○ | ○ | ○ | ○ | ○ | ○ |
| | Scratch resistance | - | ○ | ○ | ○ | Δ | ○ | Δ | ○ | ○ | Δ | ○ | ○ | ○ | ○ | ○ | ○ |
| | Molding Cycleability | - | ○ | ○ | ○ | Δ | Δ | Δ | ○ | ○ | ○ | ○ | ○ | ○ | ○ | ○ | ○ |
| | Formability (flowability)-1 | - | ○ | ○ | ○ | Short | ○ | ○ | ○ | ○ | ○ | ○ | ○ | ○ | ○ | ○ | ○ |
| | Formability (flowability)-2 | MPa | 55 | 55 | 58 | 68 | 65 | 62 | 55 | 55 | 55 | 52 | 55 | 55 | 55 | 56 | 56 |
| | Formability (water absorption) | - | ○ | ○ | ○ | ○ | ○ | ○ | ○ | ○ | ○ | ○ | ○ | ○ | ○ | ○ | ○ |
| | Mold stain | - | ○ | ○ | ○ | ○ | Δ | Δ | ○ | ○ | ○ | Δ | ○ | ○ | ○ | ○ | ○ |
| | Transparency | - | ○ | ○ | ○ | ○ | ○ | ○ | ○ | ○ | Δ | ○ | ○ | ○ | ○ | ○ | ○ |
| | Surface Appearance | - | ○ | ○ | ○ | ○ | ○ | ○ | ○ | ○ | ○ | Δ | ○ | ○ | ○ | ○ | ○ |
| | Strength | - | ○ | ○ | ○ | ○ | Δ | Δ | ○ | ○ | Δ | ○ | ○ | ○ | ○ | ○ | ○ |

- Comparative Examples 1 to 6 -

Resin compositions and molded articles thereof of Comparative Examples 1 to 6 were obtained in the same manner as in Example 1 except for changing the composition as summarized in Table 8. The evaluation results of each composition and molded article are summarized in Table 8.

[Table 8]

| Table 8. | | | Com. Ex. 1 | Com. Ex. 2 | Com. Ex. 3 | Com. Ex. 4 | Com. Ex. 5 | Com. Ex. 6 |
|---|---|---|---|---|---|---|---|---|
| Type of each resin | Styrene-based resin (A) | - | a-1 | a-4 | a-1 | a-1 | a-1 | a-1 |
| | (Meth)acrylic resin (B) | - | b-1 | b-1 | b-1 | b-1 | b-1 | b-1 |
| | Light Stabilizer (C) | - | c-1 | c-1 | c-1 | - | - | c-1 |
| | UV absorber (D-1) | - | - | d-1 | d-1 | - | - | - |
| | UV absorber (D-2) | - | - | - | - | - | - | - |
| | Internal Lubricant (F1) | - | f-1 | f-1 | f-1 | - | - | - |
| | External lubricant (F2) | - | f-5 | f-5 | f-5 | f-5 | f-5 | f-5 |
| | Type of cross-linked material (G) | - | - | - | - | - | - | g-1 |
| | Type of antioxidant (H-1) | - | - | - | - | - | h-1 | - |
| | Antioxidant (H-2) | - | - | - | - | - | h-4 | - |
| Formulation | Styrene-based resin (A) | pt by mass | 70 | 70 | 70 | 70 | 70 | 70 |
| | (Meth)acrylic resin (B) | pt by mass | 30 | 30 | 30 | 30 | 30 | 30 |
| | Light stabilizer (C) | pt by mass | 0.30 | 0.30 | 2.50 | 0 | 0 | 0 |
| | UV absorber (D-1) | pt by mass | 0.00 | 0.20 | 2.50 | 0 | 0 | 0 |
| | UV absorber (D-2) | pt by mass | 0.00 | 0.00 | 0.00 | 0 | 0 | 0 |
| | Fine Oxocor 180 (E-1) | pt by mass | 0.10 | 0.10 | 0.10 | 0.11 | 0.11 | 0.11 |
| | Stearyl alcohol (E-2) | pt by mass | 0.00 | 0.00 | 0.00 | 0.13 | 0.13 | 0.13 |
| | Emulgen 109P (E-2) | pt by mass | 0.0 | 0.0 | 0.0 | 0 | 0 | 0 |
| | Internal lubricant (F1) | pt by mass | 0.20 | 0.20 | 0.20 | 0 | 0 | 0 |
| | External lubricant (F2) | pt by mass | 0.01 | 0.01 | 0.01 | 0.01 | 0.01 | 0.01 |
| | Cross-linked body (G) | pt by mass | 0.00 | 0.00 | 0.00 | 0.00 | 0 | 2 |
| | Antioxidant (H-1) | pt by mass | 0.00 | 0.00 | 0.00 | 0.00 | 0.05 | 0.05 |
| | Antioxidant (H-2) | pt by mass | 0.00 | 0.00 | 0.00 | 0.00 | 0.1 | 0.1 |
| Monomer composition in resin composition | Styrene monomer unit | mass% | 58.4 | 69.4 | 55.8 | 58.7 | 58.6 | 57.4 |
| | Methacrylic acid monomer unit | mass% | 7.7 | 0.0 | 7.3 | 7.7 | 7.7 | 7.5 |
| | Methyl methacrylate monomer unit | mass% | 32.7 | 29.2 | 31.2 | 32.8 | 32.8 | 32.1 |
| | Methyl acrylate monomer unit | mass% | 0.6 | 0.6 | 0.6 | 0.6 | 0.6 | 0.6 |
| | (n-butyl) acrylate monomer unit | mass% | 0.0 | 0.0 | 0.0 | 0.0 | 0.0 | 0.0 |
| | Total (meth)acrylic acid ester monomer units | mass% | 33.3 | 29.8 | 31.8 | 33.4 | 33.4 | 32.7 |
| | Total unsaturated carboxylic acid monomer | mass% | 41.0 | 29.8 | 39.1 | 41.1 | 41.0 | 40.2 |
| Monomer composition | Methacrylic acid monomer unit | mass% | 7.7 | 0.0 | 7.7 | 7.7 | 7.7 | 7.7 |
| | Methyl methacrylate monomer unit | mass% | 32.9 | 29.4 | 32.9 | 32.9 | 32.9 | 32.9 |
| | Methyl acrylate monomer unit | mass% | 0.6 | 0.6 | 0.6 | 0.6 | 0.6 | 0.6 |
| | (n-butyl) acrylate monomer unit | mass% | 0.0 | 0.0 | 0.0 | 0 | 0 | 0 |
| | Total (meth)acrylic acid ester monomer units | mass% | 33.5 | 30.0 | 33.5 | 33.5 | 33.5 | 33.5 |
| | Total unsaturated carboxylic acid monomer | mass% | 41.2 | 30.0 | 41.2 | 41.2 | 41.2 | 41.2 |
| Properties of composition | Number-average molecular weight (Mn) | x10,000 | 6.3 | 6.3 | 6.3 | 6.4 | 6.4 | 6.4 |
| | Weight-average molecular weight (Mw) | x10,000 | 16.2 | 16.2 | 16.2 | 16.1 | 16.1 | 16.1 |
| | Z-average molecular weight (Mz) | x10,000 | 31.1 | 29.3 | 29.3 | 29.1 | 29.1 | 29.1 |
| | Mw/Mn | - | 2.6 | 2.6 | 2.6 | 2.5 | 2.5 | 2.5 |
| | Mz/Mw | - | 1.9 | 1.8 | 1.8 | 1.8 | 1.8 | 1.8 |
| | Melt mass flow rate | g/10min | 0.5 | 2.5 | 1.4 | 0.7 | 0.7 | 0.5 |
| | Vicat softening temperature | ℃ | 118 | 99 | 104 | 118 | 118 | 118 |
| | Oil resistance | - | ◎ | × | × | ◎ | ◎ | ◎ |
| | Surface hardness | - | 2H | HB | F | 2H | 2H | 2H |
| | Plane impact strength | kg·cm | 12 | 12 | 8 | 12 | 12 | 11 |
| | Total light transmittance of 2mm plate | % | 91 | 50 | 80 | 91 | 91 | 79 |
| | Haze of 2mm plate | % | 0.3 | 80 | 10 | 0.3 | 0.3 | 45.5 |
| | YI of 2mm plate | - | 0.9 | 3 | 4 | 0.9 | 0.9 | 3.5 |
| | YI of 300 mm long optical path test piece | - | 35 | 55 | 43 | 24 | 25 | 58 |
| | Weather resistance test (color difference ΔE after 1000 h of Xe irradiation) | - | 12.1 | - | 0.2 | 17.9 | 7.2 | 11.8 |
| Evaluation of plate-shaped injection molded products | Weather resistance | - | × | - | ○ | × | × | × |
| | Heat resistance | - | ○ | × | × | ○ | ○ | ○ |
| | Scratch resistance | - | ○ | × | △ | ○ | ○ | ○ |
| | Molding Cycleability | - | ○ | × | ○ | ○ | ○ | ○ |
| | Formability (flowability)-1 | - | ○ | ○ | ○ | ○ | ○ | ○ |
| | Formability (flowability)-2 | MPa | 55 | 41 | 45 | 55 | 55 | 62 |
| | Formability (water absorption) | - | ○ | ◎ | ○ | ○ | ○ | ○ |
| | Mold stain | - | ○ | ○ | × | ○ | ○ | ○ |
| | Transparency | - | ○ | × | × | ○ | ○ | × |
| | Surface Appearance | - | ○ | ○ | × | ○ | ○ | ○ |
| | Strength | - | ○ | × | ○ | ○ | ○ | ○ |

- Examples 46 to 135 -

Styrene-based resin compositions (46) to (135) and molded articles thereof were obtained in the same manner as in Example 1 except for changing the composition as summarized in Tables 9-1 to 10-3. The evaluation results of each composition and molded article are summarized in Tables 9-1 to 10-3.

[Table 9-1]

| Table 9-1 | | | Ex. 46. | Ex. 47. | Ex. 48. | Ex. 49 | Ex. 50 | Ex. 51 | Ex. 52 | Ex. 53 | Ex. 54. | Ex. 55. | Ex. 56. | Ex. 57. | Ex. 58. | Ex. 59. | Ex. 60. |
|---|---|---|---|---|---|---|---|---|---|---|---|---|---|---|---|---|---|
| Type of each resin | Styrene-based resin (A) | - | a-1 | a-1 | a-1 | a-1 | a-1 | a-1 | a-1 | a-1 | a-1 | a-1 | a-1 | a-1 | a-1 | a-1 | a-1 |
| | (Meth)acrylic resin (B) | - | b-1 | b-1 | b-1 | b-1 | b-1 | b-1 | b-1 | b-1 | b-1 | b-1 | b-1 | b-1 | b-1 | b-1 | b-1 |
| | Light Stabilizer (C) | - | c-1 | c-1 | c-1 | c-1 | c-1 | c-1 | c-1 | c-1 | c-1 | c-1 | - | - | - | - | - |
| | UV absorber (D-1) | - | d-6 | d-7 | d-8 | d-9 | d-10 | d-9 | d-9 | d-9 | d-9 | d-9 | d-9 | d-10 | d-5 | d-6 | d-9 |
| | UV absorber (D-2) | - | - | - | - | - | - | - | - | - | - | - | - | - | - | - | - |
| | Internal Lubricant (F1) | - | - | - | - | - | - | - | - | - | - | - | - | - | - | - | - |
| | External lubricant (F2) | - | f-5 | f-5 | f-5 | f-5 | f-5 | f-5 | f-5 | f-5 | f-5 | f-5 | f-5 | f-5 | f-5 | f-5 | f-5 |
| | Type of cross-linked material (G) | - | - | - | - | - | - | - | - | - | - | - | - | - | - | - | - |
| | Type of antioxidant (H-1) | - | - | - | - | - | - | h-1 | h-3 | h-1 | h-2 | h-2 | - | - | - | - | h-1 |
| | Antioxidant (H-2) | - | - | - | - | - | - | h-4 | h-4 | h-5 | h-4 | h-9 | - | - | - | - | h-4 |
| Formulation | Styrene-based resin (A) | pt by mass | 70 | 70 | 70 | 70 | 70 | 70 | 70 | 70 | 70 | 70 | 70 | 70 | 70 | 70 | 70 |
| | (Meth)acrylic resin (B) | pt by mass | 30 | 30 | 30 | 30 | 30 | 30 | 30 | 30 | 30 | 30 | 30 | 30 | 30 | 30 | 30 |
| | Light stabilizer (C) | pt by mass | 0.3 | 0.3 | 0.3 | 0.3 | 0.3 | 0.3 | 0.3 | 0.3 | 0.3 | 0.3 | 0 | 0 | 0 | 0 | 0 |
| | UV absorber (D-1) | pt by mass | 0.2 | 0.2 | 0.2 | 0.2 | 0.2 | 0.2 | 0.2 | 0.2 | 0.2 | 0.2 | 0.2 | 0.2 | 0.2 | 0.2 | 0.2 |
| | UV absorber (D-2) | pt by mass | 0 | 0 | 0 | 0 | 0 | 0 | 0 | 0 | 0 | 0 | 0 | 0 | 0 | 0 | 0 |
| | Fine Oxocor 180 (E-1) | pt by mass | 0.11 | 0.11 | 0.11 | 0.11 | 0.11 | 0.11 | 0.11 | 0.11 | 0.11 | 0.11 | 0.11 | 0.11 | 0.11 | 0.11 | 0.11 |
| | Stearyl alcohol (E-2) | pt by mass | 0.13 | 0.13 | 0.13 | 0.13 | 0.13 | 0.13 | 0.13 | 0.13 | 0.13 | 0.13 | 0.13 | 0.13 | 0.13 | 0.13 | 0.13 |
| | Emulgen 109P (E-3) | pt by mass | 0 | 0 | 0 | 0 | 0 | 0 | 0 | 0 | 0 | 0 | 0 | 0 | 0 | 0 | 0 |
| | Internal lubricant (F1) | pt by mass | 0 | 0 | 0 | 0 | 0 | 0 | 0 | 0 | 0 | 0 | 0 | 0 | 0 | 0 | 0 |
| | External lubricant (F2) | pt by mass | 0.01 | 0.01 | 0.01 | 0.01 | 0.01 | 0.01 | 0.01 | 0.01 | 0.01 | 0.01 | 0.01 | 0.01 | 0.01 | 0.01 | 0.01 |
| | Cross-linked body (G) | pt by mass | 0 | 0 | 0 | 0 | 0 | 0 | 0 | 0 | 0 | 0 | 0 | 0 | 0 | 0 | 0 |
| | Antioxidant (H-1) | pt by mass | 0 | 0 | 0 | 0 | 0 | 0.05 | 0.05 | 0.05 | 0.05 | 0.05 | 0 | 0 | 0 | 0 | 0.05 |
| | Antioxidant (H-2) | pt by mass | 0 | 0 | 0 | 0 | 0 | 0.1 | 0.1 | 0.1 | 0.1 | 0.1 | 0 | 0 | 0 | 0 | 0.1 |
| Monomer composition in resin composition | Styrene monomer unit | mass% | 58.4 | 58.4 | 58.4 | 58.4 | 58.4 | 58.3 | 58.3 | 58.3 | 58.3 | 58.3 | 58.5 | 58.5 | 58.5 | 58.5 | 58.4 |
| | Methacrylic acid monomer unit | mass% | 7.6 | 7.6 | 7.6 | 7.6 | 7.6 | 7.6 | 7.6 | 7.6 | 7.6 | 7.6 | 7.7 | 7.7 | 7.7 | 7.7 | 7.7 |
| | Methyl methacrylate monomer unit | mass% | 32.7 | 32.7 | 32.7 | 32.7 | 32.7 | 32.6 | 32.6 | 32.6 | 32.6 | 32.6 | 32.8 | 32.8 | 32.8 | 32.8 | 32.7 |
| | Methyl acrylate monomer unit | mass% | 0.6 | 0.6 | 0.6 | 0.6 | 0.6 | 0.6 | 0.6 | 0.6 | 0.6 | 0.6 | 0.6 | 0.6 | 0.6 | 0.6 | 0.6 |
| | (n-butyl) acrylate monomer unit | mass% | 0 | 0 | 0 | 0 | 0 | 0 | 0 | 0 | 0 | 0 | 0 | 0 | 0 | 0 | 0 |
| | Total (meth)acrylic acid ester monomer units | mass% | 33.3 | 33.3 | 33.3 | 33.3 | 33.3 | 33.2 | 33.2 | 33.2 | 33.2 | 33.2 | 33.3 | 33.3 | 33.3 | 33.3 | 33.3 |
| | Total unsaturated carboxylic acid monomer | mass% | 40.9 | 40.9 | 40.9 | 40.9 | 40.9 | 40.8 | 40.8 | 40.8 | 40.8 | 40.8 | 41.0 | 41.0 | 41.0 | 41.0 | 41.0 |
| Monomer composition | Styrene monomer unit | mass% | 58.8 | 58.8 | 58.8 | 58.8 | 58.8 | 58.8 | 58.8 | 58.8 | 58.8 | 58.8 | 58.8 | 58.8 | 58.8 | 58.8 | 58.8 |
| | Methacrylic acid monomer unit | mass% | 7.7 | 7.7 | 7.7 | 7.7 | 7.7 | 7.7 | 7.7 | 7.7 | 7.7 | 7.7 | 7.7 | 7.7 | 7.7 | 7.7 | 7.7 |
| | Methyl methacrylate monomer unit | mass% | 32.9 | 32.9 | 32.9 | 32.9 | 32.9 | 32.9 | 32.9 | 32.9 | 32.9 | 32.9 | 32.9 | 32.9 | 32.9 | 32.9 | 32.9 |
| | Methyl acrylate monomer unit | mass% | 0.6 | 0.6 | 0.6 | 0.6 | 0.6 | 0.6 | 0.6 | 0.6 | 0.6 | 0.6 | 0.6 | 0.6 | 0.6 | 0.6 | 0.6 |
| | (n-butyl) acrylate monomer unit | mass% | 0 | 0 | 0 | 0 | 0 | 0 | 0 | 0 | 0 | 0 | 0 | 0 | 0 | 0 | 0 |
| | Total (meth)acrylic acid ester monomer units | mass% | 33.5 | 33.5 | 33.5 | 33.5 | 33.5 | 33.5 | 33.5 | 33.5 | 33.5 | 33.5 | 33.5 | 33.5 | 33.5 | 33.5 | 33.5 |
| | Total unsaturated carboxylic acid monomer | mass% | 41.2 | 41.2 | 41.2 | 41.2 | 41.2 | 41.2 | 41.2 | 41.2 | 41.2 | 41.2 | 41.2 | 41.2 | 41.2 | 41.2 | 41.2 |
| Properties of composition | Number-average molecular weight (Mn) | x10,000 | 6.4 | 6.3 | 6.2 | 6.3 | 6.4 | 6.4 | 6.4 | 6.4 | 6.4 | 6.4 | 6.4 | 6.4 | 6.4 | 6.4 | 6.4 |
| | Weight-average molecular weight (Mw) | x10,000 | 16.3 | 16.3 | 16.2 | 16.4 | 16.5 | 16.5 | 16.5 | 16.5 | 16.5 | 16.5 | 16.5 | 16.5 | 16.5 | 16.5 | 16.5 |
| | Z-average molecular weight (Mz) | x10,000 | 29.5 | 29.7 | 29.3 | 29.2 | 29.5 | 29.5 | 29.5 | 29.5 | 29.5 | 29.5 | 29.5 | 29.5 | 29.5 | 29.5 | 29.5 |
| | Mw/Mn | - | 2.5 | 2.6 | 2.6 | 2.6 | 2.6 | 2.6 | 2.6 | 2.6 | 2.6 | 2.6 | 2.6 | 2.6 | 2.6 | 2.6 | 2.6 |
| | Mz/Mw | - | 1.8 | 1.8 | 1.8 | 1.8 | 1.8 | 1.8 | 1.8 | 1.8 | 1.8 | 1.8 | 1.8 | 1.8 | 1.8 | 1.8 | 1.8 |
| | Melt mass flow rate | g/10min | 0.5 | 0.5 | 0.5 | 0.5 | 0.5 | 0.5 | 0.5 | 0.5 | 0.5 | 0.5 | 0.5 | 0.5 | 0.5 | 0.5 | 0.5 |
| | Vicat softening temperature | ℃ | 118 | 118 | 118 | 118 | 118 | 118 | 118 | 118 | 118 | 118 | 118 | 118 | 118 | 118 | 118 |
| | Oil resistance | - | ◎ | ◎ | ◎ | ◎ | ◎ | ◎ | ◎ | ◎ | ◎ | ◎ | ◎ | ◎ | ◎ | ◎ | ◎ |
| | Surface hardness | - | 2H | 2H | 2H | 2H | 2H | 2H | 2H | 2H | 2H | 2H | 2H | 2H | 2H | 2H | 2H |
| | Plane impact strength | kg·cm | 12 | 12 | 12 | 12 | 12 | 12 | 12 | 12 | 12 | 12 | 12 | 12 | 12 | 12 | 12 |
| | Total light transmittance of 2mm plate | % | 91 | 91 | 91 | 91 | 91 | 91 | 91 | 91 | 91 | 91 | 91 | 91 | 91 | 91 | 91 |
| | Haze of 2mm plate | % | 0.3 | 0.3 | 0.3 | 0.3 | 0.3 | 0.3 | 0.3 | 0.3 | 0.3 | 0.3 | 0.3 | 0.3 | 0.3 | 0.3 | 0.3 |
| | YI of 2mm plate | - | 1.0 | 0.9 | 0.9 | 0.9 | 0.9 | 0.9 | 0.9 | 0.9 | 0.9 | 0.9 | 0.9 | 0.9 | 0.9 | 0.9 | 0.9 |
| | YI of 300 mm long optical path test piece | - | 33 | 30 | 28 | 27 | 28 | 28 | 28 | 28 | 28 | 28 | 23 | 24 | 25 | 31 | 24 |
| | Weather resistance test (color difference ΔE after 1000 h of Xe irradiation) | - | 0.3 | 0.4 | 0.4 | 0.4 | 0.4 | 0.3 | 0.2 | 0.3 | 0.3 | 0.3 | 2.3 | 2.3 | 3.4 | 2.2 | 0.7 |
| Evaluation of plate-shaped injection molded products | Weather resistance | - | ○ | ○ | ○ | ○ | ○ | ○ | ○ | ○ | ○ | ○ | ○ | ○ | △ | ○ | ○ |
| | Heat resistance | - | ○ | ○ | ○ | ○ | ○ | ○ | ○ | ○ | ○ | ○ | ○ | ○ | ○ | ○ | ○ |
| | Scratch resistance | - | ○ | ○ | ○ | ○ | ○ | ○ | ○ | ○ | ○ | ○ | ○ | ○ | ○ | ○ | ○ |
| | Molding Cycleability | - | ○ | ○ | ○ | ○ | ○ | ○ | ○ | ○ | ○ | ○ | ○ | ○ | ○ | ○ | ○ |
| | Formability (flowability)-1 | - | ○ | ○ | ○ | ○ | ○ | ○ | ○ | ○ | ○ | ○ | ○ | ○ | ○ | ○ | ○ |
| | Formability (flowability)-2 | MPa | 56 | 55 | 55 | 55 | 55 | 56 | 56 | 56 | 56 | 56 | 54 | 54 | 55 | 54 | 55 |
| | Formability (water absorption) | - | ○ | ○ | ○ | ○ | ○ | ○ | ○ | ○ | ○ | ○ | ○ | ○ | ○ | ○ | ○ |
| | Mold stain | - | ○ | ○ | ○ | ○ | ○ | ○ | ○ | ○ | ○ | ○ | ○ | ○ | ○ | ○ | ○ |
| | Transparency | - | ○ | ○ | ○ | ○ | ○ | ○ | ○ | ○ | ○ | ○ | ○ | ○ | ○ | ○ | ○ |
| | Surface Appearance | - | ○ | ○ | ○ | ○ | ○ | ○ | ○ | ○ | ○ | ○ | ○ | ○ | ○ | ○ | ○ |
| | Strength | - | ○ | ○ | ○ | ○ | ○ | ○ | ○ | ○ | ○ | ○ | ○ | ○ | ○ | ○ | ○ |

[Table 9-2]

| Table 9-2 | | | Ex. 61 | Ex. 62 | Ex. 63. | Ex. 64. | Ex. 65. | Ex. 66. | Ex. 67. | Ex. 68. | Ex. 69. | Ex. 70 | Ex. 71. | Ex. 72. | Ex. 73. | Ex. 74. | Ex. 75. |
|---|---|---|---|---|---|---|---|---|---|---|---|---|---|---|---|---|---|
| Type of each resin | Styrene-based resin (A) | - | a-1 | a-1 | a-1 | a-1 | a-1 | a-1 | a-1 | a-1 | a-1 | a-1 | a-1 | a-1 | a-1 | a-1 | a-1 |
| | (Meth)acrylic resin (B) | - | b-1 | b-1 | b-1 | b-1 | b-1 | b-1 | b-1 | - | - | - | - | - | - | - | - |
| | Light Stabilizer (C) | - | - | - | - | - | - | - | - | - | - | - | - | - | - | - | - |
| | UV absorber (D-1) | - | d-9 | d-9 | d-9 | d-9 | d-9 | d-9 | d-10 | d-1 | d-3 | d-5 | d-7 | d-8 | d-9 | d-10 | d-9 |
| | UV absorber (D-2) | - | - | - | - | d-3 | d-5 | d-7 | d-5 | - | - | - | - | - | - | - | - |
| | Internal Lubricant (F1) | - | - | - | - | - | - | - | - | - | - | - | - | - | - | - | - |
| | External lubricant (F2) | - | f-5 | f-5 | f-5 | f-5 | f-5 | f-5 | f-5 | f-5 | f-5 | f-5 | f-5 | f-5 | f-5 | f-5 | f-5 |
| | Type of cross-linked material (G) | - | - | - | - | - | - | - | - | - | - | - | - | - | - | - | - |
| | Type of antioxidant (H-1) | - | h-3 | h-1 | h-2 | h-1 | h-1 | h-1 | h-1 | h-1 | h-1 | h-1 | h-1 | h-1 | h-1 | h-1 | h-1 |
| | Antioxidant (H-2) | - | h-4 | h-5 | h-9 | h-4 | h-4 | h-4 | h-4 | h-4 | h-4 | h-4 | h-4 | h-4 | h-4 | h-4 | h-4 |
| Formulation | Styrene-based resin (A) | pt by mass | 70 | 70 | 70 | 70 | 70 | 70 | 70 | 100 | 100 | 100 | 100 | 100 | 100 | 100 | 100 |
| | (Meth)acrylic resin (B) | pt by mass | 30 | 30 | 30 | 30 | 30 | 30 | 30 | 0 | 0 | 0 | 0 | 0 | 0 | 0 | 0 |
| | Light stabilizer (C) | pt by mass | 0 | 0 | 0 | 0 | 0 | 0 | 0 | 0 | 0 | 0 | 0 | 0 | 0 | 0 | 0 |
| | UV absorber (D-1) | pt by mass | 0.2 | 0.2 | 0.2 | 0.1 | 0.1 | 0.1 | 0.1 | 0.2 | 0.2 | 0.2 | 0.2 | 0.2 | 0.2 | 0.2 | 0.05 |
| | UV absorber (D-2) | pt by mass | 0 | 0 | 0 | 0.1 | 0.1 | 0.1 | 0.1 | 0 | 0 | 0 | 0 | 0 | 0 | 0 | 0 |
| | Fine Oxocor 180 (E-1) | pt by mass | 0.11 | 0.11 | 0.11 | 0.11 | 0.11 | 0.11 | 0.11 | 0.11 | 0.11 | 0.11 | 0.11 | 0.11 | 0.11 | 0.11 | 0.11 |
| | Stearyl alcohol (E-2) | pt by mass | 0.13 | 0.13 | 0.13 | 0.13 | 0.13 | 0.13 | 0.13 | 0.13 | 0.13 | 0.13 | 0.13 | 0.13 | 0.13 | 0.13 | 0.13 |
| | Emulgen 109P (E-3) | pt by mass | 0 | 0 | 0 | 0 | 0 | 0 | 0 | 0 | 0 | 0 | 0 | 0 | 0 | 0 | 0 |
| | Internal lubricant (F1) | pt by mass | 0 | 0 | 0 | 0 | 0 | 0 | 0 | 0 | 0 | 0 | 0 | 0 | 0 | 0 | 0 |
| | External lubricant (F2) | pt by mass | 0.01 | 0.01 | 0.01 | 0.01 | 0.01 | 0.01 | 0.01 | 0.01 | 0.01 | 0.01 | 0.01 | 0.01 | 0.01 | 0.01 | 0.01 |
| | Cross-linked body (G) | pt by mass | 0 | 0 | 0 | 0 | 0 | 0 | 0 | 0 | 0 | 0 | 0 | 0 | 0 | 0 | 0 |
| | Antioxidant (H-1) | pt by mass | 0.05 | 0.05 | 0.05 | 0 | 0 | 0 | 0 | 0.05 | 0.05 | 0.05 | 0.05 | 0.05 | 0.05 | 0.05 | 0.05 |
| | Antioxidant (H-2) | pt by mass | 0.1 | 0.1 | 0.1 | 0 | 0 | 0 | 0 | 0.1 | 0.1 | 0.1 | 0.1 | 0.1 | 0.1 | 0.1 | 0.1 |
| Monomer composition in resin composition | Styrene monomer unit | mass% | 58.4 | 58.4 | 58.4 | 58.5 | 58.5 | 58.5 | 58.5 | 83.5 | 83.5 | 83.5 | 83.5 | 83.5 | 83.5 | 83.5 | 83.6 |
| | Methacrylic acid monomer unit | mass% | 7.7 | 7.7 | 7.7 | 7.7 | 7.7 | 7.7 | 7.7 | 10.9 | 10.9 | 10.9 | 10.9 | 10.9 | 10.9 | 10.9 | 11.0 |
| | Methyl methacrylate monomer unit | mass% | 32.7 | 32.7 | 32.7 | 32.8 | 32.8 | 32.8 | 32.8 | 5.0 | 5.0 | 5.0 | 5.0 | 5.0 | 5.0 | 5.0 | 5.0 |
| | Methyl acrylate monomer unit | mass% | 0.6 | 0.6 | 0.6 | 0.6 | 0.6 | 0.6 | 0.6 | 0.0 | 0.0 | 0.0 | 0.0 | 0.0 | 0.0 | 0.0 | 0.0 |
| | (n-butyl) acrylate monomer unit | mass% | 0 | 0 | 0 | 0 | 0 | 0 | 0 | 0 | 0 | 0 | 0 | 0 | 0 | 0 | 0 |
| | Total (meth)acrylic acid ester monomer units | mass% | 33.3 | 33.3 | 33.3 | 33.3 | 33.3 | 33.3 | 33.3 | 5.0 | 5.0 | 5.0 | 5.0 | 5.0 | 5.0 | 5.0 | 5.0 |
| | Total unsaturated carboxylic acid monomer | mass% | 41.0 | 41.0 | 41.0 | 41.0 | 41.0 | 41.0 | 41.0 | 15.9 | 15.9 | 15.9 | 15.9 | 15.9 | 15.9 | 15.9 | 15.9 |
| Monomer composition | Styrene monomer unit | mass% | 58.8 | 58.8 | 58.8 | 58.8 | 58.8 | 58.8 | 58.8 | 84 | 84 | 84 | 84 | 84 | 84 | 84 | 84 |
| | Methacrylic acid monomer unit | mass% | 7.7 | 7.7 | 7.7 | 7.7 | 7.7 | 7.7 | 7.7 | 11 | 11 | 11 | 11 | 11 | 11 | 11 | 11 |
| | Methyl methacrylate monomer unit | mass% | 32.9 | 32.9 | 32.9 | 32.9 | 32.9 | 32.9 | 32.9 | 5 | 5 | 5 | 5 | 5 | 5 | 5 | 5 |
| | Methyl acrylate monomer unit | mass% | 0.6 | 0.6 | 0.6 | 0.6 | 0.6 | 0.6 | 0.6 | 0 | 0 | 0 | 0 | 0 | 0 | 0 | 0 |
| | (n-butyl) acrylate monomer unit | mass% | 0 | 0 | 0 | 0 | 0 | 0 | 0 | 0 | 0 | 0 | 0 | 0 | 0 | 0 | 0 |
| | Total (meth)acrylic acid ester monomer units | mass% | 33.5 | 33.5 | 33.5 | 33.5 | 33.5 | 33.5 | 33.5 | 5 | 5 | 5 | 5 | 5 | 5 | 5 | 5 |
| | Total unsaturated carboxylic acid monomer | mass% | 41.2 | 41.2 | 41.2 | 41.2 | 41.2 | 41.2 | 41.2 | 16 | 16 | 16 | 16 | 16 | 16 | 16 | 16 |
| Properties of composition | Number-average molecular weight (Mn) | x10,000 | 6.4 | 6.4 | 6.4 | 6.4 | 6.4 | 6.4 | 6.4 | 7.4 | 7.4 | 7.4 | 7.4 | 7.4 | 7.4 | 7.4 | 7.5 |
| | Weight-average molecular weight (Mw) | x10,000 | 16.5 | 16.5 | 16.5 | 16.5 | 16.5 | 16.5 | 16.5 | 19.4 | 19.4 | 19.4 | 19.4 | 19.4 | 19.4 | 19.4 | 19.5 |
| | Z-average molecular weight (Mz) | x10,000 | 29.5 | 29.5 | 29.5 | 29.5 | 29.5 | 29.5 | 29.5 | 39.3 | 39.3 | 39.3 | 39.3 | 39.3 | 39.3 | 39.3 | 39.3 |
| | Mw/Mn | - | 2.6 | 2.6 | 2.6 | 2.6 | 2.6 | 2.6 | 2.6 | 2.6 | 2.6 | 2.6 | 2.6 | 2.6 | 2.6 | 2.6 | 2.6 |
| | Mz/Mw | - | 1.8 | 1.8 | 1.8 | 1.8 | 1.8 | 1.8 | 1.8 | 2.0 | 1.8 | 1.8 | 1.8 | 1.8 | 1.8 | 1.8 | 1.8 |
| | Melt mass flow rate | g/10min | 0.5 | 0.5 | 0.5 | 0.5 | 0.5 | 0.5 | 0.5 | 0.8 | 0.8 | 0.7 | 0.7 | 0.8 | 0.8 | 0.8 | 0.8 |
| | Vicat softening temperature | ℃ | 118 | 118 | 118 | 118 | 118 | 118 | 118 | 124 | 124 | 124 | 124 | 124 | 124 | 124 | 124 |
| | Oil resistance | - | ◎ | ◎ | ◎ | ◎ | ◎ | ◎ | ◎ | △ | △ | △ | △ | △ | △ | △ | △ |
| | Surface hardness | - | 2H | 2H | 2H | 2H | 2H | 2H | 2H | H | H | H | H | H | H | H | H |
| | Plane impact strength | kg.cm | 12 | 12 | 12 | 12 | 12 | 12 | 12 | 7 | 7 | 7 | 7 | 7 | 7 | 7 | 7 |
| | Total light transmittance of 2mm plate | % | 91 | 91 | 91 | 91 | 91 | 91 | 91 | 91 | 91 | 91 | 91 | 91 | 91 | 91 | 91 |
| | Haze of 2mm plate | % | 0.3 | 0.3 | 0.3 | 0.3 | 0.3 | 0.3 | 0.3 | 0.3 | 0.3 | 0.3 | 0.3 | 0.3 | 0.3 | 0.3 | 0.3 |
| | YI of 2mm plate | - | 0.9 | 0.9 | 0.9 | 0.9 | 0.9 | 0.9 | 0.9 | 1.0 | 1.0 | 0.9 | 0.9 | 0.9 | 0.9 | 0.9 | 0.9 |
| | YI of 300 mm long optical path test piece | - | 25 | 26 | 30 | 29 | 27 | 28 | 28 | 37 | 34 | 30 | 29 | 26 | 25 | 28 | 23 |
| | Weather resistance test (color difference ΔE after 1000 h of Xe irradiation) | - | 0.6 | 0.7 | 0.7 | 0.6 | 0.5 | 0.5 | 0.5 | 3.1 | 1.1 | 3.3 | 1.5 | 0.9 | 0.8 | 1.1 | 1.6 |
| Evaluation of plate-shaped injection molded products | Weather resistance | - | ○ | ○ | ○ | ○ | ○ | ○ | ○ | △ | ○ | △ | ○ | ○ | ○ | ○ | ○ |
| | Heat resistance | - | ○ | ○ | ○ | ○ | ○ | ○ | ○ | ◎ | ◎ | ◎ | ◎ | ◎ | ◎ | ◎ | ◎ |
| | Scratch resistance | - | ○ | ○ | ○ | ○ | ○ | ○ | ○ | ○ | ○ | ○ | ○ | ○ | ○ | ○ | ○ |
| | Molding Cycleability | - | ○ | ○ | ○ | ○ | ○ | ○ | ○ | ○ | ○ | ○ | ○ | ○ | ○ | ○ | ○ |
| | Formability (flowability)-1 | - | ○ | ○ | ○ | ○ | ○ | ○ | ○ | ○ | ○ | ○ | ○ | ○ | ○ | ○ | ○ |
| | Formability (flowability)-2 | MPa | 55 | 55 | 55 | 55 | 55 | 55 | 55 | 47 | 47 | 47 | 47 | 47 | 46 | 46 | 47 |
| | Formability (water absorption) | - | ○ | ○ | ○ | ○ | ○ | ○ | ○ | ◎ | ◎ | ◎ | ◎ | ◎ | ◎ | ◎ | ◎ |
| | Mold stain | - | ○ | ○ | ○ | ○ | ○ | ○ | ○ | ○ | ○ | ○ | ○ | ○ | ○ | ○ | ○ |
| | Transparency | - | ○ | ○ | ○ | ○ | ○ | ○ | ○ | ○ | ○ | ○ | ○ | ○ | ○ | ○ | ○ |
| | Surface Appearance | - | ○ | ○ | ○ | ○ | ○ | ○ | ○ | ○ | ○ | ○ | ○ | ○ | ○ | ○ | ○ |
| | Strength | - | ○ | ○ | ○ | ○ | ○ | ○ | ○ | △ | △ | △ | △ | △ | △ | △ | △ |

[Table 9-3]

| Table 9-3 | | | Ex. 76. | Ex. 77. | Ex. 78. | Ex. 79. | Ex. 80 | Ex. 81 | Ex. 82 | Ex. 83. | Ex. 84. | Ex. 85. | Ex. 86. | Ex. 87. | Ex. 88. | Ex. 89. | Ex. 90. |
|---|---|---|---|---|---|---|---|---|---|---|---|---|---|---|---|---|---|
| Type of each resin | Styrene-based resin (A) | - | a-1 | a-1 | a-1 | a-1 | a-1 | a-1 | a-1 | a-1 | a-1 | a-1 | a-1 | a-1 | a-5 | a-6 | a-7 |
| | (Meth)acrylic resin (B) | - | - | - | - | - | - | - | - | - | - | - | - | - | - | - | - |
| | Light Stabilizer (C) | - | - | - | - | - | - | - | - | - | - | - | - | - | - | - | - |
| | UV absorber (D-1) | - | d-9 | d-10 | d-1 | d-5 | d-3 | d-3 | d-9 | d-9 | d-9 | d-9 | d-9 | d-9 | d-9 | d-9 | d-9 |
| | UV absorber (D-2) | - | - | - | - | - | - | - | - | - | - | - | - | - | - | - | - |
| | Internal Lubricant (F1) | - | - | - | - | - | - | - | - | - | - | - | f-4 | - | - | - | - |
| | External lubricant (F2) | - | f-5 | f-5 | f-5 | f-5 | f-5 | f-5 | f-5 | f-5 | f-5 | f-5 | f-5 | f-5 | f-5 | f-5 | f-5 |
| | Type of cross-linked material (G) | - | - | - | - | - | - | - | - | - | - | - | - | - | - | - | - |
| | Type of antioxidant (H-1) | - | - | - | - | - | - | - | h-1 | h-2 | h-3 | h-4 | h-1 | h-1 | h-1 | h-1 | h-1 |
| | Antioxidant (H-2) | - | - | - | - | - | - | - | h-5 | h-4 | h-4 | h-9 | h-4 | h-4 | h-4 | h-4 | h-4 |
| Formulation | Styrene-based resin (A) | pt by mass | 100 | 100 | 100 | 100 | 100 | 100 | 100 | 100 | 100 | 100 | 100 | 100 | 100 | 100 | 100 |
| | (Meth)acrylic resin (B) | pt by mass | 0 | 0 | 0 | 0 | 0 | 0 | 0 | 0 | 0 | 0 | 0 | 0 | 0 | 0 | 0 |
| | Light stabilizer (C) | pt by mass | 0 | 0 | 0 | 0 | 0 | 0 | 0 | 0 | 0 | 0 | 0 | 0 | 0 | 0 | 0 |
| | UV absorber (D-1) | pt by mass | 0.2 | 0.2 | 0.2 | 0.2 | 0.2 | 0.2 | 0.2 | 0.2 | 0.2 | 0.2 | 0.2 | 0.2 | 0.2 | 0.2 | 0.2 |
| | UV absorber (D-2) | pt by mass | 0 | 0 | 0 | 0 | 0 | 0 | 0 | 0 | 0 | 0 | 0 | 0 | 0 | 0 | 0 |
| | Fine Oxocor 180 (E-1) | pt by mass | 0.11 | 0.11 | 0.11 | 0.11 | 0.11 | 0.11 | 0.11 | 0.11 | 0.11 | 0.11 | 0.11 | 0.11 | 0.11 | 0.11 | 0.11 |
| | Stearyl alcohol (E-2) | pt by mass | 0.13 | 0.13 | 0.13 | 0.13 | 0.13 | 0.13 | 0.13 | 0.13 | 0.13 | 0.13 | 0 | 0.13 | 0.13 | 0.13 | 0.13 |
| | Emulgen 109P (E-3) | pt by mass | 0 | 0 | 0 | 0 | 0 | 0 | 0 | 0 | 0 | 0 | 0 | 0.15 | 0 | 0 | 0 |
| | Internal lubricant (F1) | pt by mass | 0 | 0 | 0 | 0 | 0 | 0 | 0 | 0 | 0 | 0 | 0.1 | 0 | 0 | 0 | 0 |
| | External lubricant (F2) | pt by mass | 0.01 | 0.01 | 0.01 | 0.01 | 0.01 | 0.01 | 0.01 | 0.01 | 0.01 | 0.01 | 0.01 | 0.01 | 0.01 | 0.01 | 0.01 |
| | Cross-linked body (G) | pt by mass | 0 | 0 | 0 | 0 | 0 | 0 | 0 | 0 | 0 | 0 | 0 | 0 | 0 | 0 | 0 |
| | Antioxidant (H-1) | pt by mass | 0 | 0 | 0 | 0 | 0 | 0 | 0.05 | 0.05 | 0.05 | 0.05 | 0.05 | 0.05 | 0.05 | 0.05 | 0.05 |
| | Antioxidant (H-2) | pt by mass | 0 | 0 | 0 | 0 | 0 | 0 | 0.1 | 0.1 | 0.1 | 0.1 | 0.1 | 0.1 | 0.1 | 0.1 | 0.1 |
| Monomer composition in resin composition | Styrene monomer unit | mass% | 83.6 | 83.6 | 83.6 | 83.6 | 83.6 | 83.6 | 83.5 | 83.5 | 83.5 | 83.5 | 83.5 | 83.4 | 83.5 | 83.5 | 78.5 |
| | Methacrylic acid monomer unit | mass% | 11.0 | 11.0 | 11.0 | 11.0 | 11.0 | 11.0 | 10.9 | 10.9 | 10.9 | 10.9 | 10.9 | 10.9 | 10.9 | 10.9 | 15.9 |
| | Methyl methacrylate monomer unit | mass% | 5.0 | 5.0 | 5.0 | 5.0 | 5.0 | 5.0 | 5.0 | 5.0 | 5.0 | 5.0 | 5.0 | 5.0 | 5.0 | 5.0 | 5.0 |
| | Methyl acrylate monomer unit | mass% | 0.0 | 0.0 | 0.0 | 0.0 | 0.0 | 0.0 | 0.0 | 0.0 | 0.0 | 0.0 | 0.0 | 0.0 | 0.0 | 0.0 | 0.0 |
| | (n-butyl) acrylate monomer unit | mass% | 0 | 0 | 0 | 0 | 0 | 0 | 0 | 0 | 0 | 0 | 0 | 0 | 0 | 0 | 0 |
| | Total (meth)acrylic acid ester monomer units | mass% | 5.0 | 5.0 | 5.0 | 5.0 | 5.0 | 5.0 | 5.0 | 5.0 | 5.0 | 5.0 | 5.0 | 5.0 | 5.0 | 5.0 | 5.0 |
| | Total unsaturated carboxylic acid monomer | mass% | 15.9 | 15.9 | 15.9 | 15.9 | 15.9 | 15.9 | 15.9 | 15.9 | 15.9 | 15.9 | 15.9 | 15.9 | 15.9 | 15.9 | 20.9 |
| Monomer composition | Styrene monomer unit | mass% | 84 | 84 | 84 | 84 | 84 | 84 | 84 | 84 | 84 | 84 | 84 | 84 | 84 | 84 | 79 |
| | Methacrylic acid monomer unit | mass% | 11 | 11 | 11 | 11 | 11 | 11 | 11 | 11 | 11 | 11 | 11 | 11 | 11 | 11 | 16 |
| | Methyl methacrylate monomer unit | mass% | 5 | 5 | 5 | 5 | 5 | 5 | 5 | 5 | 5 | 5 | 5 | 5 | 5 | 5 | 5 |
| | Methyl acrylate monomer unit | mass% | 0 | 0 | 0 | 0 | 0 | 0 | 0 | 0 | 0 | 0 | 0 | 0 | 0 | 0 | 0 |
| | (n-butyl) acrylate monomer unit | mass% | 0 | 0 | 0 | 0 | 0 | 0 | 0 | 0 | 0 | 0 | 0 | 0 | 0 | 0 | 0 |
| | Total (meth)acrylic acid ester monomer units | mass% | 5 | 5 | 5 | 5 | 5 | 5 | 5 | 5 | 5 | 5 | 5 | 5 | 5 | 5 | 5 |
| | Total unsaturated carboxylic acid monomer | mass% | 16 | 16 | 16 | 16 | 16 | 16 | 16 | 16 | 16 | 16 | 16 | 16 | 16 | 16 | 21 |
| Properties of composition | Number-average molecular weight (Mn) | x10,000 | 7.4 | 7.4 | 7.2 | 7.4 | 7.5 | 7.4 | 7.2 | 7.4 | 7.7 | 7.4 | 7.4 | 7.4 | 9.2 | 5.4 | 7.3 |
| | Weight-average molecular weight (Mw) | x10,000 | 19.4 | 19.4 | 19.3 | 19.4 | 19.3 | 19.4 | 19.1 | 19.4 | 19.5 | 19.4 | 19.4 | 19.4 | 21.8 | 15.2 | 19.1 |
| | Z-average molecular weight (Mz) | x10,000 | 39.3 | 39.3 | 39.1 | 39.3 | 39 | 39.3 | 39.1 | 39.3 | 39.3 | 39.3 | 39.3 | 39.3 | 42.1 | 27.8 | 38.7 |
| | Mw/Mn | - | 2.6 | 2.6 | 2.6 | 2.6 | 2.6 | 2.6 | 2.6 | 2.6 | 2.6 | 2.6 | 2.6 | 2.6 | 2.4 | 2.8 | 2.6 |
| | Mz/Mw | - | 1.8 | 1.8 | 1.8 | 1.8 | 1.8 | 1.8 | 1.8 | 1.8 | 1.8 | 1.8 | 1.8 | 1.8 | 1.9 | 1.8 | 2.0 |
| | Melt mass flow rate | g/10min | 0.7 | 0.7 | 0.7 | 0.7 | 0.7 | 0.7 | 0.8 | 0.8 | 0.8 | 0.8 | 0.8 | 0.7 | 0.3 | 1.8 | 0.2 |
| | Vicat softening temperature | ℃ | 124 | 124 | 124 | 124 | 124 | 124 | 124 | 124 | 124 | 124 | 124 | 124 | 124 | 123 | 131 |
| | Oil resistance | - | △ | △ | △ | △ | △ | △ | △ | △ | △ | △ | △ | △ | △ | △ | △ |
| | Surface hardness | - | H | H | H | H | H | H | H | H | H | H | H | H | H | H | H |
| | Plane impact strength | kg·cm | 7 | 7 | 7 | 7 | 7 | 7 | 7 | 7 | 7 | 7 | 7 | 7 | 8 | 3 | 4 |
| | Total light transmittance of 2mm plate | % | 91 | 91 | 91 | 91 | 91 | 91 | 91 | 91 | 91 | 91 | 91 | 91 | 91 | 91 | 91 |
| | Haze of 2mm plate | % | 0.3 | 0.3 | 0.3 | 0.3 | 0.3 | 0.3 | 0.3 | 0.3 | 0.3 | 0.3 | 0.3 | 0.3 | 0.3 | 0.3 | 0.3 |
| | YI of 2mm plate | - | 0.9 | 0.9 | 0.9 | 0.9 | 0.9 | 0.9 | 0.9 | 0.9 | 0.9 | 0.9 | 0.9 | 0.9 | 0.9 | 0.9 | 1.0 |
| | YI of 300 mm long optical path test piece | - | 24 | 24 | 33 | 25 | 30 | 28 | 25 | 25 | 25 | 26 | 21 | 25 | 25 | 25 | 30 |
| | Weather resistance test (color difference ΔE after 1000 h of Xe irradiation) | - | 2.3 | 2.5 | 3.8 | 3.9 | 2.3 | 2.3 | 0.7 | 0.6 | 0.6 | 0.5 | 0.8 | 0.8 | 0.8 | 0.8 | 0.7 |
| Evaluation of plate-shaped injection molded products | Weather resistance | - | ○ | ○ | △ | △ | ○ | ○ | ○ | ○ | ○ | ○ | ○ | ○ | ○ | ○ | ○ |
| | Heat resistance | - | ◎ | ◎ | ◎ | ◎ | ◎ | ◎ | ◎ | ◎ | ◎ | ◎ | ◎ | ◎ | ◎ | ◎ | ◎ |
| | Scratch resistance | - | ○ | ○ | ○ | ○ | ○ | ○ | ○ | ○ | ○ | ○ | ○ | ○ | ○ | ○ | ○ |
| | Molding Cycleability | - | ○ | ○ | ○ | ○ | ○ | ○ | ○ | ○ | ○ | ○ | ◎ | △ | △ | ○ | △ |
| | Formability (flowability)-1 | - | ○ | ○ | ○ | ○ | ○ | ○ | ○ | ○ | ○ | ○ | ○ | ○ | ○ | ○ | ○ |
| | Formability (flowability)-2 | MPa | 47 | 47 | 47 | 47 | 47 | 47 | 46 | 47 | 47 | 47 | 47 | 48 | 59 | 42 | 62 |
| | Formability (water absorption) | - | ◎ | ◎ | ◎ | ◎ | ◎ | ◎ | ◎ | ◎ | ◎ | ◎ | ◎ | ◎ | ◎ | ◎ | △ |
| | Mold stain | - | ○ | ○ | ○ | ○ | ○ | ○ | ○ | ○ | ○ | ○ | ○ | △ | ○ | ○ | ○ |
| | Transparency | - | ○ | ○ | ○ | ○ | ○ | ○ | ○ | ○ | ○ | ○ | ○ | ○ | ○ | ○ | ○ |
| | Surface Appearance | - | ○ | ○ | ○ | ○ | ○ | ○ | ○ | ○ | ○ | ○ | ○ | ○ | ○ | ○ | ○ |
| | Strength | - | △ | △ | △ | △ | △ | △ | △ | △ | △ | △ | △ | △ | △ | △ | △ |

[Table 10-1]

| Table 10-1 | | | Ex. 91. | Ex. 92 | Ex. 93. | Ex. 94. | Ex. 95. | Ex. 96. | Ex. 97. | Ex. 98 | Ex. 99 | Ex. 100 | Ex. 101 | Ex. 102 | Ex. 103 | Ex. 104 | Ex. 105 |
|---|---|---|---|---|---|---|---|---|---|---|---|---|---|---|---|---|---|
| Type of each resin | Styrene-based resin (A) | - | a-8 | a-9 | a-1 | a-1 | a-1 | a-1 | a-1 | a-1 | a-1 | a-1 | a-1 | a-1 | a-1 | a-1 | a-1 |
| | (Meth)acrylic resin (B) | - | - | - | - | - | - | - | - | - | - | - | b-1 | b-1 | b-1 | b-1 | b-1 |
| | Light Stabilizer (C) | - | - | - | c-1 | c-1 | c-1 | c-1 | c-1 | c-1 | c-1 | c-1 | c-1 | c-1 | c-1 | c-1 | c-1 |
| | UV absorber (D-1) | - | d-9 | d-9 | d-9 | d-1 | d-10 | d-5 | d-3 | d-7 | d-9 | d-9 | d-3 | d-3 | d-1 | d-3 | d-3 |
| | UV absorber (D-2) | - | - | - | - | - | - | - | - | - | - | - | - | - | - | - | - |
| | Internal Lubricant (F1) | - | - | - | - | - | - | - | - | - | - | - | - | - | - | - | - |
| | External lubricant (F2) | - | f-5 | f-5 | f-5 | f-5 | f-5 | f-5 | f-5 | f-5 | f-5 | f-5 | f-5 | f-5 | f-5 | f-5 | f-5 |
| | Type of cross-linked material (G) | - | - | - | - | - | - | - | - | - | - | - | - | - | - | g-1 | g-2 |
| | Type of antioxidant (H-1) | - | h-1 | h-1 | - | - | - | - | - | - | - | h-1 | - | - | - | - | - |
| | Antioxidant (H-2) | - | h-4 | h-4 | - | - | - | - | - | - | - | h-4 | - | - | - | - | - |
| Formulation | Styrene-based resin (A) | pt by mass | 100 | 100 | 100 | 100 | 100 | 100 | 100 | 100 | 100 | 100 | 55 | 30 | 10 | 70 | 70 |
| | (Meth)acrylic resin (B) | pt by mass | 0 | 0 | 0 | 0 | 0 | 0 | 0 | 0 | 0 | 0 | 45 | 70 | 90 | 30 | 30 |
| | Light stabilizer (C) | pt by mass | 0 | 0 | 0.3 | 0.3 | 0.1 | 0.1 | 0.1 | 0.1 | 0.1 | 0.1 | 0.3 | 0.3 | 0.3 | 0.3 | 0.3 |
| | UV absorber (D-1) | pt by mass | 0.2 | 0.2 | 0.2 | 0.2 | 0.05 | 0.05 | 0.05 | 0.05 | 0.05 | 0.05 | 0.2 | 0.2 | 0.2 | 0.2 | 0.2 |
| | UV absorber (D-2) | pt by mass | 0 | 0 | 0 | 0 | 0 | 0 | 0 | 0 | 0 | 0 | 0 | 0 | 0 | 0 | 0 |
| | Fine Oxocor 180 (E-1) | pt by mass | 0.11 | 0.11 | 0.11 | 0.11 | 0.11 | 0.11 | 0.11 | 0.11 | 0.11 | 0.11 | 0.11 | 0.11 | 0.11 | 0.11 | 0.11 |
| | Stearyl alcohol (E-2) | pt by mass | 0.13 | 0.13 | 0.13 | 0.13 | 0.13 | 0.13 | 0.13 | 0.13 | 0.13 | 0.13 | 0.13 | 0.13 | 0.13 | 0.13 | 0.13 |
| | Emulgen 109P (E-3) | pt by mass | 0 | 0 | 0 | 0 | 0 | 0 | 0 | 0 | 0 | 0 | 0 | 0 | 0 | 0 | 0 |
| | Internal lubricant (F1) | pt by mass | 0 | 0 | 0 | 0 | 0 | 0 | 0 | 0 | 0 | 0 | 0 | 0 | 0 | 0 | 0 |
| | External lubricant (F2) | pt by mass | 0.01 | 0.01 | 0.01 | 0.01 | 0.01 | 0.01 | 0.01 | 0.01 | 0.01 | 0.01 | 0.01 | 0.01 | 0.01 | 0.01 | 0.01 |
| | Cross-linked body (G) | pt by mass | 0 | 0 | 0 | 0 | 0 | 0 | 0 | 0 | 0 | 0 | 0 | 0 | 0 | 2 | 2 |
| | Antioxidant (H-1) | pt by mass | 0.05 | 0.05 | 0 | 0 | 0 | 0 | 0 | 0 | 0 | 0.05 | 0 | 0 | 0 | 0 | 0 |
| | Antioxidant (H-2) | pt by mass | 0.1 | 0.1 | 0 | 0 | 0 | 0 | 0 | 0 | 0 | 0.1 | 0 | 0 | 0 | 0 | 0 |
| Monomer composition in resin composition | Styrene monomer unit | mass% | 87.5 | 68.6 | 83.4 | 83.4 | 83.7 | 83.7 | 83.7 | 83.7 | 83.7 | 83.5 | 45.9 | 25.0 | 8.3 | 57.2 | 57.2 |
| | Methacrylic acid monomer unit | mass% | 10.9 | 10.9 | 10.9 | 10.9 | 11.0 | 11.0 | 11.0 | 11.0 | 11.0 | 10.9 | 6.0 | 3.3 | 1.1 | 7.5 | 7.5 |
| | Methyl methacrylate monomer unit | mass% | 1.0 | 19.9 | 5.0 | 5.0 | 5.0 | 5.0 | 5.0 | 5.0 | 5.0 | 5.0 | 46.5 | 69.6 | 88.0 | 32.0 | 32.0 |
| | Methyl acrylate monomer unit | mass% | 0.0 | 0.0 | 0.0 | 0.0 | 0.0 | 0.0 | 0.0 | 0.0 | 0.0 | 0.0 | 0.9 | 1.4 | 1.8 | 0.6 | 0.6 |
| | (n-butyl) acrylate monomer unit | mass% | 0.0 | 0.0 | 0.0 | 0.0 | 0.0 | 0.0 | 0.0 | 0.0 | 0.0 | 0.0 | 0.0 | 0.0 | 0.0 | 0.0 | 0.0 |
| | Total (meth)acrylic acid ester monomer units | mass% | 1.0 | 19.9 | 5.0 | 5.0 | 5.0 | 5.0 | 5.0 | 5.0 | 5.0 | 5.0 | 47.4 | 71.0 | 89.8 | 32.6 | 32.6 |
| | Total unsaturated carboxylic acid monomer | mass% | 11.9 | 30.8 | 15.9 | 15.9 | 15.9 | 15.9 | 15.9 | 15.9 | 15.9 | 15.9 | 53.4 | 74.2 | 90.9 | 40.1 | 40.1 |
| Monomer composition | Styrene monomer unit | mass% | 88 | 69 | 84 | 84 | 84 | 84 | 84 | 84 | 84 | 84 | 46.2 | 25.2 | 8.4 | 58.8 | 58.8 |
| | Methacrylic acid monomer unit | mass% | 11 | 11 | 11 | 11 | 11 | 11 | 11 | 11 | 11 | 11 | 6.05 | 3.3 | 1.1 | 7.7 | 7.7 |
| | Methyl methacrylate monomer unit | mass% | 1 | 20 | 5 | 5 | 5 | 5 | 5 | 5 | 5 | 5 | 46.85 | 70.1 | 88.7 | 32.9 | 32.9 |
| | Methyl acrylate monomer unit | mass% | 0 | 0 | 0 | 0 | 0 | 0 | 0 | 0 | 0 | 0 | 0.9 | 1.4 | 1.8 | 0.6 | 0.6 |
| | (n-butyl) acrylate monomer unit | mass% | 0 | 0 | 0 | 0 | 0 | 0 | 0 | 0 | 0 | 0 | 0 | 0 | 0 | 0 | 0 |
| | Total (meth)acrylic acid ester monomer units | mass% | 1 | 20 | 5 | 5 | 5 | 5 | 5 | 5 | 5 | 5 | 47.75 | 71.5 | 90.5 | 33.5 | 33.5 |
| | Total unsaturated carboxylic acid monomer | mass% | 12 | 31 | 16 | 16 | 16 | 16 | 16 | 16 | 16 | 16 | 53.8 | 74.8 | 91.6 | 41.2 | 41.2 |
| Properties of composition | Number-average molecular weight (Mn) | x10,000 | 7.5 | 6.8 | 7.5 | 7.5 | 7.5 | 7.5 | 7.5 | 7.5 | 7.5 | 7.5 | 6.6 | 6.6 | 5.6 | 6.2 | 6.2 |
| | Weight-average molecular weight (Mw) | x10,000 | 19.6 | 18.8 | 19.4 | 19.4 | 19.4 | 19.4 | 19.4 | 19.4 | 19.4 | 19.4 | 15.2 | 13.2 | 12.2 | 16.2 | 16.2 |
| | Z-average molecular weight (Mz) | x10,000 | 39.9 | 37.7 | 39.1 | 39.1 | 39.1 | 39.1 | 39.1 | 39.1 | 39.1 | 39.1 | 32.4 | 27.4 | 24.4 | 29.3 | 29.3 |
| | Mw/Mn | - | 2.6 | 2.8 | 2.6 | 2.6 | 2.6 | 2.6 | 2.6 | 2.6 | 2.6 | 2.6 | 2.3 | 2.0 | 2.2 | 2.6 | 2.6 |
| | Mz/Mw | - | 2.0 | 2.0 | 2.0 | 2.0 | 2.0 | 2.0 | 2.0 | 2.0 | 2.0 | 2.0 | 2.1 | 2.1 | 2.0 | 1.8 | 1.8 |
| | Melt mass flow rate | g/10min | 0.9 | 0.3 | 0.7 | 0.7 | 0.7 | 0.7 | 0.7 | 0.7 | 0.7 | 0.7 | 0.5 | 0.3 | 0.3 | 0.4 | 0.4 |
| | Vicat softening temperature | ℃ | 122 | 124 | 124 | 124 | 124 | 124 | 124 | 124 | 124 | 123 | 111 | 111 | 107 | 117 | 117 |
| | Oil resistance | - | △ | △ | △ | △ | △ | △ | △ | △ | △ | △ | ◎ | ◎ | ◎ | ◎ | ◎ |
| | Surface hardness | - | F | 2H | H | H | H | H | H | H | H | H | 3H | 3H | 3H | 3H | 3H |
| | Plane impact strength | kg·cm | 6 | 8 | 7 | 7 | 7 | 7 | 7 | 7 | 7 | 7 | 13 | 13 | 13 | 10 | 10 |
| | Total light transmittance of 2mm plate | % | 91 | 91 | 91 | 91 | 91 | 91 | 91 | 91 | 91 | 91 | 91 | 91 | 91 | 79 | 76 |
| | Haze of 2mm plate | % | 0.3 | 0.3 | 0.3 | 0.3 | 0.3 | 0.3 | 0.3 | 0.3 | 0.3 | 0.3 | 0.3 | 0.3 | 0.3 | 45.5 | 46.1 |
| | YI of 2mm plate | - | 0.9 | 0.9 | 0.9 | 0.9 | 0.9 | 0.9 | 0.9 | 0.9 | 0.9 | 0.9 | 0.9 | 0.9 | 0.9 | 3.5 | 3.6 |
| | YI of 300 mm long optical path test piece | - | 26 | 24 | 25 | 35 | 26 | 28 | 30 | 29 | 24 | 25 | 33 | 33 | 34 | 58 | 59 |
| | Weather resistance test (color difference ΔE after 1000 h of Xe irradiation) | - | 1.2 | 0.7 | 0.3 | 0.3 | 0.5 | 1.2 | 0.6 | 0.6 | 0.4 | 0.4 | 0.4 | 0.3 | 0.3 | 0.4 | 0.5 |
| Evaluation of plate-shaped injection molded products | Weather resistance | - | ○ | ○ | ○ | ○ | ○ | ○ | ○ | ○ | ○ | ○ | ○ | ○ | ○ | ○ | ○ |
| | Heat resistance | - | ◎ | ◎ | ◎ | ◎ | ◎ | ◎ | ◎ | ◎ | ◎ | ◎ | ○ | ○ | △ | ○ | ○ |
| | Scratch resistance | - | △ | ○ | ○ | ○ | ○ | ○ | ○ | ○ | ○ | ○ | ○ | ○ | ○ | ○ | ○ |
| | Molding Cycleability | - | ○ | △ | ○ | ○ | ○ | ○ | ○ | ○ | ○ | ○ | △ | △ | △ | △ | △ |
| | Formability (flowability)-1 | - | ○ | ○ | ○ | ○ | ○ | ○ | ○ | ○ | ○ | ○ | ○ | Short | Short | ○ | ○ |
| | Formability (flowability)-2 | MPa | 46 | 64 | 47 | 47 | 47 | 47 | 47 | 47 | 47 | 47 | 62 | 67 | 70 | 62 | 62 |
| | Formability (water absorption) | - | ○ | △ | ◎ | ◎ | ◎ | ◎ | ◎ | ◎ | ◎ | ◎ | △ | △ | × | ○ | ○ |
| | Mold stain | - | ○ | ○ | ○ | ○ | ○ | ○ | ○ | ○ | ○ | ○ | ○ | ○ | ○ | ○ | ○ |
| | Transparency | - | ○ | ○ | ○ | ○ | ○ | ○ | ○ | ○ | ○ | ○ | ○ | ○ | ○ | × | × |
| | Surface Appearance | - | ○ | ○ | ○ | ○ | ○ | ○ | ○ | ○ | ○ | ○ | ○ | ○ | ○ | △ | △ |
| | Strength | - | △ | △ | △ | △ | △ | △ | △ | △ | △ | △ | ○ | ○ | ○ | ○ | ○ |

[Table 10-2]

| Table 10-2 | | | Ex. 106 | Ex. 107. | Ex. 108. | Ex. 109. | Ex. 110. | Ex. 111. | Ex. 112. | Ex. 113. | Ex. 114. | Ex. 115. | Ex. 116. | Ex. 117. | Ex. 118. | Ex. 119. | Ex. 120 |
|---|---|---|---|---|---|---|---|---|---|---|---|---|---|---|---|---|---|
| Type of each resin | Styrene-based resin (A) | - | a-1 | a-1 | a-1 | a-1 | a-1 | a-1 | a-1 | a-10 | a-11 | a-2 | a-2 | a-2 | a-2 | a-1 | a-1 |
| | (Meth)acrylic resin (B) | - | b-1 | b-1 | b-1 | b-8 | b-7 | b-1 | b-1 | b-1 | b-1 | - | - | - | - | - | - |
| | Light Stabilizer (C) | - | c-1 | c-1 | c-1 | c-1 | c-1 | c-1 | c-1 | c-1 | c-1 | - | - | - | - | - | - |
| | UV absorber (D-1) | - | d-3 | d-3 | d-3 | d-3 | d-3 | d-3 | d-3 | d-3 | d-3 | d-9 | d-5 | d-3 | d-10 | d-9 | d-9 |
| | UV absorber (D-2) | - | - | - | - | - | - | - | - | - | - | - | - | - | - | - | - |
| | Internal Lubricant (F1) | - | - | - | - | - | - | - | - | - | - | - | - | - | - | - | - |
| | External lubricant (F2) | - | f-5 | f-5 | f-5 | f-5 | f-5 | f-5 | f-5 | f-5 | f-5 | f-5 | f-5 | f-5 | f-5 | - | - |
| | Type of cross-linked material (G) | - | g-3 | g-5 | g-6 | - | - | - | - | - | - | - | - | - | - | - | - |
| | Type of antioxidant (H-1) | - | - | - | - | - | - | - | - | - | - | h-1 | h-1 | h-1 | h-1 | h-1 | - |
| | Antioxidant (H-2) | - | - | - | - | - | - | - | - | - | - | h-4 | h-4 | h-4 | h-4 | h-4 | - |
| Formulation | Styrene-based resin (A) | pt by mass | 70 | 70 | 70 | 70 | 70 | 90 | 60 | 60 | 95 | 100 | 100 | 100 | 100 | 100 | 100 |
| | (Meth)acrylic resin (B) | pt by mass | 30 | 30 | 30 | 30 | 30 | 10 | 40 | 40 | 5 | 0 | 0 | 0 | 0 | 0 | 0 |
| | Light stabilizer (C) | pt by mass | 0.3 | 0.3 | 0.3 | 0.3 | 0.3 | 0.3 | 0.3 | 0.3 | 0.3 | 0.3 | 0.3 | 0.3 | 0.3 | 0.3 | 0.3 |
| | UV absorber (D-1) | pt by mass | 0.2 | 0.2 | 0.2 | 0.2 | 0.2 | 0.2 | 0.2 | 0.2 | 0.2 | 0.2 | 0.2 | 0.2 | 0.2 | 0.2 | 0.2 |
| | UV absorber (D-2) | pt by mass | 0 | 0 | 0 | 0 | 0 | 0 | 0 | 0 | 0 | 0 | 0 | 0 | 0 | 0 | 0 |
| | Fine Oxocor 180 (E-1) | pt by mass | 0.11 | 0.11 | 0.11 | 0.11 | 0.11 | 0.11 | 0.11 | 0.11 | 0.11 | 0.11 | 0.11 | 0.11 | 0.11 | 0.11 | 0.11 |
| | Stearyl alcohol (E-2) | pt by mass | 0.13 | 0.13 | 0.13 | 0.13 | 0.13 | 0.13 | 0.13 | 0.13 | 0.13 | 0.13 | 0.13 | 0.13 | 0.13 | 0.13 | 0.13 |
| | Emulgen 109P (E-3) | pt by mass | 0 | 0 | 0 | 0 | 0 | 0 | 0 | 0 | 0 | 0 | 0 | 0 | 0 | 0 | 0 |
| | Internal lubricant (F1) | pt by mass | 0 | 0 | 0 | 0 | 0 | 0 | 0 | 0 | 0 | 0 | 0 | 0 | 0 | 0 | 0 |
| | External lubricant (F2) | pt by mass | 0.01 | 0.01 | 0.01 | 0.01 | 0.01 | 0.01 | 0.01 | 0.01 | 0.01 | 0.01 | 0.01 | 0.01 | 0.01 | 0.01 | 0.01 |
| | Cross-linked body (G) | pt by mass | 2 | 2 | 2 | 0 | 0 | 0 | 0 | 0 | 0 | 0 | 0 | 0 | 0 | 0 | 0 |
| | Antioxidant (H-1) | pt by mass | 0 | 0 | 0 | 0 | 0 | 0 | 0 | 0 | 0 | 0.05 | 0.05 | 0.05 | 0.05 | 0.05 | 0 |
| | Antioxidant (H-2) | pt by mass | 0 | 0 | 0 | 0 | 0 | 0 | 0 | 0 | 0 | 0.1 | 0.1 | 0.1 | 0.1 | 0.1 | 0 |
| Monomer composition in resin composition | Styrene monomer unit | mass% | 57.2 | 57.2 | 57.2 | 58.4 | 58.4 | 79.5 | 50.0 | 48.0 | 89.1 | 91.2 | 91.2 | 91.2 | 91.2 | 83.3 | 83.4 |
| | Methacrylic acid monomer unit | mass% | 7.5 | 7.5 | 7.5 | 7.6 | 7.6 | 9.8 | 6.6 | 12.3 | 0.5 | 7.9 | 7.9 | 7.9 | 7.9 | 10.9 | 10.9 |
| | Methyl methacrylate monomer unit | mass% | 32.0 | 32.0 | 32.0 | 27.3 | 27.3 | 9.7 | 41.9 | 38.2 | 9.6 | 0.0 | 0.0 | 0.0 | 0.0 | 5.0 | 5.0 |
| | Methyl acrylate monomer unit | mass% | 0.6 | 0.6 | 0.6 | 0.0 | 0.6 | 0.2 | 0.8 | 0.8 | 0.1 | 0.0 | 0.0 | 0.0 | 0.0 | 0.0 | 0.0 |
| | (n-butyl) acrylate monomer unit | mass% | 0.0 | 0.0 | 0.0 | 6.0 | 5.4 | 0.0 | 0.0 | 0.0 | 0.0 | 0.0 | 0.0 | 0.0 | 0.0 | 0.0 | 0.0 |
| | Total (meth)acrylic acid ester monomer units | mass% | 32.6 | 32.6 | 32.6 | 27.3 | 27.9 | 9.9 | 42.7 | 38.9 | 9.7 | 0.0 | 0.0 | 0.0 | 0.0 | 5.0 | 5.0 |
| | Total unsaturated carboxylic acid monomer | mass% | 40.1 | 40.1 | 40.1 | 34.9 | 35.5 | 19.8 | 49.2 | 51.3 | 10.2 | 7.9 | 7.9 | 7.9 | 7.9 | 15.9 | 15.9 |
| Monomer composition | Styrene monomer unit | mass% | 58.8 | 58.8 | 58.8 | 58.8 | 58.8 | 80.1 | 50.4 | 48.4 | 89.8 | 92 | 92 | 92 | 92 | 84 | 84 |
| | Methacrylic acid monomer unit | mass% | 7.7 | 7.7 | 7.7 | 7.7 | 7.7 | 9.9 | 6.6 | 12.4 | 0.5 | 8 | 8 | 8 | 8 | 11 | 11 |
| | Methyl methacrylate monomer unit | mass% | 32.9 | 32.9 | 32.9 | 27.5 | 27.5 | 9.8 | 42.2 | 38.48 | 9.7 | 0 | 0 | 0 | 0 | 5 | 5 |
| | Methyl acrylate monomer unit | mass% | 0.6 | 0.6 | 0.6 | 0 | 0.6 | 0.2 | 0.8 | 0.76 | 0.1 | 0 | 0 | 0 | 0 | 0 | 0 |
| | (n-butyl) acrylate monomer unit | mass% | 0 | 0 | 0 | 6 | 5.4 | 0 | 0.0 | 0 | 0.0 | 0 | 0 | 0 | 0 | 0 | 0 |
| | Total (meth)acrylic acid ester monomer units | mass% | 33.5 | 33.5 | 33.5 | 33.5 | 33.5 | 10 | 43.0 | 39.24 | 9.8 | 0 | 0 | 0 | 0 | 5 | 5 |
| | Total unsaturated carboxylic acid monomer | mass% | 41.2 | 41.2 | 41.2 | 41.2 | 41.8 | 19.9 | 49.6 | 51.64 | 10.3 | 8 | 8 | 8 | 8 | 16 | 16 |
| Properties of composition | Number-average molecular weight (Mn) | x10,000 | 6.2 | 6.2 | 6.2 | 6.5 | 6.4 | 6.3 | 6.8 | 5.1 | 7.6 | 8.1 | 8.1 | 8.1 | 8.1 | 7.4 | 7.4 |
| | Weight-average molecular weight (Mw) | x10,000 | 16.2 | 16.2 | 16.2 | 16.6 | 16.5 | 16.4 | 15.6 | 14.1 | 21.2 | 18.5 | 18.5 | 18.5 | 18.5 | 19.4 | 19.4 |
| | Z-average molecular weight (Mz) | x10,000 | 29.3 | 29.3 | 29.3 | 29.9 | 29.7 | 29.2 | 33.4 | 24.3 | 40.1 | 31 | 31 | 31 | 31 | 39.3 | 39.3 |
| | Mw/Mn | - | 2.6 | 2.6 | 2.6 | 2.6 | 2.6 | 2.6 | 2.3 | 2.8 | 2.8 | 2.3 | 2.3 | 2.3 | 2.3 | 2.6 | 2.6 |
| | Mz/Mw | - | 1.8 | 1.8 | 1.8 | 1.8 | 1.8 | 1.8 | 2.1 | 1.7 | 1.9 | 1.7 | 1.7 | 1.7 | 1.7 | 1.8 | 1.8 |
| | Melt mass flow rate | g/10min | 0.4 | 0.4 | 0.4 | 1.5 | 1.4 | 0.7 | 0.5 | 0.4 | 1.8 | 1.7 | 1.7 | 1.7 | 1.7 | 0.8 | 0.7 |
| | Vicat softening temperature | ℃ | 117 | 117 | 117 | 104 | 104 | 121 | 111 | 126 | 104 | 117 | 117 | 117 | 117 | 124 | 124 |
| | Oil resistance | - | ◎ | ◎ | ◎ | ◎ | ◎ | △ | ◎ | ◎ | △ | △ | △ | △ | △ | △ | △ |
| | Surface hardness | - | 3H | 3H | 3H | H | H | H | 3H | 3H | F | F | F | F | F | H | H |
| | Plane impact strength | kg·cm | 10 | 14 | 10 | 9 | 9 | 7 | 12 | 11 | 2.3 | 5 | 5 | 5 | 5 | 7 | 7 |
| | Total light transmittance of 2mm plate | % | 75 | 61 | 76 | 91 | 91 | 91 | 91 | 90 | 83 | 91 | 91 | 91 | 91 | 91 | 91 |
| | Haze of 2mm plate | % | 46.2 | 51 | 47.2 | 1 | 1 | 0.9 | 0.3 | 0.4 | 1 | 0.3 | 0.3 | 0.3 | 0.3 | 0.3 | 0.3 |
| | YI of 2mm plate | - | 3.7 | 4.4 | 3.8 | 0.9 | 0.9 | 0.9 | 0.9 | 1.1 | 1.5 | 1.0 | 1.0 | 1.0 | 1.0 | 0.9 | 0.9 |
| | YI of 300 mm long optical path test piece | - | 58 | 62 | 59 | 34 | 33 | 33 | 33 | 38 | 42 | 26 | 28 | 32 | 28 | 25 | 25 |
| | Weather resistance test (color difference ΔE after 1000 h of Xe irradiation) | - | 0.4 | 0.7 | 0.5 | 0.3 | 0.3 | 0.3 | 0.4 | 0.4 | 0.7 | 1.5 | 1.9 | 1.5 | 1.5 | 0.8 | 2.3 |
| Evaluation of plate-shaped injection molded products | Weather resistance | - | ○ | ○ | ○ | ○ | ○ | ○ | ○ | ○ | ○ | ○ | ○ | ○ | ○ | ○ | ○ |
| | Heat resistance | - | ○ | ○ | ○ | △ | △ | ○ | ○ | ○ | △ | ○ | ○ | ○ | ○ | ◎ | ◎ |
| | Scratch resistance | - | ○ | ○ | ○ | △ | △ | ○ | ○ | ○ | △ | △ | △ | △ | △ | ○ | ○ |
| | Molding Cycleability | - | △ | △ | △ | ○ | ○ | ○ | ○ | △ | ○ | ○ | ○ | ○ | ○ | ○ | ○ |
| | Formability (flowability)-1 | - | ○ | ○ | ○ | ○ | ○ | ○ | ○ | Short | ○ | ○ | ○ | ○ | ○ | ○ | ○ |
| | Formability (flowability)-2 | MPa | 62 | 62 | 62 | 53 | 53 | 51 | 60 | 66 | 44 | 45 | 45 | 45 | 45 | 47 | 47 |
| | Formability (water absorption) | - | ○ | ○ | ○ | ○ | ○ | ○ | △ | △ | ◎ | ◎ | ◎ | ◎ | ◎ | ◎ | ◎ |
| | Mold stain | - | ○ | ○ | ○ | ○ | ○ | ○ | ○ | ○ | ○ | ○ | ○ | ○ | ○ | ○ | ○ |
| | Transparency | - | × | × | × | ○ | ○ | ○ | ○ | ○ | ○ | ○ | ○ | ○ | ○ | ○ | ○ |
| | Surface Appearance | - | △ | △ | △ | ○ | ○ | ○ | ○ | ○ | ○ | ○ | ○ | ○ | ○ | ○ | ○ |
| | Strength | - | ○ | ○ | ○ | ○ | ○ | △ | ○ | ○ | △ | △ | △ | △ | △ | △ | △ |

[Table 10-3]

| Table 10-3 | | | Ex. 121. | Ex. 122. | Ex. 123 | Ex. 124 | Ex. 125. | Ex. 126. | Ex. 127. | Ex. 128 | Ex. 129. | Ex. 130. | Ex. 131. | Ex. 132. | Ex. 133. | Ex. 134. | Ex. 135. |
|---|---|---|---|---|---|---|---|---|---|---|---|---|---|---|---|---|---|
| Type of each resin | Styrene-based resin (A) | - | a-1 | a-1 | a-1 | a-1 | a-1 | a-1 | a-12 | a-13 | a-11 | a-1 | a-1 | a-1 | a-1 | a-1 | a-1 |
| | (Meth)acrylic resin (B) | - | - | - | - | - | - | - | - | - | - | - | - | b-5 | - | - | - |
| | Light Stabilizer (C) | - | - | - | - | - | - | - | - | - | - | c-1 | c-1 | c-1 | c-1 | - | - |
| | UV absorber (D-1) | - | d-9 | d-9 | d-9 | d-9 | d-9 | d-9 | d-9 | d-9 | d-9 | d-9 | d-9 | d-3 | d-9 | d-9 | d-3 |
| | UV absorber (D-2) | - | - | - | - | - | - | - | - | - | - | - | - | - | - | - | - |
| | Internal Lubricant (F1) | - | - | - | - | - | - | - | - | - | - | - | - | - | - | - | - |
| | External lubricant (F2) | - | - | - | - | - | - | - | f-5 | f-5 | f-5 | f-5 | f-5 | f-5 | f-5 | f-5 | f-5 |
| | Type of cross-linked material (G) | - | - | - | - | - | - | - | - | - | - | - | - | - | - | - | - |
| | Type of antioxidant (H-1) | - | h-3 | h-3 | h-2 | h-3 | h-3 | h-1 | h-1 | h-1 | h-1 | - | - | - | - | h-1 | h-1 |
| | Antioxidant (H-2) | - | h-4 | h-4 | h-5 | h-9 | h-5 | h-9 | h-4 | h-4 | h-4 | - | - | - | - | h-4 | h-4 |
| Formulation | Styrene-based resin (A) | pt by mass | 100 | 100 | 100 | 100 | 100 | 100 | 100 | 100 | 100 | 100 | 100 | 95 | 100 | 100 | 100 |
| | (Meth)acrylic resin (B) | pt by mass | 0 | 0 | 0 | 0 | 0 | 0 | 0 | 0 | 0 | 0 | 0 | 5 | 0 | 0 | 0 |
| | Light stabilizer (C) | pt by mass | 0.3 | 0.3 | 0.3 | 0.3 | 0.3 | 0.3 | 0 | 0 | 0 | 0.3 | 0.3 | 0.30 | 0.05 | 0 | 0 |
| | UV absorber (D-1) | pt by mass | 0.2 | 0.2 | 0.2 | 0.2 | 0.2 | 0.2 | 0.2 | 0.2 | 0.2 | 0.2 | 0.2 | 0.20 | 0.02 | 0.02 | 0.01 |
| | UV absorber (D-2) | pt by mass | 0 | 0 | 0 | 0 | 0 | 0 | 0 | 0 | 0 | 0 | 0 | 0.00 | 0 | 0 | 0 |
| | Fine Oxocor 180 (E-1) | pt by mass | 0.11 | 0.11 | 0.11 | 0.11 | 0.11 | 0.11 | 0.11 | 0.11 | 0.11 | 0.11 | 0.05 | 0.11 | 0.11 | 0.11 | 0.11 |
| | Stearyl alcohol (E-2) | pt by mass | 0.13 | 0.13 | 0.13 | 0.13 | 0.13 | 0.13 | 0.13 | 0.13 | 0.13 | 0.5 | 0.03 | 0.13 | 0.13 | 0.13 | 0.13 |
| | Emulgen 109P (E-3) | pt by mass | 0 | 0 | 0 | 0 | 0 | 0 | 0 | 0 | 0 | 0 | 0 | 0.00 | 0 | 0 | 0 |
| | Internal lubricant (F1) | pt by mass | 0 | 0 | 0 | 0 | 0 | 0 | 0 | 0 | 0 | 0 | 0 | 0.00 | 0 | 0 | 0 |
| | External lubricant (F2) | pt by mass | 0.01 | 0.01 | 0.01 | 0.01 | 0.01 | 0.01 | 0.01 | 0.01 | 0.01 | 0.01 | 0.01 | 0.01 | 0.01 | 0.01 | 0.01 |
| | Cross-linked body (G) | pt by mass | 0 | 0 | 0 | 0 | 0 | 0 | 0 | 0 | 0 | 0 | 0 | 0.00 | 0 | 0 | 0 |
| | Antioxidant (H-1) | pt by mass | 0.05 | 0.05 | 0.05 | 0.05 | 0.05 | 0.05 | 0.05 | 0.05 | 0.05 | 0 | 0 | 0.00 | 0 | 0.1 | 0.1 |
| | Antioxidant (H-2) | pt by mass | 0.1 | 0.15 | 0.1 | 0.1 | 0.1 | 0.1 | 0.1 | 0.1 | 0.1 | 0 | 0 | 0.00 | 0 | 0.2 | 0.2 |
| Monomer composition in resin composition | Styrene monomer unit | mass% | 83.3 | 83.2 | 83.3 | 83.3 | 83.3 | 83.3 | 85.5 | 88.5 | 93.9 | 83.1 | 83.5 | 79.4 | 83.7 | 83.5 | 83.5 |
| | Methacrylic acid monomer unit | mass% | 10.9 | 10.9 | 10.9 | 10.9 | 10.9 | 10.9 | 8.9 | 10.9 | 0.5 | 10.9 | 10.9 | 10.3 | 11.0 | 10.9 | 10.9 |
| | Methyl methacrylate monomer unit | mass% | 5.0 | 5.0 | 5.0 | 5.0 | 5.0 | 5.0 | 5.0 | 0.0 | 5.0 | 4.9 | 5.0 | 8.8 | 5.0 | 5.0 | 5.0 |
| | Methyl acrylate monomer unit | mass% | 0.0 | 0.0 | 0.0 | 0.0 | 0.0 | 0.0 | 0.0 | 0.0 | 0.0 | 0.0 | 0.0 | 0.0 | 0.0 | 0.0 | 0.0 |
| | (n-butyl) acrylate monomer unit | mass% | 0.0 | 0.0 | 0.0 | 0.0 | 0.0 | 0.0 | 0.0 | 0.0 | 0.0 | 0.0 | 0.0 | 0.7 | 0 | 0 | 0 |
| | Total (meth)acrylic acid ester monomer units | mass% | 5.0 | 5.0 | 5.0 | 5.0 | 5.0 | 5.0 | 5.0 | 0.0 | 5.0 | 4.9 | 5.0 | 9.5 | 5.0 | 5.0 | 5.0 |
| | Total unsaturated carboxylic acid monomer | mass% | 15.9 | 15.8 | 15.9 | 15.9 | 15.9 | 15.9 | 13.9 | 10.9 | 5.5 | 15.8 | 15.9 | 19.9 | 15.9 | 15.9 | 15.9 |
| Monomer composition | Styrene monomer unit | mass% | 84 | 84 | 84 | 84 | 84 | 84 | 86 | 89 | 94.5 | 84 | 84 | 80.0 | 84 | 84 | 84 |
| | Methacrylic acid monomer unit | mass% | 11 | 11 | 11 | 11 | 11 | 11 | 9 | 11 | 0.5 | 11 | 11 | 10.4 | 11 | 11 | 11 |
| | Methyl methacrylate monomer unit | mass% | 5 | 5 | 5 | 5 | 5 | 5 | 5 | 0 | 5 | 5 | 5 | 8.9 | 5 | 5 | 5 |
| | Methyl acrylate monomer unit | mass% | 0 | 0 | 0 | 0 | 0 | 0 | 0 | 0 | 0 | 0 | 0 | 0.0 | 0 | 0 | 0 |
| | (n-butyl) acrylate monomer unit | mass% | 0 | 0 | 0 | 0 | 0 | 0 | 0 | 0 | 0 | 0 | 0 | 0.7 | 0 | 0 | 0 |
| | Total (meth)acrylic acid ester monomer units | mass% | 5 | 5 | 5 | 5 | 5 | 5 | 5 | 0 | 0 | 5 | 5 | 9.7 | 5 | 5 | 5 |
| | Total unsaturated carboxylic acid monomer | mass% | 16 | 16 | 16 | 16 | 16 | 16 | 14 | 11 | 11 | 16 | 16 | 20.0 | 16 | 16 | 16 |
| Properties of composition | Number-average molecular weight (Mn) | x10,000 | 7.4 | 7.4 | 7.4 | 7.4 | 7.4 | 7.4 | 7.8 | 7.5 | 8.1 | 7.5 | 7.5 | 7.6 | 7.5 | 7.4 | 7.4 |
| | Weight-average molecular weight (Mw) | x10,000 | 19.4 | 19.4 | 19.4 | 19.4 | 19.4 | 19.4 | 19.8 | 19.6 | 22.1 | 19.4 | 19.4 | 22.5 | 19.5 | 19.4 | 19.4 |
| | Z-average molecular weight (Mz) | x10,000 | 39.3 | 39.3 | 39.3 | 39.3 | 39.3 | 39.3 | 39.8 | 39.9 | 44.2 | 39.1 | 39.1 | 92.1 | 39.3 | 39.3 | 39.3 |
| | Mw/Mn | - | 2.6 | 2.6 | 2.6 | 2.6 | 2.6 | 2.6 | 2.6 | 2.6 | 2.7 | 2.6 | 2.6 | 3.0 | 2.6 | 2.6 | 2.6 |
| | Mz/Mw | - | 1.8 | 1.8 | 1.8 | 1.8 | 1.8 | 1.8 | 1.8 | 2.0 | 2.0 | 2.0 | 2.0 | 4.1 | 1.8 | 1.8 | 1.8 |
| | Melt mass flow rate | g/10min | 0.8 | 0.8 | 0.8 | 0.8 | 0.8 | 0.8 | 1.1 | 1.0 | 2.3 | 0.9 | 0.7 | 0.3 | 0.8 | 0.8 | 0.8 |
| | Vicat softening temperature | ℃ | 124 | 124 | 124 | 124 | 124 | 124 | 120 | 120 | 105 | 122 | 124 | 118 | 124 | 124 | 124 |
| | Oil resistance | - | △ | △ | △ | △ | △ | △ | △ | △ | △ | △ | △ | ○ | △ | △ | △ |
| | Surface hardness | - | H | H | H | H | H | H | H | F | F | H | H | H | H | H | H |
| | Plane impact strength | kg·cm | 7 | 7 | 7 | 7 | 7 | 7 | 7 | 4 | 5 | 7 | 7 | 12 | 7 | 7 | 7 |
| | Total light transmittance of 2mm plate | % | 91 | 91 | 91 | 91 | 91 | 91 | 91 | 91 | 91 | 91 | 91 | 91 | 91 | 91 | 91 |
| | Haze of 2mm plate | % | 0.3 | 0.3 | 0.3 | 0.3 | 0.3 | 0.3 | 0.3 | 0.3 | 0.3 | 0.3 | 0.3 | 0.3 | 0.3 | 0.3 | 0.3 |
| | YI of 2mm plate | - | 0.9 | 0.9 | 0.9 | 0.9 | 0.9 | 0.9 | 0.9 | 0.9 | 0.9 | 0.9 | 0.9 | 0.9 | 0.9 | 0.9 | 1.0 |
| | YI of 300 mm long optical path test piece | - | 25 | 25 | 24 | 27 | 26 | 27 | 25 | 26 | 26 | 24 | 24 | 33 | 24 | 25 | 27 |
| | Weather resistance test (color difference ΔE after 1000 h of Xe irradiation) | - | 0.8 | 0.7 | 0.7 | 0.5 | 0.7 | 0.5 | 0.8 | 1.3 | 1.3 | 0.4 | 0.4 | 1.1 | 1.7 | 1.1 | 1.3 |
| Evaluation of plate-shaped injection molded products | Weather resistance | - | ○ | ○ | ○ | ○ | ○ | ○ | ○ | ○ | ○ | ○ | ○ | ○ | ○ | ○ | ○ |
| | Heat resistance | - | ◎ | ◎ | ◎ | ◎ | ◎ | ◎ | ○ | ○ | ○ | ◎ | ◎ | ○ | ◎ | ◎ | ◎ |
| | Scratch resistance | - | ○ | ○ | ○ | ○ | ○ | ○ | ○ | △ | △ | ○ | ○ | ○ | ○ | ○ | ○ |
| | Molding Cycleability | - | ○ | ○ | ○ | ○ | ○ | ○ | ○ | ○ | ○ | ○ | △ | △ | ○ | ○ | ○ |
| | Formability (flowability)-1 | - | ○ | ○ | ○ | ○ | ○ | ○ | ○ | ○ | ○ | ○ | ○ | ○ | ○ | ○ | ○ |
| | Formability (flowability)-2 | MPa | 47 | 47 | 47 | 47 | 47 | 47 | 46 | 46 | 43 | 46 | 47 | 65 | 47 | 47 | 47 |
| | Formability (water absorption) | - | ◎ | ◎ | ◎ | ◎ | ◎ | ◎ | ◎ | ○ | ○ | ◎ | ◎ | ○ | ◎ | ◎ | ◎ |
| | Mold stain | - | ○ | ○ | ○ | ○ | ○ | ○ | ○ | ○ | ○ | △ | ○ | ○ | ○ | ○ | ○ |
| | Transparency | - | ○ | ○ | ○ | ○ | ○ | ○ | ○ | ○ | ○ | ○ | ○ | ○ | ○ | ○ | ○ |
| | Surface Appearance | - | ○ | ○ | ○ | ○ | ○ | ○ | ○ | ○ | ○ | ○ | △ | ○ | ○ | ○ | ○ |
| | Strength | - | △ | △ | △ | △ | △ | △ | △ | △ | △ | △ | △ | △ | △ | △ | △ |

## INDUSTRIAL APPLICABILITY

The styrene-based resin composition of the present disclosure can be used for molded articles that exhibit excellent weather resistance, mechanical strength, and oil resistance without incurring a reduction in heat resistance and transparency. The molded articles of the present disclosure can be widely utilized in various applications such as materials for in-vehicle use, packaging materials for food containers, thermal insulation materials for housing, housing materials such as lighting devices, materials for monitors or displays, or for light guide plates or light diffusion plates.

## Claims

1. A styrene-based resin composition comprising:

   10 mass% or more and 100 mass% or less of a styrene-unsaturated carboxylic acid-based resin (A) having styrene-based monomer units (1) and unsaturated carboxylic acid-based monomer units (a1);
   0 mass% or more and 90 mass% or less of a (meth)acrylic resin (B) having unsaturated carboxylic acid-based monomer units (b1); and
   0 to 2.0 mass% of a light stabilizer (C) and 0.001 to 2.0 mass% of an ultraviolet absorber (D) relative to a total amount (100 mass%) of the styrene-based resin composition.

2. The styrene-based resin composition according to claim 1, comprising:

   10 mass% or more and less than 100 mass% of a styrene-unsaturated carboxylic acid-based resin (A) having styrene-based monomer units (1) and unsaturated carboxylic acid-based monomer units (a1);
   more than 0 mass% and 90 mass% or less of a (meth)acrylic resin (B) having unsaturated carboxylic acid-based monomer units (b1);
   0.001 to 2.0 mass% of a light stabilizer (C) and 0.001 to 2.0 mass% of an ultraviolet absorber (D) relative to the total amount (100 mass%) of the styrene-based resin composition.

3. The styrene-based resin composition according to claim 1 or 2, further comprising 0.001 to 1.0 mass% of a monohydric alcohol (E) with a carbon number of 10 or more relative to the total amount (100 mass%) of the styrene-based resin composition.

4. The styrene-based resin composition according to claim 1 or 2, wherein the light stabilizer (C) is a hindered amine-based compound.

5. The styrene-based resin composition according to claim 1 or 2,
   wherein the ultraviolet absorber (D) is one or more selected from the group consisting of compounds represented by the general formula (d) and the general formula (d'):

[Chem. 1]

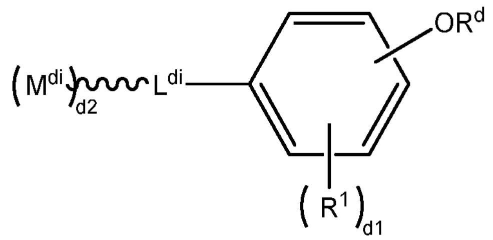

(d)

in the above general formula (d), each $M^{di}$ independently represents a monovalent or higher aromatic group, each $L^{di}$ independently represents a divalent to pentavalent group, $R^d$ represents a hydrogen atom or an alkyl group having 1 to 10 carbon atoms, $R^1$ represents an alkyl group having 1 to 15 carbon atoms or an aralkyl group having 7 to 25 carbon atoms, wherein $-CH_2-$ in the alkyl group may be substituted with -O- or -C(=O)-, and one or more hydrogen atoms on the benzene ring in the aralkyl group may be substituted with a phenolic hydroxyl group, an alkyl group having 1 to 15 carbon atoms, or a condensed ring (including a heterocyclic ring), d1 represents an integer of 0 or more and 4 or less, d2 represents an integer of 1 or more and 4 or less, and a wavy line connecting $M^{di}$ and $L^{di}$ in the above general formula (d) indicates the presence of one or more chemical bonds that are greater than or equal to a single bond,

[Chem. 2]

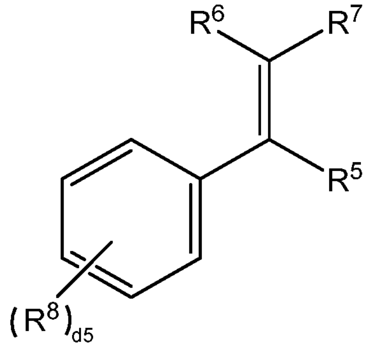

(d')

in the above general formula (d'), $R^5$ to $R^7$ each independently represent a hydrogen atom, halogen atom, hydroxyl group, cyano group, phenyl group, alkyl group having 1 to 15 carbon atoms, alkenyl group having 1 to 15 carbon atoms, or aralkyl group having 7 to 25 carbon atoms, wherein $-CH_2-$ in the alkyl group may be substituted with -O- or -C(=O)-, and one or more hydrogen atoms on the benzene ring of the aralkyl group may be substituted with a phenolic hydroxyl group, an alkyl group having 1 to 15 carbon atoms, or a condensed ring (including a heterocyclic ring (benzotriazole ring, for example)),

each $R^8$ independently represents a halogen atom, hydroxyl group, cyano group, alkyl group having 1 to 15 carbon atoms, alkenyl group having 1 to 15 carbon atoms, or aralkyl group having 7 to 25 carbon atoms, wherein $-CH_2-$ in the alkyl group may be substituted with -O- or -C(=O)-, and one or more hydrogen atoms on the benzene ring of the aralkyl group may be substituted with a phenolic hydroxyl group, an alkyl group having 1 to 15 carbon atoms, or a condensed ring (including a heterocyclic ring (benzotriazole ring, for example)), and
d5 represents an integer of 0 or more and 4 or less, and when d5 is 2 or more, $R^8$ may be the same or different from each other.

**6.** The styrene-based resin composition according to claim 1 or 2, comprising one or more antioxidants selected from the group consisting of phenolic antioxidants, phosphorus-based antioxidants, and phosphorus-based antioxidants having a hindered phenol skeleton each in an amount of 0.001 to 0.5 mass%.

**7.** The styrene-based resin composition according to claim 1 or 2, wherein the styrene-based resin composition has Vicat softening temperature (according to ISO 306) under a load of 5 kg is 105 °C or higher.

**8.** The styrene-based resin composition according to claim 1 or 2, wherein the (meth)acrylic resin (B) is a copolymer containing methacrylic acid ester monomer units and acrylic acid ester monomer units.

**9.** The styrene-based resin composition according to claim 1 or 2, wherein a content of the unsaturated carboxylic acid-based monomer units (a1) relative to a total amount of the styrene-unsaturated carboxylic acid-based resin (A) is 8.5 mass% or more.

**10.** The styrene-based resin composition according to claim 9,

wherein the unsaturated carboxylic acid-based monomer units (a1) are one or more selected from the group consisting of (meth)acrylic acid monomer units (a1-1) and (meth)acrylic acid ester monomer units (a1-2), and the styrene-unsaturated carboxylic acid-based resin (A) is a copolymer (A1) containing the styrene-based monomer units (1), the (meth)acrylic acid monomer units (a1-1), and the (meth)acrylic acid ester monomer units (a1-2).

**11.** The styrene-based resin composition according to claim 1 or 2, wherein the styrene-unsaturated carboxylic acid-based resin (A) has Vicat softening temperature (according to ISO 306) under a load of 5 kg is 120 °C or higher.

**12.** The styrene-based resin composition according to claim 1 or 2, wherein a surface scratch hardness measured according to the pencil hardness method described in JIS K 5600-5-4 with a pencil core tip load of 750 g, a pencil angle of 45 degrees, and a scratch speed of 0.5 to 1.0 mm/sec is H or higher.

**13.** The styrene-based resin composition according to claim 1 or 2, further comprising 0.001 to 2.0 mass% of a mold release agent (F) relative to the total amount (100 mass%) of the styrene-based resin composition.

**14.** An injection molded article produced by injection molding the styrene-based resin composition according to claim 1 or 2.

**15.** A lighting cover comprising the styrene-based resin composition according to claim 1 or 2.

**16.** An injection molded article for in-vehicle use produced by injection molding the styrene-based resin composition according to claim 1 or 2.

**INTERNATIONAL SEARCH REPORT**

International application No. **PCT/JP2023/027872**

**A. CLASSIFICATION OF SUBJECT MATTER**

***C08L 25/08***(2006.01)i; ***B29C 45/00***(2006.01)i; ***C08F 212/08***(2006.01)i; ***C08K 5/05***(2006.01)i; ***C08K 5/3435***(2006.01)i; ***C08K 5/3475***(2006.01)i; ***C08L 33/06***(2006.01)i
FI: C08L25/08; C08K5/05; C08L33/06; C08K5/3475; C08K5/3435; C08F212/08; B29C45/00

According to International Patent Classification (IPC) or to both national classification and IPC

**B. FIELDS SEARCHED**

Minimum documentation searched (classification system followed by classification symbols)

C08L25/08; B29C45/00; C08F212/08; C08K5/05; C08K5/3435; C08K5/3475; C08L33/06

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2022-041091 A (PS JAPAN CORP) 11 March 2022 (2022-03-11) claims, paragraphs [0032]-[0075], [0079]-[0083], [0092], [0099], examples, paragraph [0119] | 1, 4-12, 14-16 |
| Y | | 3, 6, 13, 15, 16 |
| X | WO 2018/008579 A1 (DENKA COMPANY LIMITED) 11 January 2018 (2018-01-11) paragraphs [0008]-[0049], examples, claims | 1, 2, 4, 5, 7, 9-12, 14 |
| Y | | 3, 6, 8, 13, 15, 16 |
| Y | JP 2020-105403 A (PS JAPAN CORP) 09 July 2020 (2020-07-09) paragraphs [0080]-[0085] | 3 |
| Y | WO 2013/151055 A1 (PS JAPAN CORP) 10 October 2013 (2013-10-10) claims | 13 |
| Y | WO 2021/161898 A1 (ASAHI KASEI KABUSHIKI KAISHA) 19 August 2021 (2021-08-19) paragraphs [0011]-[0015] | 8 |

☐ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **25 August 2023** | **05 September 2023** |
| Name and mailing address of the ISA/JP<br>**Japan Patent Office (ISA/JP)**<br>**3-4-3 Kasumigaseki, Chiyoda-ku, Tokyo 100-8915**<br>**Japan** | Authorized officer<br><br>Telephone No. |

Form PCT/ISA/210 (second sheet) (January 2015)

**INTERNATIONAL SEARCH REPORT**
**Information on patent family members**

International application No.
**PCT/JP2023/027872**

| Patent document cited in search report | Publication date (day/month/year) | Patent family member(s) | Publication date (day/month/year) |
|---|---|---|---|
| JP 2022-041091 A | 11 March 2022 | (Family: none) | |
| WO 2018/008579 A1 | 11 January 2018 | CN 109477922 A<br>KR 10-2019-0025933 A<br>TW 201811903 A | |
| JP 2020-105403 A | 09 July 2020 | (Family: none) | |
| WO 2013/151055 A1 | 10 October 2013 | US 2015/0025181 A1<br>claims<br>CN 104245824 A<br>KR 10-2014-0140549 A<br>TW 201343678 A | |
| WO 2021/161898 A1 | 19 August 2021 | US 2023/0053691 A1<br>paragraphs [0035]-[0046]<br>EP 4104998 A1<br>CN 115023465 A<br>KR 10-2022-0123433 A<br>TW 202134310 A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2018145309 A

### Non-patent literature cited in the description

- *CHEMICAL ABSTRACTS*, 52829-07-9
- *CHEMICAL ABSTRACTS*, 705257-84-7
- *CHEMICAL ABSTRACTS*, 64022-61-3
- *CHEMICAL ABSTRACTS*, 41556-26-7
- *CHEMICAL ABSTRACTS*, 101357-37-3
- *CHEMICAL ABSTRACTS*, 85631-01-2
- *CHEMICAL ABSTRACTS*, 22440-22-4
- *CHEMICAL ABSTRACTS*, 3147-75-9
- *CHEMICAL ABSTRACTS*, 371146-04-2
- *CHEMICAL ABSTRACTS*, 222529-65-9
- *CHEMICAL ABSTRACTS*, 1843-05-6
- *CHEMICAL ABSTRACTS*, 147315-50-2
- *CHEMICAL ABSTRACTS*, 178671-58-4
- *CHEMICAL ABSTRACTS*, 7443-25-6
- *CHEMICAL ABSTRACTS*, 6337-43-5
- *CHEMICAL ABSTRACTS*, 23949-66-8